(19) Europäisches Patentamt
European Patent Office
Office européen des brevets

(11) EP 4 429 389 B1

(12) EUROPEAN PATENT SPECIFICATION

(45) Date of publication and mention of the grant of the patent:
**05.08.2026 Bulletin 2026/32**

(21) Application number: **22890371.2**

(22) Date of filing: **02.11.2022**

(51) International Patent Classification (IPC):
***H04W 74/08** (2024.01)* ***H04W 74/00** (2009.01)*
***H04W 72/12** (2023.01)* ***H04W 72/04** (2023.01)*
***H04L 5/00** (2006.01)*

(52) Cooperative Patent Classification (CPC):
**H04B 1/713; H04L 1/0003; H04L 1/1864; H04L 1/1887; H04L 1/1896; H04L 5/0012; H04L 5/0016; H04L 5/0053; H04L 5/0055;**
H04L 5/0023; H04L 5/0048; H04L 27/34; H04W 74/0833; H04W 74/0836

(86) International application number:
**PCT/KR2022/017054**

(87) International publication number:
**WO 2023/080640 (11.05.2023 Gazette 2023/19)**

(54) **METHOD AND DEVICE FOR SUPPORTING INITIAL ACCESS AND PUCCH TRANSMISSION OF REDUCED CAPABILITY USER EQUIPMENT (REDCAP UE) IN WIRELESS COMMUNICATION SYSTEM**

VERFAHREN UND VORRICHTUNG ZUR UNTERSTÜTZUNG VON ERSTZUGRIFF UND PUCCH-ÜBERTRAGUNG VON BENUTZERGERÄTEN MIT REDUZIERTER KAPAZITÄT (REDCAP UE) IN EINEM DRAHTLOSKOMMUNIKATIONSSYSTEM

PROCÉDÉ ET DISPOSITIF POUR PRENDRE EN CHARGE UN ACCÈS INITIAL ET UNE TRANSMISSION DE CANAL PHYSIQUE DE CONTRÔLE MONTANT D’UN ÉQUIPEMENT UTILISATEUR À CAPACITÉ RÉDUITE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.11.2021 KR 20210151761**

(43) Date of publication of application:
**11.09.2024 Bulletin 2024/37**

(73) Proprietor: **LG Electronics Inc.**
**Yeongdeungpo-gu**
**Seoul 07336 (KR)**

(72) Inventors:
- **KIM, Jaehyung**
  **Seoul 06772 (KR)**
- **LEE, Youngdae**
  **Seoul 06772 (KR)**
- **YANG, Suckchel**
  **Seoul 06772 (KR)**
- **HWANG, Seunggye**
  **Seoul 06772 (KR)**

(74) Representative: **Maikowski & Ninnemann Patentanwälte Partnerschaft mbB**
**Postfach 15 09 20**
**10671 Berlin (DE)**

(56) References cited:
**WO-A1-2021/171594**
**US-A1- 2021 258 112**
**US-A1- 2023 010 322**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- MODERATOR (ERICSSON): "FL summary #5 on reduced maximum UE bandwidth for RedCap", vol. RAN WG1, no. e-Meeting; 20211011 - 20211019, 19 October 2021 (2021-10-19), XP052061577, Retrieved from the Internet <URL:https://ftp.3gpp.org/tsg_ran/WG1_RL1/TSGR1_106b-e/Inbox/R1-2110381.zip R1-2110381 FL summary 5 on reduced maximum UE bandwidth for RedCap.docx> [retrieved on 20211019]
- "3rd Generation Partnership Project; Technical Specification Group Radio Access Network; NR; Radio Resource Control (RRC) protocol specification (Release 16)", vol. RAN WG2, no. V16.0.0, 6 April 2020 (2020-04-06), pages 1 - 835, XP051893854, Retrieved from the Internet <URL:ftp://ftp.3gpp.org/Specs/archive/38_series/38.331/38331-g00.zip 38331-g00.docx> [retrieved on 20200406]
- MODERATOR (ERICSSON): "FL summary #5 on reduced maximum UE bandwidth for RedCap", 3GPP DRAFT; R1-2110381, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20211011 - 20211019, 19 October 2021 (2021-10-19), Mobile Competence Centre ; 650, route des Lucioles ; F-06921 Sophia-Antipolis Cedex ; France, XP052061577
- MODERATOR (ZTE CORPORATION): "Feature lead summary #3 on support of Type A PUSCH repetitions for Msg3", 3GPP DRAFT; R1-2108584, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 27 August 2021 (2021-08-27), Mobile Competence Centre ; 650, route des Lucioles ; F-06921 Sophia-Antipolis Cedex ; France , XP052042720
- NTT DOCOMO, INC.: "Discussion on reduced maximum UE bandwidth for RedCap", 3GPP DRAFT; R1-2109685, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20211011 - 20211019, 1 October 2021 (2021-10-01), Mobile Competence Centre ; 650, route des Lucioles ; F-06921 Sophia-Antipolis Cedex ; France, XP052058626
- CATT: "Discussion on Type A PUSCH repetitions for Msg3", 3GPP DRAFT; R1-2109244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20211011 - 20211019, 1 October 2021 (2021-10-01), Mobile Competence Centre ; 650, route des Lucioles ; F-06921 Sophia-Antipolis Cedex ; France, XP052058201
- MEDIATEK INC.: "On reduced maximum bandwidth for RedCap UEs", 3GPP DRAFT; R1-2107496, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 7 August 2021 (2021-08-07), Mobile Competence Centre ; 650, route des Lucioles ; F-06921 Sophia-Antipolis Cedex ; France , XP052038411

## Description

[Technical Field]

The present disclosure relates to a wireless communication system. More particularly, the present disclosure relates to a method and device for supporting an initial access and a physical uplink control channel (PUCCH) transmission of a reduced capability user equipment (REDCAP UE) in a wireless communication system.

[Background Art]

A wireless communication system is a multiple access system that supports communication of multiple users by sharing available system resources (e.g., a bandwidth, transmission power, etc.) among them. Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

As more and more communication devices require larger communication capacity, there is a need for improved mobile broadband communication compared to the existing radio access technology (RAT). Hence, communication systems considering services or user equipments (UEs) sensitive to reliability and latency are being discussed, and the next generation radio access technology considering enhanced mobile broadband communication, massive machine type communication (MTC), ultra-reliable and low latency communication (URLLC), etc. may be called new radio access technology (RAT) or new radio (NR).

Mobile communication systems have been developed to provide a voice service while ensuring the activity of a user. However, the area of the mobile communication systems has extended to a data service in addition to a voice. Due to the current explosive increase in traffic, there is a shortage of resources, and thus users demand a higher speed service. Accordingly, there is a need for a more advanced mobile communication system.

Requirements for the next-generation mobile communication systems need to able to support the accommodation of explosive data traffic, a dramatic increase in data rate per user, the accommodation of a significant increase in the number of connected devices, very low end-to-end latency, and high-energy efficiency. To this end, studies have been conducted on various technologies such as dual connectivity, massive multiple input multiple output (MIMO), in-band full duplex, non-orthogonal multiple access (NOMA), super wideband support, and device networking.

Document R1-211381 contributed to the 3GPP TSG-RAN WG1 Meeting #106bis-e e-Meeting, 11th - 19th October 2021, relates to reduced capability (RedCap) NR devices and refers to, inter alia, the specification 3GPP TS 38.331.

WO 2021/258112 A1 describes a terminal that transmits an uplink control channel corresponding to an antenna beam transmitted from a wireless base station. The terminal assumes a symbol position for repeat transmission of the uplink control channel on the basis of an explicit or implicit notification.

US 2021/258112 A1 describes a terminal including a transmitter that transmits a demodulation reference signal for an uplink control channel; and a receiver that receives: frequency hopping information indicating that frequency hopping of the uplink control channel is enabled, and information regarding a resource block index corresponding to a first frequency hop and a resource block index corresponding to a second frequency hop; and a processor that determines a sequence of the demodulation reference signal based on the frequency hopping information regardless of whether a distance between the first frequency hop and the second frequency hop is zero.

[Disclosure]

[Technical Problem]

Various embodiments of the present disclosure provide a method and device for supporting an initial access and a physical uplink control channel (PUCCH) transmission of a reduced capability user equipment (REDCAP UE) in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

Aspects of the present invention are defined in the independent claims. Further details are provided in the dependent claims.

[Advantageous Effects]

Various embodiments of the present disclosure can provide a method and device for supporting an initial access and a physical uplink control channel (PUCCH) transmission of a reduced capability user equipment (REDCAP UE) in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description.

FIG. 1 illustrates a structure of a wireless communication system according to an embodiment of the present disclosure.
FIG. 2 illustrates an example of a usage scenario of a wireless communication system according to an embodiment of the present disclosure.
FIG. 3 illustrates a structure of a radio frame of a wireless communication system according to an embodiment of the present disclosure.
FIG. 4 illustrates an example of a resource structure of a wireless communication system according to an embodiment of the present disclosure.
FIG. 5 illustrates an example of a signal transmission/reception process of a wireless communication system according to an embodiment of the present disclosure.
FIG. 6 illustrates an example of an SSB structure in a wireless communication system according to an embodiment of the present disclosure.
FIG. 7 illustrates an example of SSB transmission in a wireless communication system according to an embodiment of the present disclosure.
FIG. 8 illustrates an example of a random access procedure in a wireless communication system according to an embodiment of the present disclosure.
FIG. 9 illustrates an example of a 2-step random access procedure in a wireless communication system according to an embodiment of the present disclosure.
FIG. 10 illustrates an example of a procedure of reporting redcap device type information in a wireless communication system according to an embodiment of the present disclosure.
FIG. 11 illustrates an example of Msg3 PUSCH FH when an initial UL bandwidth is greater than a redcap UE bandwidth in a wireless communication system according to an embodiment of the present disclosure.
FIG. 12 illustrates an example where an initial UL bandwidth is greater than a redcap UE bandwidth in a wireless communication system according to an embodiment of the present disclosure.
FIG. 13 illustrates an example where an initial UL bandwidth is greater than a redcap UE bandwidth in a wireless communication system according to an embodiment of the present disclosure.
FIG. 14 illustrates an example where an initial UL bandwidth is greater than a redcap UE bandwidth in a wireless communication system according to an embodiment of the present disclosure.
FIG. 15 illustrates an example where an initial UL bandwidth is greater than a redcap UE bandwidth in a wireless communication system according to an embodiment of the present disclosure.
FIG. 16 illustrates an example where an initial UL bandwidth is greater than a redcap UE bandwidth in a wireless communication system according to various embodiments of the present disclosure.
FIG. 17 illustrates an operation process of a UE in a wireless communication system according to an embodiment of the present disclosure.
FIG. 18 illustrates an operation process of a UE in a wireless communication system according to an embodiment of the present disclosure.
FIG. 19 illustrates an operation method of a base station in a wireless communication system according to an embodiment of the present disclosure.
FIG. 20 illustrates an operation method of a base station in a wireless communication system according to an embodiment of the present disclosure.
FIG. 21 illustrates an example of a communication system applied to various embodiments of the present disclosure.
FIG. 22 illustrates an example of a wireless device applied to various embodiments of the present disclosure.
FIG. 23 illustrates an example of a signal processing circuit for a transmission signal applied to various embodiments of the present disclosure.

FIG. 24 illustrates an example of a wireless device applied to various embodiments of the present disclosure.
FIG. 25 illustrates an example of a mobile device applied to various embodiments of the present disclosure.
FIG. 26 illustrates an example of a vehicle or an autonomous vehicle applied to various embodiments of the present disclosure.
FIG. 27 illustrates an example of a vehicle applied to various embodiments of the present disclosure.
FIG. 28 illustrates an example of a XR device applied to various embodiments of the present disclosure.
FIG. 29 illustrates an example of a robot applied to various embodiments of the present disclosure.
FIG. 30 illustrates an example of an AI device applied to various embodiments of the present disclosure.

[Mode for Invention]

In the present disclosure, "A or B" may mean "only A", "only B" or "both A and B." In other words, in the present disclosure, "A or B" may be interpreted as "A and/or B". For example, in the present disclosure, "A, B or C" may mean "only A", "only B", "only C", or "any combination of A, B and C".
A slash (/) or comma used in the present disclosure may mean "and/or". For example, "A/B" may mean "A and/or B". Hence, "A/B" may mean "only A", "only B", or "both A and B". For example, "A, B, C" may mean "A, B, or C".
In the present disclosure, "at least one of A and B" may mean "only A", "only B", or "both A and B". In addition, in the present disclosure, the expression of "at least one of A or B" or "at least one of A and/or B" may be interpreted in the same meaning as "at least one of A and B".
Further, in the present disclosure, "at least one of A, B, and C" may mean "only A", "only B", "only C" or "any combination of A, B and C." In addition, "at least one of A, B or C" or "at least one of A, B and/or C" may mean "at least one of A, B, and C."
Further, parentheses used in the present disclosure may mean "for example." Specifically, when "control information (PDCCH)" is described, "PDCCH" may be proposed as an example of "control information." In other words, "control information" in the present disclosure is not limited to "PDCCH," and "PDDCH" may be proposed as an example of "control information." In addition, even when "control information (i.e., PDCCH)" is described, "PDCCH" may be proposed as an example of "control information."
In the following description, the expression of 'when, if, in case of' may be replaced with 'based on'.
Technical features described individually in one drawing in the present disclosure may be implemented individually or simultaneously.
Hereinafter, downlink (DL) means communication from a base station (BS) to a user equipment (UE), and uplink (UL) means communication from the UE to the BS. In the downlink, a transmitter may be a part of the BS, and a receiver may be a part of the UE. In the uplink, the transmitter may be a part of the UE, and the receiver may be a part of the BS. In the present disclosure, the BS may be expressed as a first communication device, and the UE may be expressed as a second communication device. The BS may be replaced with terms including a fixed station, a Node B, an evolved-NodeB (eNB), a next generation NodeB (gNB), a base transceiver system (BTS), an access point (AP), a network or a 5G network node, an artificial intelligence (AI) system, a road side unit (RSU), a robot, and the like. The UE may be replaced with terms including a terminal, a mobile station (MS), a user terminal (UT), a mobile subscriber station (MSS), a subscriber station (SS), an advanced mobile station (AMS), a wireless terminal (WT), a machine-type communication (MTC) device, a machine-to-machine (M2M) device, a device-to-device (D2D) device, a vehicle, a robot, an AI module, and the like.

**Related Communication Standard**

The following technology can be used in various radio access systems including code division multiple access (CDMA), frequency division multiple access (FDMA), time division multiple access (TDMA), orthogonal frequency division multiple access (OFDMA), single carrier FDMA (SC-FDMA), and the like. The CDMA can be implemented as radio technology such as universal terrestrial radio access (UTRA) or CDMA2000. The TDMA can be implemented as radio technology such as a global system for mobile communications (GSM)/general packet radio service (GPRS)/enhanced data rates for GSM evolution (EDGE). The OFDMA can be implemented as radio technology such as Institute of Electrical and Electronics Engineers (IEEE) 802.11 (Wi-Fi), IEEE 802.16 (WiMAX), IEEE 802.20, evolved-UTRA (E-UTRA), or the like. The UTRA is a part of universal mobile telecommunications system (UMTS). 3rd generation partnership project (3GPP) long term evolution (LTE) is a part of Evolved UMTS (E-UMTS) using the E-UTRA, and LTE-Advanced (A)/LTE-A pro is an evolved version of the 3GPP LTE. 3GPP NR (new radio or new radio access technology) is an evolved version of the 3GPP LTE/LTE-A/LTE-A pro.
For clarity of the description, the following description will mostly focus on 3GPP communication system (e.g., LTE-A, NR). However, technical features according to an embodiment of the present disclosure will not be limited only to this. LTE means technology after 3GPP TS 36.xxx Release 8. In detail, LTE technology after 3GPP TS 36.xxx Release 10 is referred to as the LTE-A, and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system.

For background arts, terms, abbreviations, etc. used in the present disclosure, reference may be made to the standard document published before the present disclosure is filed. For example, the following document may be referred to.

3GPP LTE

- 3GPP TS 36.211: Physical channels and modulation
- 3GPP TS 36.212: Multiplexing and channel coding
- 3GPP TS 36.213: Physical layer procedures
- 3GPP TS 36.214: Physical layer; Measurements
- 3GPP TS 36.300: Overall description
- 3GPP TS 36.304: User Equipment (UE) procedures in idle mode
- 3GPP TS 36.314: Layer 2 - Measurements
- 3GPP TS 36.321: Medium Access Control (MAC) protocol
- 3GPP TS 36.322: Radio Link Control (RLC) protocol
- 3GPP TS 36.323: Packet Data Convergence Protocol (PDCP)
- 3GPP TS 36.331: Radio Resource Control (RRC) protocol

3GPP NR (e.g., 5G)

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: Overall description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description

**New Radio (NR) (or NR radio access)**

FIG. 1 illustrates a structure of a wireless communication system according to an embodiment of the present disclosure.

Referring to FIG. 1, the next generation-radio access network (NG-RAN) may include next generation-Node B (gNB) and/or eNB which provide/provides user plane and control plane protocol terminations to a UE. FIG. 1 illustrates an example where the NG-RAN includes only the gNB. The gNB and the eNB are interconnected via an Xn interface. The gNB and the eNB are connected to a 5G core network (5GC) via an NG interface. More specifically, the gNB and the eNB are connected to an access and mobility management function (AMF) via an NG-C interface and are connected to a user plane function (UPF) via an NG-U interface.

FIG. 2 illustrates an example of a usage scenario of a wireless communication system according to an embodiment of the present disclosure. Specifically, FIG. 2 illustrates an example of a 5G usage scenario.

The 5G usage scenario illustrated in FIG. 2 is merely an example, and technical features of various embodiments of the present disclosure can also be applied to other 5G usage scenarios that are not illustrated in FIG. 4.

As more and more communication devices require larger communication capacity, there is a need for enhanced mobile broadband communication compared to the existing radio access technology (RAT). Massive machine type communications (MTC) which provide various services anytime and anywhere by connecting many devices and objects are also one of the major issues to be considered in next-generation communications. In addition, a communication system design considering a service/UE sensitive to reliability and latency is also being discussed. As above, the introduction of next generation RAT considering enhanced mobile broadband communication (eMBB), mMTC, ultra-reliable and low latency communication (URLLC), etc. is discussed, and the technology is called NR for convenience in the present disclosure. The NR represents an example of 5G radio access technology (RAT).

A new RAT system including NR uses an OFDM transmission scheme or a transmission scheme similar to this. The new RAT system may follow different OFDM parameters from OFDM parameters of LTE. Alternatively, the new RAT system may follow numerology of existing LTE/LTE-A as it is or have a larger system bandwidth (e.g., 100 MHz). Alternatively, one cell may support a plurality of numerologies. That is, UEs that operate with different numerologies may coexist in one cell.

The numerology corresponds to one subcarrier spacing in a frequency domain. Different numerologies may be defined by scaling a reference subcarrier spacing to an integer N.

As more and more communication devices require larger communication capacity, there is a need for improved mobile broadband communication compared to the existing radio access technology. Further, massive machine type communications (MTC), which provide various services anytime and anywhere by connecting multiple devices and objects, are one of the major issues to be considered in the next generation communication. In addition, a communication system design considering a service/UE sensitive to reliability and latency is being discussed. As above, the introduction of next generation radio access technology considering enhanced mobile broadband communication, massive MTC, ultra-reliable and low latency communication (URLLC), etc. is discussed, and the technology is called NR for convenience in the present disclosure.

Referring to FIG. 2, three major requirement areas of 5G include (1) an enhanced mobile broadband (eMBB) area, (2) a massive machine type communication (mMTC) area and (3) an ultra-reliable and low latency communications (URLLC) area. Some use cases may require multiple areas for optimization, and other use case may focus only on one key performance indicator (KPI). 5G intends to support such diverse use cases in a flexible and reliable way.

eMBB focuses on across-the-board enhancements to the data rate, latency, user density, capacity and coverage of mobile broadband access. eMBB targets throughput of about 10Gbps. eMBB goes far beyond basic mobile Internet access and covers rich interactive work, media and entertainment applications in the cloud or augmented reality. Data will be one of the key drivers for 5G and in new parts of this system we may for the first time see no dedicated voice service in the 5G era. In 5G, voice is expected to be handled as an application, simply using the data connectivity provided by the communication system. The main drivers for the increased traffic volume include an increase in size of content and an increase in the number of applications requiring high data transfer rates. Streaming service (audio and video), interactive video and mobile Internet connectivity will continue to be used more broadly as more devices connect to the Internet. Many of these applications require always-on connectivity to push real time information and notifications to the users. Cloud storage and applications are rapidly increasing for mobile communication platforms. This is applicable for both work and entertainment. Cloud storage is one particular use case driving the growth of uplink data transfer rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality for entertainment and information retrieval. The augmented reality requires very low latencies and significant instant data volumes.

mMTC is designed to enable communication between devices that are low-cost, massive in number and battery-driven, and is intended to support applications such as smart metering, logistics, and field and body sensors. mMTC targets batteries with a lifespan of about 10 years and/or about 1 million devices per km2. mMTC enables to smoothly connect embedded sensors in all fields and is one of the most expected 5G use case. It is predicted that IoT devices will potentially reach 20.4 billion by 2020. Industrial IoT is one area where 5G will play a major role, enabling smart cities, asset tracking, smart utilities, agriculture, and security infrastructure.

URLLC will make it possible for devices and machines to communicate with ultra-reliability, very low latency and high availability, making it ideal for vehicular communication, industrial control, factory automation, remote surgery, smart grids and public safety applications. URLLC targets latency of about 1ms. URLLC includes new services that will transform industries with ultra-reliable/low latency links like remote control of critical infrastructure and an autonomous vehicle. The level of reliability and latency is vital to smart grid control, industrial automation, robotics, and drone control and coordination.

Next, multiple use cases included within the triangle of FIG. 4 are described in more detail.

5G may supplement fiber-to-the-home (FTTH) and cable-based broadband (or DOCSIS) as means for providing a stream evaluated from gigabits per second to several hundreds of megabits per second. Such fast speed may be necessary to deliver TV with resolution of 4K or more (6K, 8K or more) in addition to virtual reality (VR) and augmented reality (AR). VR and AR applications include immersive sports games. A specific application may require special network configuration. For example, in the VR game, in order for game companies to minimize latency, a core server may need to be integrated with an edge network server of a network operator.

The automotive sector is expected to be an important new driver for 5G, along with many use cases for mobile communications for vehicles. For example, entertainment for passengers requires high capacity and high mobile broadband at the same time. The reason for this is that future users will expect to continue their good quality connection independent of their location and speed. Other use cases for the automotive sector are augmented reality dashboards. The augmented reality dashboards display overlay information on top of what a driver is seeing through the front window through the augmented reality dashboards, identifying objects in the dark and telling the driver about the distances and movements of the objects. In the future, wireless modules will enable communication between vehicles, information exchange between vehicles and supporting infrastructure, and information exchange between vehicles and other connected devices (e.g., devices carried by pedestrians). Safety systems guide drivers on alternative courses of action to allow them to drive more safely and lower the risks of accidents. A next phase will be a remotely controlled vehicle or an autonomous vehicle. This requires ultra reliable and very fast communication between different autonomous vehicles and/or between vehicles and infrastructure. In the future, an autonomous vehicle may take care of all driving activity, allowing the driver to rest and concentrate only on traffic anomalies that the vehicle itself cannot identify. The technical requirements for autonomous vehicles require for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost and energy-efficient maintenance of the city or home. A similar setup can be done for each home, where temperature sensors, window and heating controllers, burglar alarms and home appliances are all connected wirelessly. Many of these sensors are typically low data rate, low power and low cost. However, for example, real time HD video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information can include the behaviors of suppliers and consumers, allowing the smart grid to improve the efficiency, reliability, economics and sustainability of the production and distribution of fuels such as electricity in an automated fashion. A smart grid can be seen as another sensor network with low delays.

The health sector has many applications that can benefit from mobile communications. Communications systems enable telemedicine, which provides clinical health care at a distance. It helps eliminate distance barriers and can improve access to medical services that would often not be consistently available in distant rural communities. It is also used to save lives in critical care and emergency situations. Wireless sensor networks based on mobile communication can provide remote monitoring and sensors for parameters such as heart rate and blood pressure.

Wireless and mobile communications are becoming increasingly important for industrial application. Wires are expensive to install and maintain. Therefore, the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Logistics and freight tracking are important use cases for mobile communications that enable the tracking of inventory and packages wherever they are through using location based information systems. The logistics and freight use cases typically require lower data rates but need wide coverage and reliable location information.

## Frame Structure

FIG. 3 illustrates a structure of a radio frame of a wireless communication system according to an embodiment of the present disclosure.

The NR system can support multiple numerologies. The numerology may be defined by subcarrier spacing and cyclic prefix (CP) overhead. In this instance, a plurality of subcarrier spacings may be derived by scaling a basic subcarrier spacing by an integer N (or $\mu$). Further, even if it is assumed that a very low subcarrier spacing is not used at a very high carrier frequency, the numerology used may be selected independently of a frequency band of a cell. In addition, in the NR system, various frame structures according to multiple numerologies may be supported.

An orthogonal frequency division multiplexing (OFDM) numerology and a frame structure that may be considered in the NR system are described below. Multiple OFDM numerologies supported in the NR system may be defined as in Table 1. $\mu$ for a bandwidth part and the cyclic prefix are obtained from RRC parameters provided by the BS.

[Table 1]

| $\mu$ | $\Delta f = 2^{\mu} * 15$ [kHz] | Cyclic prefix(CP) |
|---|---|---|
| 0 | 15 | Normal |

(continued)

| $\mu$ | $\triangle f = 2^{\mu} * 15$ [kHz] | Cyclic prefix(CP) |
|---|---|---|
| 1 | 30 | Normal |
| 2 | 60 | Normal, Extended |
| 3 | 120 | Normal |
| 4 | 240 | Normal |

NR supports multiple numerologies (e.g., subcarrier spacing) for supporting diverse 5G services. For example, if the subcarrier spacing is 15 kHz, the NR supports a wide area in conventional cellular bands; if the subcarrier spacing is 30 kHz/60 kHz, the NR supports a dense-urban, lower latency and wider carrier bandwidth; and if the subcarrier spacing is 60 kHz or higher, the NR supports a bandwidth greater than 24.25 GHz in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding the frame structure in the NR system, the sizes of various fields in the time domain are expressed as multiples of $T_c = 1/(\beta_{max} * N_f)$, which is a basic time unit for NR. Here, $\beta_{max} = 480*103$ Hz, and $N_f = 4096$, which is a value related to the size of a fast Fourier transform (FFT) or an inverse fast Fourier transform (IFFT). $T_c$ has the following relationship with Ts = 1/((15kHz)*2048), which is the base time unit for LTE and the sampling time: $T_s/T_c = 64$. Downlink and uplink transmissions are organized into (radio) frames of $T_f = (\beta_{max} * N_f/100) * T_c = 10$ms duration. Here, each radio frame consists of 10 subframes each having a duration of $T_{sf} = (\beta_{max} * N_f/1000) * T_c = 1$ ms. There may be one set of frames for uplink and one set of frames for downlink. For numerology $\mu$, slots are numbered $n^{\mu}_s \in \{0, ..., N^{slot,\mu}_{subframe-1}\}$ in increasing order within subframes, and are numbered $n\mu s,f \in \{0, ..., N^{slot,\mu}_{subframe-1}\}$ in increasing order within the radio frame. One slot consists of $N^{\mu}_{symb}$ consecutive OFDM symbols, where $N^{\mu}_{symb}$ depends on a cyclic prefix (CP). The start of slot $n^{\mu}_s$ in a subframe is aligned in time with the start of OFDM symbol $n^{\mu}_s * N^{\mu}_{symb}$ in the same subframe. Table 3 shows the number of OFDM symbols ($N^{slot}_{symb}$) per slot, the number of slots ($N^{frame,\mu}_{slot}$) per frame, and the number of slots ($N^{subrrame,\mu}_{slot}$) per subframe in a normal CP, and Table 4 shows the number of OFDM symbols per slot, the number of slots per frame, and the number of slots per subframe in an extended CP.

[Table 3]

| Frequency Range Designation | Corresponding Frequency Range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

FIG. 3 is an example if $\mu$=2 (i.e., subcarrier spacing is 60 kHz). Referring to Table 3, one subframe may include four slots. One subframe = {1,2,4} slots shown in FIG. 3 is an example, and the number of slot(s) that can be included in one subframe is defined as in Table 3 or Table 4.

Also, a mini-slot may include 2, 4, or 7 symbols or may include more or fewer symbols.

**Physical Resource**

In relation to physical resources in the NR system, an antenna port, a resource grid, a resource element, a resource block, a carrier part, etc., may be considered. The physical resources that may be considered in the NR system are described in detail below.

First, in relation to the antenna port, the antenna port is defined so that a channel on which a symbol on the antenna port is conveyed can be inferred from a channel on which another symbol on the same antenna port is conveyed. When large-scale properties of a channel on which a symbol on one antenna port is conveyed can be inferred from a channel on which a symbol on another antenna port is conveyed, the two antenna ports may be regarded as being in a quasi co-located or quasi co-location (QC/QCL) relationship. The large-scale properties may include at least one of delay spread, Doppler spread, frequency shift, average received power, received timing, average delay, or spatial reception (Rx) parameter. The spatial Rx parameter means a spatial (reception) channel characteristic parameter such as angle of arrival.

FIG. 4 illustrates an example of a resource structure of a wireless communication system according to an embodiment of the present disclosure.

Specifically, FIG. 4 illustrates an example of a resource grid in NR.

Referring to FIG. 4, for each subcarrier spacing configuration and carrier, a resource grid of $N^{size,\mu}_{grid}*N^{RB}_{sc}$ subcarriers and $14\cdot 2^{\mu}$ OFDM symbols is defined, where $N^{size,\mu}_{grid}$ is indicated by RRC signaling from the BS. $N^{size,\mu}_{grid}$ may change between uplink and downlink as well as the subcarrier spacing configuration $\mu$. There is one resource grid for the subcarrier spacing configuration $\mu$, the antenna port p, and the transmission direction (uplink or downlink). Each element of the resource grid for the subcarrier spacing configuration $\mu$ and the antenna port p is referred to as an resource element and is uniquely identified by an index pair *(k,l),* where *k* is an index on a frequency domain, and *l* dernotes a location of a symbol within a relative frequency domain to a reference pont. The resource element (*k,l*) for the subcarrier spacing configuration $\mu$ and the antenna port p corresponds to a physical resource and a complex value $a^{(p,\mu)}_{k,l}$. A resource block (RB) is defined as $N^{\mathrm{RB}}_{\mathrm{sc}}=12$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

The point A is obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- for other cases, absoluteFrequencyPointA represents a frequency-location of the point A expressed as in absolute radio-frequency channel number (ARFCN).

The center of subcarrier 0 of common resource block 0 for the subcarrier spacing configuration $\mu$ coincides with the point A serving as a reference point for the resource grid. A relationship between the common resource block number $n^{\mu}_{\mathrm{CRB}}$ in the frequency domain and the resource element (*k, l*) for the subcarrier spacing configuration $\mu$ is given by Equation 1 below.

【Equation 1】

$$n^{\mu}_{\mathrm{CRB}}=\left\lfloor \frac{k}{N^{\mathrm{RB}}_{\mathrm{sc}}} \right\rfloor$$

Here, *k* is defined relative to the point A so that *k* = 0 corresponds to a subcarrier centered around the point A. Physical resource blocks are numbered from 0 to $N^{\mathrm{size}}_{\mathrm{BWP},i}-1$ within a bandwidth part (BWP), where *i* is No. of the BWP. A relationship between the physical resource block $n_{\mathrm{PRB}}$ in BWP *i* and the common resource block $n_{\mathrm{CRB}}$ is given by Equation 2 below.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ is a common resource block where the BWP starts relative to the common resource block 0.

Bandwidth Part (BWP)

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency doamin is a subset of continuous common resource blocks defined for numerology $\mu_i$ within a bandwidth part *i* on the carrier, and one numerology (e.g., subcarrier spacing, CP length, slot/mini-slot duration) may be configured.

The BS may configure one or more BWPs within one carrier configured for the UE. Alternatively, if UEs are concetrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

Signal transmission/reception method in 3GPP

FIG. 5 illustrates an example of a signal transmission/reception process of a wireless communication system according to an embodiment of the present disclosure

Specifically, FIG. 5 illustrates physical channels and an example of a general signal transmission/reception method using the physical channels in a 3GPP system.

Referring to FIG. 5, when a UE is powered on or newly enters a cell, the UE performs an initial cell search operation such as synchronizing with a bae station in S201. To this end, the UE may receive a primary synchronization channel (P-SCH) and a secondary synchronization channel (S-SCH) from the base station to synchronize with the base station and acquire information such as a cell ID. In the LTE system and the NR system, the P-SCH and the S-SCH are called a primary synchronization signal (PSS) and a secondary synchronization signal (SSS), respectively. Thereafter, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search operation may receive a physical downlink control channel (PDCCH) and a physical downlink shared channel (PDSCH) according to information loaded on the PDCCH to acquire more specific system information, in S202.

If the UE first accesses the base station or there is no radio resource for signal transmission, the UE may perform a random access channel (RACH) procedure on the base station in S203 to S206. To this end, the UE may transmit a specific sequence to a preamble via a physical random access channel (PRACH) in S203 and S205, and receive a random access response (RAR) message to the preamble via the PDCCH and a PDSCH corresponding thereto in S204 and S206. In the case of a contention based RACH, a contention resolution procedure may be additionally performed.

Next, the UE performing the above-described procedure may perform PDCCH/PDSCH reception (S207) and physical uplink shared channel (PUSCH)/physical uplink control channel (PUCCH) transmission (S208) as a general uplink/downlink signal transmission process. In particular, the UE may receive downlink control information (DCI) on the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

Table 5 shows DCI formats in the NR system.

[Table 5]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

DCI format 0_0 and DCI format 1_0 are called a fallback DCI format, and there is no carrier indicator field in the DCI format 0_0 and the DCI format 1_0. Since there is no carrier indicator field in the DCI format 0_0 and the DCI format 1_0, a UE that detects the DCI format 0_0 and the DCI format 1_0 in a cell may determine that PUSCH or PDSCH is scheduled in the cell. There is a carrier indicator field in DCI format 0_1 and DCI format 1_1, and the UE may determined that PUSCH or PDSCH is scheduled on a carrier indicated by the carrier indicator field.

Control information that the UE transmits to the BS via uplink or the UE receives from the BS includes downlink/uplink ACK/NACK signal, CSI, and the like. In the 3GPP LTE system, the UE may transmit the above-described CSI via PUSCH and/or PUCCH.

## Initial Access (IA) and Random Access (RA) Procedure

## SSB transmission and related operation

FIG. 6 illustrates an example of an SSB structure in a wireless communication system according to an embodiment of the present disclosure.

Specifically, FIG. 6 illustrates an example of a structure of a synchronization signal block (SSB). A UE can perform cell search, system information acquisition, beam alignment for initial access, DL measurement, etc. based on an SSB. The SSB is interchangeably used with a synchronization signal/physical broadcast channel (SS/PBCH) block.

Referring to FIG. 6, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers. The PBCH is encoded/decoded based on polar codes and is modulated/demodulated based on quadrature phase shift keying (QPSK). The PBCH in the OFDM symbol includes data resource elements (REs) to which complex modulation values of the PBCH are mapped, and demodulation reference signal (DMRS) REs to which DMRSs for the PBCH are mapped. Three DMRS REs are present per resource block of the OFDM symbol, and three data REs are present between the DMRS REs.

## Cell Search

The cell search refers to a process in which a UE acquires time/frequency synchronization of a cell and detects a cell identifier (ID) (e.g., physical layer cell ID (PCI)) of the cell. The PSS is used to detect a cell ID from a cell ID group, and the SSS is used to detect a cell ID group. The PBCH is used to detect an SSB (time) index and a half-frame.

A cell search procedure of the UE may be summarized as in Table 6 below.

[Table 6]

| | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index (Slot and frame boundary detection) |
| 4th Step | PBCH | * Time information (80 ms, System Frame Number (SFN), SSB index, HF)<br>* Remaining Minimum System Information (RMSI) Control resource set (CORESET)/Search space configuration |
| 5th Step | PDCCH and PDSCH | * Cell access information<br>* RACH configuration |

There are 336 cell ID groups, and there are 3 cell IDs per cell ID group. A total of 1008 cell IDs are present. Information on a cell ID group to which a cell ID of a cell belongs is provided/acquired via an SSS of the cell, and information on the cell ID among 336 cell ID groups is provided/acquired via a PSS.

FIG. 7 illustrates an example of SSB transmission in a wireless communication system according to an embodiment of the present disclosure.

The SSB is periodically transmitted in accordance with SSB periodicity. A default SSB periodicity assumed by the UE during initial cell search is defined as 20 ms. After cell access, the SSB periodicity may be set to one of {5 ms, 10 ms, 20 ms, 40 ms, 80 ms, 160 ms} by a network (e.g., BS). A set of SSB bursts is constructed at a start portion of the SSB periodicity. The SSB burst set may be configured by a 5-ms time window (i.e., half-frame), and the SSB may be transmitted up to L times within the SSB burst set. L which is the maximum number of transmissions of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on subcarrier spacing. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE may identify a structure of the SSB burst set based on the detected SSB (time) index, and thus detect a symbol/slot/half-frame boundary. The number of the frame/half-frame to which the detected SSB belongs may be identified using system frame number (SFN) information and half-frame indication information.

Specifically, the UE may acquire a 10-bit SFN for a frame, to which PBCH belongs, from the PBCH. Next, the UE may acquire 1-bit half-frame indication information. For example, if the UE detects a PBCH with a half-frame indication bit set to 0, the UE may determine that the SSB, to which the PBCH belongs, belongs to a first half-frame in the frame, and if the UE detects a PBCH with a half-frame indication bit set to 1, the UE may determine that the SSB, to which the PBCH belongs, belongs to a second half-frame in the frame. Finally, the UE may acquire an SSB index of the SSB, to which the PBCH belongs, based on a DMRS sequence and a PBCH payload carried by the PBCH.

## System Information acquisition

System information (SI) is divided into a master information block (MIB) and a plurality of system information blocks (SIB). The SI other than the MIB may be referred to as remaining minimum system information (RMSI). The following may be referred to for details.

- The MIB includes information/parameters for monitoring PDCCH scheduling PDSCH carrying system information block1 (SIB1) and is transmitted by a BS via PBCH of SSB. For example, a UE may check whether a control resource set (CORESET) for a Type0-PDCCH common search space exists based on the MIB. The Type0-PDCCH common search space is a kind of PDCCH search space and is used to transmit a PDCCH for scheduling an SI message. If there is a Type0-PDCCH common search space, the UE may determine, based on information (e.g., pdcch-ConfigSIB1)) within the MIB, (i) a plurality of contiguous resource blocks and one or more consecutive symbols constituting the CORESET, and (ii) a PDCCH occasion (e.g., time domain location for PDCCH reception). If there is no Type0-PDCCH common search space, pdcch-ConfigSIB 1 provides information for a frequency location where SSB/SIB 1 exists and a frequency range where the SSB/SIB 1 does not exist.

- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB1 may include information which the UE requires to perform an SI request. The SIB1 is transmitted via the PDSCH, the PDCCH for scheduling the SIB1 is transmitted through the Type0-PDCCH common search space, and the SIB1 is transmitted via the PDSCH indicated by the PDCCH.
- The SIBx is included in the SI message and is transmitted via the PDSCH. Each SI message is sent within a time window (i.e., SI-window) which periodically occurs.

## Channel Measurement and Rate-matching

Up to L SSBs may be transmitted within the SSB burst set, and the number/location of SSBs which are actually transmitted may vary per BS/cell. The number/location of the actually transmitted SSBs is used for rate-matching and measurement, and information on the actually transmitted SSBs is provided to the UE.

## Random Access Procedure

A random access procedure of the UE may be summarized as shown in Table 7 and FIG. 8.

[Table 7]

| | Type of Signals | Operations/Information obtained |
|---|---|---|
| 1st step | PRACH preamble in UL | * Initial beam obtainment<br>* Random selection of RA-preamble ID |
| 2nd step | Random Access Response on DL-SCH | * Timing Advanced information<br>* RA-preamble ID<br>* Initial UL grant. Temporary C-RNTI |
| 3rd step | UL transmission on UL-SCH | * RRC connection request<br>* UE identifier |
| 4th step | Contention Resolution on DL | * Temporary C-RNTI on PDCCH for initial access<br>* C-RNTI on PDCCH for UE in RRC_CONNECTED |

The random access procedure is used for various purposes. For example, the random access procedure may be used for network initial access, handover, and UE-triggered UL data transmission. The UE may acquire UL synchronization and UL transmission resources through the random access procedure. The random access procedure is classified into a contention-based random access procedure and a contention-free random access procedure.

FIG. 8 illustrates an example of a random access procedure in a wireless communication system according to an embodiment of the present disclosure.

Specifically, FIG. 8 illustrates an example of a contention-based random access procedure.

First, a UE may transmit a random access preamble on a PRACH as Msg1 of a random access procedure in UL (e.g., see 1701 of FIG. F8).

Random access preamble sequences having different two lengths are supported. Long sequence length 839 is applied to subcarrier spacings of 1.25 kHz and 5 kHz, and short sequence length 139 is applied to subcarrier spacings of 15 kHz, 30 kHz, 60 kHz and 120 kHz.

Multiple preamble formats are defined by one or more RACH OFDM symbols and different cyclic prefixes (and/or guard time). RACH configuration for a cell is included in system information of the cell and is provided to the UE. The RACH configuration includes information on a subcarrier spacing of PRACH, available preambles, preamble format, and the like. The RACH configuration includes association information between SSBs and RACH (time-frequency) resources. The UE transmits a random access preamble in the RACH time-frequency resource associated with the detected or selected SSB.

A threshold of the SSB for the RACH resource association may be set by the network, and an RACH preamble is transmitted or retransmitted based on the SSB in which reference signal received power (RSRP) measured based on the SSB satisfies the threshold. For example, the UE may select one of the SSB(s) satisfying the threshold and may transmit or retransmit the RACH preamble based on the RACH resource associated with the selected SSB.

When a BS receives the random access preamble from the UE, the BS transmits a random access response (RAR) message (Msg2) to the UE (e.g., see 1703 of FIG. 8). A PDCCH that schedules a PDSCH carrying a RAR is CRC masked with a random access (RA) radio network temporary identifier (RNTI) (RA-RNTI) and is transmitted. The UE that detects the PDCCH masked with the RA-RNTI may receive a RAR from the PDSCH scheduled by DCI carried by the PDCCH. The UE checks whether the RAR includes random access response information for the preamble transmitted by the UE, i.e., Msg1. Presence or absence of random access information for the Msg1 transmitted by the UE may be determined based on presence or absence of a random access preamble ID for the preamble transmitted by the UE. If there is no response to the Msg1, the UE may retransmit the RACH preamble less than a predetermined number of times while performing power ramping. The UE calculates PRACH transmission power for preamble retransmission based on most recent pathloss and a power ramping counter.

The random access response information includes timing advance information for UL synchronization, an UL grant, and UE temporary cell RNTI (C-RNTI). If a temporary UE receives random access response information for the UE itself on the PDSCH, the UE can know timing advance information for UL synchronization, an initial UL grant, and UE temporary cell RNTI (C-RNTI). The timing advance information is used to control uplink signal transmission timing. In order to ensure that the PUSCH/PUCCH transmission by the UE is better aligned with subframe timing at a network end, the network (e.g. BS) may measure a time difference between the PUSCH/PUCCH/SRS reception and subframes and send timing advance information based on the time difference. The UE may perform UL transmission as Msg3 of the random access procedure on a physical uplink shared channel based on the random access response information (e.g., see 1705 of FIG. 8). The Msg3 may include an RRC connection request and a UE identifier. The network may transmit Msg4 as a response to the Msg3, and the Msg4 may be handled as a contention resolution message on DL (e.g., see 1707 of FIG. 8). The UE may enter an RRC connected state by receiving the Msg4.

The contention-free random access procedure may be used or performed when the UE handovers to another cell or the BS or when the contention-free random access procedure is requested by a command of the BS. A basic process of the contention-free random access procedure is similar to the contention-based random access procedure. However, unlike the contention-based random access procedure in which the UE randomly selects a preamble to be used among a plurality of random access preambles, in the contention-free random access procedure, a preamble (hereinafter, referred to as a dedicated random access preamble) to be used by the UE is allocated by the BS to the UE. Information on the dedicated random access preamble may be included in an RRC message (e.g., a handover command) or may be provided to the UE via a PDCCH order. When the random access procedure is initiated, the UE transmits the dedicated random access preamble to the BS. When the UE receives the random access procedure from the BS, the random access procedure is completed.

As mentioned above, the UL grant in the RAR schedules PUSCH transmission to the UE. The PUSCH carrying initial UL transmission based on the UL grant in the RAR is also referred to as Msg3 PUSCH. The content of the RAR UL grant starts at MSB and ends at LSB, and is given in Table 8.

[Table 8]

| RAR UL grant field | Number of bits |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

A TPC command is used to determine transmission power of the Msg3 PUSCH and is interpreted, for example, based on Table 9.

[Table 9]

| TPC command | value [dB] |
|---|---|
| 0 | -6 |
| 1 | -4 |

(continued)

| TPC command | value [dB] |
|---|---|
| 2 | -2 |
| 3 | 0 |
| 4 | 2 |
| 5 | 4 |
| 6 | 6 |
| 7 | 8 |

In the contention-free random access procedure, a CSI request field within the RAR UL grant indicates whether the UE includes an aperiodic CSI report in the corresponding PUSCH transmission. A subcarrier spacing for the Msg3 PUSCH transmission is provided by an RRC parameter. The UE will transmit the PRACH and Msg3 PUSCH on the same uplink carrier of the same service serving cell. A UL BWP for Msg3 PUSCH transmission is indicated by SIB1 (SystemInformationBlock1).

FIG. 9 illustrates an example of a 2-step random access procedure in a wireless communication system according to an embodiment of the present disclosure.

Specifically, in FIG. 9, (1) illustrates a contention-based random access (CBRA), and (2) illustrates a contention-free random access (CFRA).

In FIG. 9, message A (MSGA) includes a preamble and a payload (PUSCH payload). The preamble and the payload are multiplexed in a TDM scheme. Message B (MSGB) is a response to the message A (MSGA) and may be transmitted for contention resolution, fallback indication(s) and/or backoff indication.

Technical terms used in the present disclosure

- UE: User Equipment
- SSB: Synchronization Signal Block
- MIB: Master Information Block
- RMSI: Remaining Minimum System Information
- FR1: Frequency domain with frequency range of 1.6 GHz or less (e.g., 450 MHz to 6,000 MHz)
- FR2: Millimeter wave (mmWave) domain with frequency range of 2.24 GHz or higher (e.g., 24,250 MHz to 52,600 MHz)
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). It broadcasts information, etc. necessary for cell access of an NR UE.
- CORESET (COntrol REsource SET): time/frequency resource in which an NR UE tries candidate PDCCH decoding
- CORESET#0: CORESET for Type0-PDCCH CSS set for NR devices (configured at MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated with a separate TB from SIB1 and is transmitted on a separate PDSCH.
- CORESET#0-R: CORESET#0 for reduced capability NR devices
- Type0-PDCCH-R CSS set: a search space set in which an redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): SSB that has been deployed on NR sync raster, but does not include RMSI scheduling information of a corresponding cell for measurement. But, the SSB may include information informing a location of cell defining SSB.
- SCS: subcarrier spacing
- SI-RNTI: System Information Radio-Network Temporary Identifier

- Camp on: "Camp on" is the UE state in which the UE stays on a cell and is ready to initiate a potential dedicated service or to receive an ongoing broadcast service.
- TB: Transport Block
- RSA (Redcap standalone): Cell supporting only RedCap device or service
- SIB1(-R)-PDSCH: PDCCH transmitting SIB1(-R)-DCI
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If separate RO is configured for normal UE 2-step RACH, it is divided into RO-N1 (4-step) and RO-N2 (2-step).
- RO-R: RACH Occasion (RO) separately configured from RO-N for redcap UE 4-step RACH and 2-step RACH (if configured)
- RO-R1, RO-R2: If separate RO is configured for redcap UE 2-step RACH, it is divided into RO-R1 (4-step) and RO-R2 (2-step).
- PG-R: MsgA-Preambles Group for redcap UEs
- RAR: Random Access Response
- RAR window: the time window to monitor RA response(s)
- FH: Frequency Hopping

**Technical problems to be solved by the present disclosure**

In addition to 5G main use cases (mMTC, eMBB, and URLLC), the importance/interest in the use case domain over mMTC and eMBB or mMTC and URLLC has recently increased. Hence, the need for UEs for efficiently supporting these use cases in terms of device cost, power consumption, form factor, etc. has increased. In the present disclosure, a UE for the above purpose is called a (NR) reduced capability UE/device, or a (NR) RedCap UE/device for short. Further, distinguished from the RedCap device, a general NR UE that supports all or one or more of the 5G main use cases is called an NR (normal) UE/device or a non-redcap UE/device. The RedCap UE may be a UE that intentionally reduces some capabilities of 5G key capabilities (peak data rate, user experienced data rate, latency, mobility, connection density, energy efficiency, spectrum efficiency, and area traffic efficiency) defined in IMT-2020, in order to achieve all or part of low device cost/complexity, low power consumption, small form factor, etc.

The 5G use case domain (e.g., see clause B.) over mMTC and eMBB or mMTC and URLLC that are target use cases of the RedCap device is called RedCap use cases for convenience of explanation in the present disclosure. For example, the RedCap use cases may be as follows.

[Redcap use cases]

(1) Connected industries

(1-1) Sensors and actuators are connected to 5G networks and core

(1-2) Include massive IWSN (Industrial Wireless Sensor Network) use cases and requirements

(1-3) Not only URLLC services with very high requirements, but also relatively low-end services with the requirement of small device form factors with a battery life of several years

(1-4) Requirements for these services are higher than LPWA (Low Power Wide Area, i.e. LTE-M/NB-IOT) but lower than URLCC and eMBB

(1-5) Devices in such environment include e.g. pressure sensors, humidity sensors, thermometers, motion sensors, accelerometers, actuators, etc.

(2) Smart city

(2-1) The smart city vertical covers data collection and processing to more efficiently monitor and control city resources, and to provide services to city residents
(2-2) Especially, the deployment of surveillance cameras is an essential part of the smart city but also of factories and industries

(3) Wearables

(3-1) Wearables use case includes smart watches, rings, eHealth related devices, and medical monitoring devices etc.
(3-2) One characteristic for the use case is that the device is small in size

The RedCap use cases cannot be supported by low power wireless area (LPWA) UEs (e.g., LTE-M, NB-IoT, etc.) in terms of bit rate, latency, etc. The NR UE can functionally support the redcap use cases, but the support may be ineffective in terms of the UE manufacturing cost, form factor, battery life, etc. The fact that a redcap UE having characteristics such as low cost, low power, small form factor, etc. supports the use case area in the 5G network can bring an effect of reducing the manufacturing cost and maintenance cost of the UEs.
The RedCap use cases have quite diverse requirements in terms of UE complexity, target bit rate, latency, power consumption, etc. The redcap requirements may be divided into generic requirements applied to all the redcap use cases and use case specific requirements applied only to specific use case(s). For example, some typical generic and use case specific requirements may be as follows.

[Redcap requirements]

(1) Generic requirements

(1-1) Device complexity/cost: Main motivation for the new device type is to lower the device cost and complexity as compared to high-end eMBB and URLLC devices of Rel-15/Rel-16. This is especially the case for industrial sensors.
(1-2) Device size: Requirement for most use cases is that the standard enables a device design with compact form factor
(1-3) Deployment scenarios: System should support all FR1/FR2 bands for FDD and TDD

(2) Use case specific requirements

(2-1) Industrial wireless sensors
(2-1-1) Reference bit rate: < 2 Mbps (potentially UL heavy traffic)
(2-1-2) End-to-end latency: < 100 ms; ~ 5-10 ms for safety related sensors
(2-1-3) Battery: at least few years
(2-1-4) Communication service availability: 99.99%
(2-1-5) Stationary

(2-2) Video Surveillance

(2-2-1) Reference bit rate: < 2-4 Mbps for economic video; ~7.5-25 Mbps for high-end video (UL heavy traffic)
(2-2-2) Latency: < 500 ms
(2-2-3) Reliability: 99%-99.9%.

(2-3) Wearables

(2-3-1) Reference bit rate: 10-50 Mbps in DL and >= 5 Mbps in UL for smart wearable application
(2-3-2) Peak bit rate: 150 Mbps in DL and 50 Mbps in UL
(2-3-3) Battery: multiple days (up to 1-2 weeks)

An example of rough generic and use case specific requirements for the three typical redcap use cases is shown in Table 10.

Table 10 represents (examples of ) rough requirements per use case.

[Table 10]

| Use cases | Complexity | Form factor | Bit rate (Mbps) | Latency (ms) | Mobility | Battery |
|---|---|---|---|---|---|---|
| Industrial Wireless Sensor | Very low | Very small | A few | Tens of / A few 1) | Stationary | Years |
| Video Surveillance | Low2) | Small | A few/ Tens of | Hundreds of | Stationary | |
| Wearables | Low 2) | Small | Tens of | | Mobile | Weeks |
| 1) Safety related sensors<br>2) Low complexity compared to the normal NR device | | | | | | |

The redcap requirements can be satisfied by (combination of) various features provided by the UE and the BS. The followings are examples of features and sub-features supported by the UE/BS for satisfying the redcap requirements.

[Redcap UE features]

(1) Complexity reduction features

(1-1) Reduced number of UE RX/TX antennas
(1-2) UE Bandwidth reduction
(1-3) Half-Duplex-FDD
(1-4) Relaxed UE processing time
(1-5) Relaxed UE processing capability

(2) Power saving

(2-1) Reduced PDCCH monitoring by smaller numbers of BDs and CCE limits
(2-2) Extended DRX for RRC Inactive and/or Idle
(2-3) RRM relaxation for stationary devices

(3) Coverage recovery/enhancement

The redcap use cases may define and support one or multiple UEs. The present disclosure considers all the following two cases.

(1) Case A) Redcap use cases are supported as a single device type case
(2) Case B) Redcap use cases are supported as a multiple-device type case

In the Case A), a RedCap UE may be a UE satisfying all the RedCap requirements, i.e., all the generic requirements and the use case specific requirements, and may also be a UE supporting all the RedCap use cases. In this case, because the UE shall simultaneously satisfy various requirements, there may be a factor increasing the cost due to an increase in the UE complexity, but at the same time, a cost reduction effect can be expected from mass production based on the expansion of use cases. In the Case B), considering that the RedCap use case requirements are considerably diverse, a device type case may be defined and supported per RedCap use case. Even in this case, all the generic requirements may be commonly satisfied. In this instance, respective device types defined per use case are referred to as RedCap device types. The Case B) includes a case where several use cases that are similar in terms of requirements are grouped and supported as a single device type case. The respective RedCap device types may be to support some or a specific combination previously defined among RedCap UE features. As above, when multiple RedCap device types are defined and support the RedCap use cases, there is an advantage that specific RedCap use case(s) can be supported through a RedCap UE that is more optimized in terms of cost, power consumption, etc. For example, an IWS use case may be supported through a dedicated UE that is very small, inexpensive, and power efficient.

The RedCap use cases and the generic requirements or the use case specific requirements mentioned in the present disclosure are not necessarily supported or satisfied, and it may be determined whether to support or satisfy them in a trade-off type considering factors such as cost/complexity, power consumption, and form factor of the RedCap device or the device type.

In the present disclosure, reduced capability may include the meaning of reduced/low complexity/cost, reduced bandwidth, and the like.

## Detailed embodiments of the present disclosure

## Redcap device type classification and method of reporting to BS

FIG. 10 illustrates an example of a procedure of reporting redcap device type information in a wireless communication system according to an embodiment of the present disclosure.

For the Case B), i.e., for the case where RedCap use cases are supported by multiple device types, the following methods may be considered to classify the RedCap device types. The following methods can be applied even to the Case A) in order to distinguish the RedCap device from the NR UE.

In order to support an operation of the RedCap device distinguished from the NR UE, the RedCap device may have to report device type information of the RedCap device to the base station. FIG. 10 illustrates a flow chart of a procedure of reporting device type information to a base station. The reporting procedure may reuse a UE capability transfer procedure defined in TS 38.331, as follows. The base station may acquire RedCap device type information through UE capability information reception and may use UE information acquired upon the scheduling of the corresponding UE.

(1) [BS/network → UE] The BS/network requests UE capability from the UE in RRC_CONNECTED state (SH102)
(2) [UE → BS/network] The UE transmits RedCap device type information to UE capability information (SH104)

## Classification Method 1

Redcap device types may be classified based on one of main requirements. Examples of the main requirements that can be the basis of classification may include supported max data rate (peak bit rate), latency, mobility (stationary/fixed, portable, mobile, etc.), battery lifetime, complexity, coverage, and the like. (Combination of) UE feature(s) that shall be mandatorily supported or can be selectively supported for each classified RedCap device type may be defined in the spec. This may be to reduce overhead separately signaling whether to support features for each device type.

Redcap device type information that is included in UE capability information and is reported by the UE to the BS/network may be transmitted to the BS via, for example, a specific field of UE-NR-Capability information element (IE) (e.g., RedCapDeviceType). For example, when the RedCap device types are classified into RedCap device type 1, 2, ..., a value of RedCapDeviceType field may be expressed by an integer value of 1, 2, ..., or a combination of character and integer such as r1, r2, .... As above, the UE has an advantage of signaling overhead by including the device type and parameters related to it in capability information as one field and reporting it.

[Example] Method of classifying redcap device types based on a supported max data rate and reporting it to the base station

The supported max data rate of the NR UE is determined in TS 38.306 by the following formula.

[Table 11]

| |
|---|
| ------------TS 38.306 spec------------ |
| 4.1 Supported max data rate |
| 4.1.1 General |
| The DL and UL max data rate supported by the UE is calculated by band or band combinations supported by the UE. A UE supporting NR (NR SA, MR-DC) shall support the calculated DL and UL max data rate defined in 4.1.2. |
| 4.1.2 Supported max data rate |
| For NR, the approximate data rate for a given number of aggregated carriers in a band or band combination is computed as follows. |

(continued)

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)$$

wherein

J is the number of aggregated component carriers in a band or band combination

$R_{max}$ = 948/1024

For the j-th CC, $v_{Layers}^{(j)}$ is the maximum number of supported layers given by higher layer parameter *maxNumberMIMO-LayersPDSCH* for downlink and maximum of higher layer parameters *maxNumberMIMO-LayersCB-PUSCH* and *maxNumberMIMO-LayersNonCB-PUSCH* for uplink. $Q_m^{(j)}$ is the maximum supported modulation order given by higher layer parameter *supportedModulationOrderDL* for downlink and higher layer parameter *supportedModulationOrderUL* for uplink.

$f^{(j)}$ is the scaling factor given by higher layer parameter *scalingFactor* and can take the values 1, 0.8, 0.75, and 0.4.

$\mu$ is the numerology (as defined in TS 38.211 [6])

$T_s^{\mu}$ is the average OFDM symbol duration in a subframe for numerology $\mu$, i.e.

$T_s^{\mu} = \frac{10^{-3}}{14 \cdot 2^{\mu}}$. Note that normal cyclic prefix is assumed.

$N_{PRB}^{BW(j),\mu}$ is the maximum RB allocation in bandwidth $BW^{(j)}$ with numerology $\mu$, as defined in 5.3 TS 38.101-1 [2] and 5.3 TS 38.101-2 [3], where $BW^{(j)}$ is the UE supported maximum bandwidth in the given band or band combination.

$OH^{(j)}$ is the overhead and takes the following values

0.14, for frequency range FR1 for DL
0.18, for frequency range FR2 for DL
0.08, for frequency range FR1 for UL
0.10, for frequency range FR2 for UL

NOTE: Only one of the UL or SUL carriers (the one with the higher data rate) is counted for a cell operating SUL.

The approximate maximum data rate can be computed as the maximum of the approximate data rates computed using the above formula for each of the supported band or band combinations.

For single carrier NR SA operation, the UE shall support a data rate for the carrier that is no smaller than the data rate computed using the above formula, with *J* = 1 *CC* and component $v_{Layers}^{(j)} \cdot Q_m^{(j)} \cdot f^{(j)}$ is no smaller than 4.

NOTE: As an example, the value 4 in the component above can correspond to $v_{Layers}^{(j)} = 1$, $Q_m^{(j)} = 4$ and $f^{(j)} = 1$.

For EUTRA in case of MR-DC, the approximate data rate for a given number of aggregated carriers in a band or band combination is computed as follows.

$$\text{Data rate (in Mbps)} = 10^{-3} \cdot \sum_{j=1}^{J} TBS_j$$

wherein

J is the number of aggregated EUTRA component carriers in MR-DC band combination

$TBS_j$ is the total maximum number of DL-SCH transport block bits received or the total maximum number of UL-SCH transport block bits transmitted, within a 1ms TTI for j-th CC, as derived from TS36.213 [19] based on the UE supported maximum MIMO layers for the j-th CC, and based on the maximum modulation order for the j-th CC and number of PRBs based on the bandwidth of the j-th CC according to indicated UE capabilities.

(continued)

| |
|---|
| The approximate maximum data rate can be computed as the maximum of the approximate data rates computed using the above formula for each of the supported band or band combinations.<br>For MR-DC, the approximate maximum data rate is computed as the sum of the approximate maximum data rates from NR and EUTRA. |

In this case, parameters required for the formula computing the supported max data rate that the NR UE shall support are reported by the UE through a request of the base station in RRC_CONNECTED state. The parameters are represented as italic in sub-bullet below. Main bullets mean higher RRC information elements (IE) to which the parameters belong.

(1) FeatureSetDownlink
(1-1) *scalingFactor*
(2) FeatureSetDownlinkPerCC

(2-1) *maxNumberMIMO-LayersPDSCH*
(2-2) *supportedModulationOrderDL*
(2-3) *supportedBandwidthDL*
(2-4) *supportedSubCarrierSpacingDL*

(3) FeatureSetUplink
(3-1) *scalingFactor*
(4) FeatureSetUplinkPerCC

(4-1) *maxNumberMIMO-LayersCB-PUSCH*
(4-2) *maxNumberMIMO-LayersNonCB-PUSCH*
(4-3) *supportedModulationOrderUL*
(4-4) *supportedBandwidthUL*
(4-5) *supportedSubCarrierSpacingUL*

For the RedCap UE, in the method of classifying the RedCap device types based on the supported max data rate, values of the parameters for each device type are predefined in Spec, and the UE may indicate the RedCap device type information and information on the parameters to the base station by setting a value of RedCapDeviceType field of UE-NR-Capability IE to a specific value. Compared to the related operation that the NR UE includes the parameters in UE capability information and transmits it to the base station, the RedCap UE can expect an effect of signaling overhead reduction by reporting the device type and the parameters related to it through one field. The base station can acquire the device type, the supported max data rate, and the values of the parameters mentioned above through value of RedCapDeviceType field and use them in UE scheduling, etc.

## Classification Method 2

Alternatively, RedCap device types may be classified based on (combination of) UR feature(s) that shall be mandatorily supported or can be selectively supported, not based on main requirements. This may be a more appropriate method when features that shall be supported or can be supported for each use case are clear. (Combination of) UR feature(s) that is predefined for each RedCap device type in Spec is referred to as a feature set. A feature set that shall be mandatorily supported for each device type among (combination of) the UR feature(s) is referred to as a mandatory feature set of the corresponding device type or specifying the device type. In this method, definition of the RedCap device type may not be specified in the Spec, and this may mean that the RedCap use cases are supported in separate device types supporting different feature sets.

In the above method, a RedCap UE may report a RedCap device type or use case(s) supported by the RedCap UE to a base station by reporting a predefined feature set to the base station. This can be seen as a method that more closely conforms to the basic philosophy of NR to support various use cases through various optional features without distinguishing a separate UE category. The feature set may be replaced by a combination of capability parameters, i.e., capability parameter set. The feature set may be a mandatory feature set defined in the predefined Spec per RedCap device type. For the above operation, a set of candidate features, i.e., feature pool for RedCap device (type) may be defined or configured in the predefined Spec, and the RedCap device may report a mandatory feature set defined for each type based on a type of the RedCap device to the base station. The UE may additionally report an optional feature set in addition to the mandatory feature set to the base station. The UE may perform an additional operation or a more optimized operation for a specific use case by additionally selecting and reporting the optional feature set. For example, for a device type for a surveillance camera use case, when a wired power supply UE and a battery power supply UE coexist, the mandatory feature set does not include a power saving feature and may designate or include the optional feature. Hence, the UE may report the feature to the base station when selectively supporting the feature based on the detailed device type. The base station may grasp whether to support the feature based on whether the corresponding parameter is present in the feature set reported by the RedCap UE, and may reflect it upon the scheduling of the corresponding UE.

**Classification Method 3**

Alternatively, RedCap device types may be classified based on a combination of capability parameter(s). The combination of capability parameters classifying the RedCap device types may parameters determining the RedCap requirements. Examples of the capability parameters determining the RedCap device type may include bandwidth, modulation order, the number of MIMO layers supported by the UE that determines supported max data rate requirements supported by the UE. Values of the parameters may be a list of actually supportable values, or a maximum value among supported values.

[Example] Capability parameter(s) determining the Redcap device type

(1) Supported Bandwidth (NRB): (max) UE channel bandwidth or (max) UE transmission bandwidth; in units of RB
(2) Supported modulation order (Qm): Qm=2 for QPSK; 4 for 16 QAM; 6 for 64 QAM; etc.
(3) Supported number of MIMO layers (NL): replaceable with number of antennas (Na)

A combination of capability parameters determining the RedCap device type is referred to as a capability parameter set of the corresponding device type. For example, the RedCap device type may be defined by classifying capability parameter set value(s) in ascending order (or descending order) of the supported max data rate. The following example is an example of defining M device types in ascending order of the supported max data rate.

(1) Classification (example) of redcap device types based on capability parameter set value(s):

(1-1) Device Type 1: {NL, NRB, Qm}={1, 25, 2}
(1-2) Device Type 2: {NL, NRB, Qm}={1, 25, 4}, or {1, 52, 2}
(1-3) Device Type 3: {NL, NRB, Qm}={1, 52, 4}, or {1, 106, 2}
(1-4) Device Type 4: {NL, NRB, Qm}={1, 106, 4}, or {2, 106, 2}
(1-5) Device Type 5: {NL, NRB, Qm}={1, 106, 6}
(1-6) Device Type 6: {NL, NRB, Qm}={2, 106, 4}
(1-7) Device Type 7: {NL, NRB, Qm}={2, 106, 6}
...
(1-M) Device Type M: {NL, NRB, Qm}={X, Y, Z}

For example, for NR frequency range 1 (FR1) (i.e., band of 6 GHz or less), NRB value may use one value of values defined in Table 12 below (the maximum number of configurable RBs per UE channel bandwidth). The above example is value based on subcarrier spacing (SCS) = 15 kHz. If the RedCap device supports SCS = 30 kHz, and a cell that the RedCap device intends to access uses SCS = 30 kHz for data transmission, the NRB value based on SCS = 15 kHz in the above example may be replaced by a value corresponding to SCS = 30 kHz with reference to Table below.

[Table 12]

| SCS (kHz) | 5 MHz | 10 MHz | 15 MHz | 20 MHz |
|---|---|---|---|---|
| | $N_{RB}$ | $N_{RB}$ | $N_{RB}$ | $N_{RB}$ |
| 15 | 25 | 52 | 79 | 106 |
| 30 | 11 | 24 | 38 | 51 |

In the device type classification example, the device Type 2/3/4 is a case of defining one device type using multiple capability set values. As above, when the device types are classified based on the supported max data rate, multiple capability parameter set values defining one device type may mean combinations supporting the same or similar supported max data rate.

Supportable device type(s) for each use case using the device type(s) defined in the above example may be defined as follows. Based on the supportable device type(s), the base station may restrict the cell access, or perform subscription based barring.

(1) Supportable device type(s) for each use case (example)

(1-1) IWS: Device types 1, 2
(1-2) Video Surveillance: Device types 2, 3
(1-3) Wearables: Device type: Device types 4, 5, 6, 7

In order to avoid an increase in cost due to market segmentation according to an excessive segmentation of the device type, the number M of device types may be limited. As an extreme example, when M = 1, the RedCap UE is not classified into the multiple device types, and can support all the target use cases in the single device type. As another example, when M=3, device type classification and supportable device types for each use case may be defined as follows.

(1) Device type classification based on capability set value(s) (e.g., when M=3):

(1-1) Device Type 1: {NL, NRB, Qm}={1, 25, 2} (or {1, 25, 4} or {1, 52, 2})
(1-2) Device Type 2: {NL, NRB, Qm}={1, 52, 4} or {1, 106, 2}
(1-3) Device Type 3: {NL, NRB, Qm}={2, 106, 6}

(2) Supportable device type(s) for each use case (e.g., when M=3)

(2-1) IWS: Device types 1
(2-2) Video Surveillance: Device types 3
(2-3) Wearables: Device type: Device types 7

A bandwidth capability of the RedCap UE, i.e., a UE max bandwidth may be determined as a minimum bandwidth satisfying a bit rate required in a target use case. A UE max bandwidth reduction can reduce RF element and/or baseband processing cost and expect an effect of reducing power consumption. The required bit rate may mean a peak rate or the supported max data rate considering that the device manufacturing cost is determined by the peak rate or the supported max data rate not an average bit rate and a reference bit rate. When determining the max bandwidth supporting the required bit rate, a specific value may be assumed for other parameters (e.g., number of antennas (NL), modulation order (Qm), etc.) determining the required bit rate. For example, in the above example, for Device Type 3, a peak rate of about 28 MHz may be supported. In this instance, the required max bandwidth may be 20 MHz (106 RBs) when {NL=1, Qm=2} is assumed, and 10 MHz (52 RBs) when {NL=1, Qm=4} is assumed. Or, the required max bandwidth may be 5 MHz (25 RBs) when {NL=2, Qm=4} is assumed.

(1) Device Type 3: {NL, NRB, Qm}={1, 52, 4}, or {1, 106, 2}

Within the max UE bandwidth of the RedCap UE, a transmission bandwidth may be allocated and transmitted/received by network configuration using RRC signaling, etc.

A UE min bandwidth may be defined as a minimum value among NR UE channel bandwidths (or transmission bandwidths) greater than or equal or an NR SSB bandwidth.

(1) Example) in FR1, UE min bandwidth = 5 MHz for NR SSB with SCS=15kHz; 10 MHz for NR SSB with SCS=30kHz
(2) Example) in FR2, UE min bandwidth = 40 MHz for NR SSB with SCS=120kHz; 80 MHz for NR SSB with SCS=240kHz

This may be to implement low power consumption and at the same time support an access on an NR cell via NR SSB by supporting a service, in which the required bit rate is small, at a minimum bandwidth.

## Classification Method 4

Considering that a bandwidth capability of a RedCap UE is determined by a required bit rate of respective use cases, a RedCap device type may be classified based on a UE bandwidth capability. For example, the UE bandwidth capability determining the RedCap device type may be to represent a supported bandwidth (NRB), i.e., a (max) UE channel bandwidth or a (max) UE transmission bandwidth in units of RB. Alternatively, the UE bandwidth capability may be a minimum UE channel bandwidth or a minimum UE transmission bandwidth. More specifically, the following classification is possible.

(1) Classification Method 4-1) The RedCap device type is classified by a max bandwidth and is used by being configured with an actual data transmission/reception bandwidth (<= max bandwidth)
(2) Classification Method 4-2) The RedCap device type is classified by a min bandwidth and is used by being configured with an actual data transmission/reception bandwidth (>= min bandwidth)
(3) Classification Method 4-3) One or multiple supportable bandwidths (set) are defined for each device type, and is used by being configured with an actual data transmission/reception bandwidth within the corresponding bandwidth (set)

For the classification methods 4-1/4-2/4-3, the max bandwidth may be limited to a value (e.g., 20 MHz) less than an NR bandwidth, and the min bandwidth may be greater than or equal to an SSB bandwidth (e.g., 5MHz for 15kHz SSB).

## Initial access and method of supporting UL frequency hopping of Redcap UE

In an NR cell supporting a redcap UE, i.e., in a cell where a normal UE and the redcap UE coexist or may coexist, it may be preferred that the normal UE and the redcap UE share as many resources as possible in terms of resource efficiency. If available/schedulable resources for the normal UE and available/schedulable resources for the redcap UE are completely separated from each other, resource utilization may be reduced, and scheduling flexibility may be limited from a BS perspective. However, in the following cases, resource sharing between the normal UE and the redcap UE in the random access procedure for cell access may not be efficiently supported by the existing method.

1. If (additional) repetition, etc. for a redcap UE is needed due to a difference in coverage performance between an NR UE and the redcap UE in msg2 (RAR), msg4 or msgB step, a repetition in a RACH procedure of the redcap UE may be applied equally to at least one of, for example, Msg 1 to 4/Msg A and B or may be individually applied to each message by a separate configuration.
2. If an initial UL BWP cannot be configured within a max UE bandwidth of the redcap UE by considering an impact on a legacy NR UE
3. If an impact on the NR UE in the random access procedure is unavoidable due to UE processing time relaxation, etc. of the redcap UE
4. For reasons such as the 1/2/3, if a separate initial UL BWP for the redcap UE is configured and managed

The present disclosure relates to an initial access and PUCCH transmission supporting method of a redcap UE in an NR cell where a normal UE and the redcap UE coexist. The present disclosure is not limitedly applied to the above scenario, and can be equally applied to initial access and PUCCH transmission of the NR UE.
The main contents proposed in the present disclosure are proposed in [Method A] and [Method B], and a random access response reception method of the RedCap UE and an Msg3 PUSCH transmission method of the RedCap UE to be described below correspond to the background description of the present disclosure.

## Method of receiving random access response of RedCap UE

A RedCap UE may support limited UE bandwidth considering the UE complexity. An (initial) UL bandwidth of the UE may not cover all of the frequency domain of the RO when configuring the RO using the conventional method for the NR UE. In this case, the redcap UE may need to receive RAR after performing a frequency retuning operation after transmitting the RA preamble during the RA process for initial access. Additionally, a UE operating with half-duplex FDD in the FDD band (in the initial access procedure) may need to receive the RAR after frequency retuning in the same manner.
In this case, DL reception including PDCCH monitoring may not be possible during UL-to-DL or Tx-to-Rx switching (accompanying frequency retuning), so an RAR window of the redcap UE may be configured to start later than an RAR window of a normal UE as much as X symbol or X' us. X or X' may be a value greater than or equal to transition time (NRx-Tx or NTx-Rx) and/or frequency retuning time defined in TS 38.211 spec. Alternatively, it may be newly defined in the spec considering the characteristics of the RedCap UE, or it may be a value that the base station sets to higher layer configuration based on system information.
The conventional RAR window for the NR UE is specified in TS 38.213 spec and TS 38.321 spec as follows.

[Table 13]

| |
|---|
| TS 38.213<br>8.2 Random access response - Type-1 random access procedure |

(continued)

| |
|---|
| In response to a PRACH transmission, a UE attempts to detect a DCI format 1_0 with CRC scrambled by a corresponding RA-RNTI during a window controlled by higher layers [11, TS 38.321]. The window starts at the first symbol of the earliest CORESET the UE is configured to receive PDCCH for Type1-PDCCH CSS set, as defined in Clause 10.1, that is at least one symbol, after the last symbol of the PR ACH occasion corresponding to the PRACH transmission, where the symbol duratio n corresponds to the SCS for Type1-PDCCH CSS set as defined in Clause 10.1. T he length of the window in number of slots, based on the SCS for Type1-PDCCH CSS set, is provided by *ra-ResponseWindow.*<br>... |

[Table 14]

| |
|---|
| TS 38.321<br>5.1.4 Random Access Response reception<br>Once the Random Access Preamble is transmitted and regardless of the possible occurrence of a measurement gap, the MAC entity shall:<br>1>if the contention-free Random Access Preamble for beam failure recovery request was transmitted by the MAC entity:<br>2> start the *ra-ResponseWindow* configured in *BeamFailureRecoveryConfig* at the first PDCCH occasion as specified in TS 38.213 [6] from the end of the Random Access Preamble transmission;<br>2>monitor for a PDCCH transmission on the search space indicated by *recoverySearchSpaceId* of the SpCell identified by the C-RNTI while *ra-ResponseWindow* is running.<br>1>else:<br>2> start the *ra-ResponseWindow* configured in *RACH-ConfigCommon* at the first PDCCH occasion as specified in TS 38.213 [6] from the end of the Random Access Preamble transmission;<br>2> monitor the PDCCH of the SpCell for Random Access Response(s) identified by the RA-RNTI while the *ra-ResponseWindow* is running.<br>... |

In the same way, in order to define the RAR window of the redcap UE, the redcap UE can monitor DCI format 1_0 with CRC scrambled by RA-RNTI from the first symbol of the earliest CORESET starting at least after X symbol or after X' us from the last symbol of the RO used for the RA preamble transmission after transmitting the RA preamble. Alternatively, a duration in which the PDCCH is monitored to receive the RAR, that is, a starting point of the RAR window or a starting point of the RAR window counter may be defined as the first symbol of the earliest CORESET starting at least after X symbol or after X' us from the last symbol of RO used for the RA preamble transmission. The X or X' value is as described above. Alternatively, the X value in symbol units may be a value that is 1 greater than the minimum number of symbol durations greater than a transition time and/or a frequency retuning time.

For the RAR window of the redcap UE, a separate RAR window for the redcap UE may be used (in addition to the RAR window for the normal UE). The size of the RAR window may be determined by the setting value of the RAR window counter, and the size of the separate RAR window for redcap UE may have the same size as the existing RAR window (without separate size configuration), or may be configured separately. If they have the same size, the RAR window of the redcap UE may be in a staggered form of the conventional RAR window.

Alternatively, the base station does not define a separate RAR window with respect to the redcap UE and may allow the redcap UE to use the same RAR window as the normal UE or to share the RAR window. In this case, it may be ensured by BS implementation that the base station satisfies conditions of the transition time and/or the frequency retuning time mentioned above.

**Method of transmitting Msg3 PUSCH of RedCap UE**

In the RA procedure for initial access of NR UE, Msg3 PUSCH transmission is scheduled by RAR UL grant. The RAR UL grant field configuration and the resulting Msg3 PUSCH FDRA and frequency hopping (FH) information are specified in TS 38.213 as follows.

【Table 15】

TS 38.213

8.2 Random access response - Type-1 random access procedure

...

A RAR UL grant schedules a PUSCH transmission from the UE. The contents of t he RAR UL grant, starting with the MSB and ending with the LSB, are given in Table 8.2-1.

If the value of the frequency hopping flag is 0, the UE transmits the PUSCH with out frequency hopping; otherwise, the UE transmits the PUSCH with frequency hop ping.

The UE determines the MCS of the PUSCH transmission from the first sixteen ind exes of the applicable MCS index table for PUSCH as described in [6, TS 38.214].

The TPC command value $\delta_{msg2,b,f,c}$ is used for setting the power of the PUSCH tran smission, as described in Clause 7.1.1, and is interpreted according to Table 8.2-2.

The CSI request field is reserved.

The ChannelAccess-CPext field indicates a channel access type and CP extension fo r operation with shared spectrum channel access [15, TS 37.213].

**Table 8.2-1: Random Access Response Grant Content field size**

| RAR grant field | Number of bits |
|---|---|
| Frequency hopping flag | 1 |
| PUSCH frequency resource allocation | 14, for operation without shared spectrum channel access<br>12, for operation with shared spectrum ch annel access |
| PUSCH time resource alloc | 4 |

| | |
|---|---|
| ation | |
| MCS | 4 |
| TPC command for PUSCH | 3 |
| CSI request | 1 |
| ChannelAccess-CPext | 0, for operation without shared spectrum channel access<br>2, for operation with shared spectrum channel access |

**Table 8.2-2: TPC Command $\delta_{msg2,b,f,c}$ for PUSCH**

| TPC Command | Value (in dB) |
|---|---|
| 0 | -6 |
| 1 | -4 |
| 2 | -2 |
| 3 | 0 |
| 4 | 2 |
| 5 | 4 |
| 6 | 6 |
| 7 | 8 |

## 8.3 PUSCH scheduled by RAR UL grant

An active UL BWP, as described in Clause 12 and in [4, TS 38.211], for a PUSCH transmission scheduled by a RAR UL grant is indicated by higher layers.

If *useInterlace-PUCCH-PUSCH* is not provided by *BWP-UplinkCommon* and *BWP-U*

| |
|---|
| *plinkDedicated*, for determining the frequency domain resource allocation for the PU SCH transmission within the active UL BWP<br>- if the active UL BWP and the initial UL BWP have same SCS and same CP l ength and the active UL BWP includes all RBs of the initial UL BWP, or the active UL BWP is the initial UL BWP, the initial UL BWP is used<br>- else, the RB numbering starts from the first RB of the active UL BWP and t he maximum number of RBs for frequency domain resource allocation equals the number of RBs in the initial UL BWP<br>The frequency domain resource allocation is by uplink resource allocation type 1 [6 , TS 38.214]. For an initial UL BWP size of $N_{\mathrm{BWP}}^{\mathrm{size}}$ RBs, a UE processes the frequ ency domain resource assignment field as follows<br>- if $N_{\mathrm{BWP}}^{\mathrm{size}} \leq 180$, or for operation with shared spectrum channel access if $N_{\mathrm{BWP}}^{\mathrm{size}} \leq 90$<br>  - truncate the frequency domain resource assignment field to its $\lceil \log_2(N_{\mathrm{BWP}}^{\mathrm{size}} \cdot (N_{\mathrm{BWP}}^{\mathrm{size}}+1)/2) \rceil$ least significant bits and interpret the truncat ed frequency resource assignment field as for the frequency resource assig nment field in DCI format 0_0 as described in [5, TS 38.212]<br>- else<br>  - insert $\lceil \log_2(N_{\mathrm{BWP}}^{\mathrm{size}} \cdot (N_{\mathrm{BWP}}^{\mathrm{size}}+1)/2) \rceil - 14$ most significant bits, or for operat ion with shared spectrum channel access insert $\lceil \log_2(N_{\mathrm{BWP}}^{\mathrm{size}} \cdot (N_{\mathrm{BWP}}^{\mathrm{size}}+1)/2) \rceil - 12$ most significant bits, with value set to ' 0' after the $N_{\mathrm{UL,hop}}$ bits to the frequency domain resource assignment fiel d, where $N_{\mathrm{UL,hop}} = 0$ if the frequency hopping flag is set to '0' and $N_{\mathrm{UL,hop}}$ is provided in Table 8.3-1 if the hopping flag bit is set to '1', and interpret the expanded frequency resource assignment field as for the fre quency resource assignment field in DCI format 0_0 as described in [5, TS 38.212] |

- end if

...

For a PUSCH transmission with frequency hopping scheduled by RAR UL grant or for a Msg3 PUSCH retransmission, the frequency offset for the second hop [6, TS 38.214] is given in Table 8.3-1.

**Table 8.3-1: Frequency offset for second hop of PUSCH transmission with frequency hopping scheduled by RAR UL grant or of Msg3 PUSCH retransmission**

| Number of PRBs in initial UL BWP | Value of $N_{\mathrm{UL,hop}}$ Hopping Bits | Frequency offset for 2nd hop |
|---|---|---|
| $N_{\mathrm{BWP}}^{\mathrm{size}} < 50$ | 0 | $\lfloor N_{\mathrm{BWP}}^{\mathrm{size}}/2 \rfloor$ |
| | 1 | $\lfloor N_{\mathrm{BWP}}^{\mathrm{size}}/4 \rfloor$ |
| $N_{\mathrm{BWP}}^{\mathrm{size}} \geq 50$ | 00 | $\lfloor N_{\mathrm{BWP}}^{\mathrm{size}}/2 \rfloor$ |
| | 01 | $\lfloor N_{\mathrm{BWP}}^{\mathrm{size}}/4 \rfloor$ |
| | 10 | $-\lfloor N_{\mathrm{BWP}}^{\mathrm{size}}/4 \rfloor$ |
| | 11 | Reserved |

...

As stipulated above, in the conventional RA procedure for initial access, Msg3 FDRA and FH are determined based on an initial UL bandwidth. The initial UL bandwidth means a bandwidth of an initial UL BWP. However, due to a legacy impact in an NR cell simultaneously supporting the normal UE and the redcap UE, if the initial UL BWP is not limited within a max UE bandwidth of the redcap UE, that is, if the initial UL bandwidth is greater than a redcap UE bandwidth, the following Msg3 PUSCH transmission method of the redcap UE may be considered. In the following method, when configuring and operating a separate initial UL BWP for the redcap UE for the above reasons, the redcap UE bandwidth may include the meaning of a bandwidth of a separate initial UL BWP or a separate initial UL BWP for the redcap UE. The bandwidth of the separate initial UL BWP for the redcap UE may be limited to be less than the redcap UE bandwidth. For the above reasons, in the present disclosure, the meaning of "the bandwidth of the initial UL BWP or the initial UL bandwidth is greater than the redcap UE bandwidth" or "the base station shall configure the initial UL bandwidth for the normal UE to be greater than the redcap UE bandwidth" may include the meaning of "a separate initial UL BWP for the redcap UE is/was configured" for that reason.

**[Method 1] If Initial UL bandwidth is greater than redcap UE bandwidth, FH off**

FIG. 11 illustrates an example of Msg3 PUSCH FH when the initial UL bandwidth is greater than the redcap UE bandwidth in a wireless communication system according to an embodiment of the present disclosure.

If the initial UL bandwidth for the normal UE needs to be set to be greater than the redcap UE bandwidth, the base station can receive PUSCH transmissions from both the normal UE and the redcap UE by turning off FH for Msg3 PUSCH and scheduling a first frequency hop indicated by the FDRA of the RAR UL grant to fall within the redcap UE bandwidth. For this purpose, the base station can configure the value of the FH flag of the RAR UL grant to 0. The FH flag of the above RAR UL grant can be configured separately and used to enable/disable the FH of the redcap UE. Alternatively, if the initial UL bandwidth is greater than the redcap UE bandwidth, the UE can assume that FH is off (or the FH flag value is 0) and transmit Msg3 PUSCH using the above method through the frequency domain indicated by the FDRA of the RAR UL grant. FIG. 11 is an example where the base station schedules Msg3 PUSCH within the redcap UE bandwidth without FH when the initial UL bandwidth is greater than the redcap UE bandwidth.

**[Method 21 Method of differently interpreting FDRA and/or FH flag of RAR UL grant**

FIG. 12 illustrates an example where the Initial UL bandwidth is greater than the redcap UE bandwidth in a wireless communication system according to an embodiment of the present disclosure.

If the base station needs to configure the initial UL bandwidth for the normal UE to be greater than the redcap UE bandwidth, this may be a method of operating by applying/interpreting the PUSCH scheduling result indicated by the FDRA and/or FH flag of the RAR UL grant or field values such as FDRA and/or FH flag differently from the normal UE. If the initial UL bandwidth is greater than the redcap UE bandwidth, the PUSCH scheduling result indicated by the FDRA and/or FH flag of the RAR UL grant may be as follows.

[Case 1] If the 1st frequency hop falls within the redcap UE bandwidth and the 2nd frequency hop falls outside the redcap UE bandwidth

[Case 2] If the 1st frequency hop falls outside the redcap UE bandwidth, and the 2nd frequency hop falls within the redcap UE bandwidth

[Case 3] If both the 1st frequency hop and 2nd frequency hop fall within the redcap UE bandwidth

[Case 4] If both the 1st frequency hop and 2nd frequency hop fall outside the redcap UE bandwidth

As in the Cases 1 and 2, when the FH of Msg3 PUSCH is enabled and only one hop of the two frequency hops falls within the redcap UE bandwidth, the base station can transmit the 1st hop and the 2nd hop without FH using the frequency resources of the hop falling within the redcap UE bandwidth. That is, in the Case 1, the 1st hop and 2nd hop may be transmitted without FH in the frequency range of the 1st frequency hop or indicated by the FDRA of the RAR UL grant. (FIG. 12)

FIG. 13 illustrates an example where the Initial UL bandwidth is greater than the redcap UE bandwidth in a wireless communication system according to an embodiment of the present disclosure.

In the Case 2, the 1st hop and 2nd hop may be transmitted without FH in the frequency domain of the 2nd hop falling within the redcap UE bandwidth. (FIG. 13)

FIG. 14 illustrates an example where the Initial UL bandwidth is greater than the redcap UE bandwidth in a wireless communication system according to an embodiment of the present disclosure.

In the Case 3, since both the 1st hop and 2nd hop fall within the redcap UE bandwidth, Msg3 PUSCH may be transmitted to the (FH on) 1st hop and 2nd hop indicated by the FDRA and FH flag of the RAR UL grant.

In the Case 4, Msg3 PUSCH may be transmitted without FH in the 1st hop (or 2nd hop). In this instance, since the 1st hop (or 2nd hop) is a case where the redcap UE does not fall within the initial UL bandwidth received via system information (e.g., SIB 1), the redcap UE may perform Msg3 PUSCH transmission after frequency retuning. Alternatively, in this case, the redcap UE considers that the redcap UE is barred in the corresponding cell or the access of the redcap UE is not allowed in the corresponding cell, and the redcap UE can continue to perform the cell search process for other accessible cell(s).

Alternatively, the base station may bar the redcap UE by ensuring that some or all of Msg3 PUSCH indicated by the FDRA and/or FH flag value of the RAR UL grant does not belong to the redcap UE bandwidth or the initial UL bandwidth of the redcap UE. Alternatively, the base station can bar the redcap UE by ensuring that the Msg3 PUSCH scheduling result indicated by the FDRA and/or FH flag value of the RAR UL grant belongs to one of Case 1, Case 2, or Case 4 above.

**[Msg3 PUSCH scheduling information interpretation based on Redcap initial UL bandwidth]**

FIG. 15 illustrates an example where the initial UL bandwidth is greater than the redcap UE bandwidth in a wireless communication system according to an embodiment of the present disclosure. In the embodiment of FIG. 15, modulo operation is applied.

The RedCap UE may determine the final hop(s) by applying modulo operation (for hop(s) falling outside it) based on its (separate) initial UL bandwidth. The standard redcap initial UL bandwidth may be configured cell-specifically by the base station via system information (e.g., SIB 1). Otherwise, initial UL bandwidth information of the redcap UE may be transmitted early to the base station in the Msg1 step. For convenience of modulo operation, the normal UE initial UL bandwidth = N*RedCap UE initial UL bandwidth may be limited (e.g., N=1, 2, 4, 8, or positive integer). For example, a separate initial UL BWP for redcap may be configured to have a bandwidth value of floor(initial_UL_bandwidth/N). Here, initial_UL_bandwidth means the bandwidth of the initial UL BWP for the normal UE, and may be in units of RB. FIG. 15 is an example where N=2.

The example of FIG. 15 also shows that the result of performing a modulo operation based on the redcap UE initial UL bandwidth may result in frequency diversity gain not being obtained. To improve these shortcomings, a method of arranging hops in a symmetrical location based on the boundary of the redcap initial UL bandwidth, rather than a simple modulo operation, may be considered.

FIG. 16 illustrates an example where the initial UL bandwidth is greater than the redcap UE bandwidth in a wireless communication system according to various embodiments of the present disclosure. In the embodiment of FIG. 16, mirroring is applied.

In FIG. 16, when the 2nd hop falls outside the redcap UE initial bandwidth, frequency diversity gain can be expected compared to the example of FIG. 15 by mirroring and arranging the 2nd hop based on the upper boundary of the redcap initial UL bandwidth.

Alternatively, in the case of a redcap UE, Msg3 PUSCH can be transmitted in a frequency domain distinct from that of a normal UE by applying a frequency offset to the FDRA value of the RAR UL grant and transmitting it. This method may have the advantage of facilitating detection at the base station compared to a method in which some frequency hops overlap. Alternatively, when FH enable is indicated in the RAR UL grant, the frequency offset value of the 2nd hop can be interpreted differently from the conventional one, or an additional frequency offset can be applied to the conventional 2nd hop frequency offset value. In the former case, the redcap UE may determine a location on the frequency of the 2nd hop by applying the 2nd hop location value calculated based on Table 8.3-1 of TS 38.213 by multiplying the scaling factor (for example, the scaling factor may be redcap_UE_initial_UL_bandwidth/normal_UE_initial_UL_bandwidth), or applying the UE bandwidth of the redcap UE or the initial UL bandwidth of the redcap UE instead of the initial UL bandwidth of the normal UE.

For the methods 1 and 2 above, the redcap UE bandwidth can be replaced with RO bandwidth configured for the RedCap UE to use for initial access. That is, FH off may be determined based on RO bandwidth, FH may be performed, or FDRA may be interpreted. In this instance, RO may mean a RO configured separately for the RedCap UE or an RO configured for the NR UE without separate configuration. In this case, the RedCap UE may operate assuming the above RO bandwidth as the initial UL BWP of the RedCap UE.

**[Method 3] Redcap UE identification through Msg3 PUSCH transmission**

When the Msg3 PUSCH of the normal UE and the redcap UE is transmitted using distinct resources in the time/frequency domain or different FH patterns according to the methods proposed above, the base station can distinguish the UE (type) (e.g. whether it is a normal UE or a redcap UE) by performing BD on the distinguished Msg3 PUSCH time/frequency transmission resources or FH pattern. If early UE ID is not supported in Msg1, this method can be used to distinguish the redcap UE from the normal UE in Msg3 step, or can be used to provide additional UE (type) information together with the early UE ID in Msg1. For example, the additional UE (type) information may be information on the number of Rx antenna branches (or ports) or may indicate whether a specific feature of the redcap UE is supported. Additionally, this method can be applied for (additional) UE identification even when the normal UE and initial UL bandwidth sizes are the same. The Msg3 PUSCH resource distinguishment may not be limited to the frequency domain. For example, this method may differently interpret a TDRA value indicated in the RAR UL grant (e.g., apply an additional offset) or distinguish and transmit the Msg3 PUSCH of the normal UE and the redcap UE in the form of TDM.

**[Method 4] Msg3 PUSCH retransmission**

After transmitting Msg3 PUSCH using one of the methods mentioned above, the redcap UE may be indicated Msg3 PUSCH retransmission from the base station. The Msg3 PUSCH retransmission may be indicated via DCI format 0_0 with CRC scrambled by TC-RNTI. When the redcap UE is indicated retransmission via DCI, information such as FDRA/TDRA, FH, etc. for Msg3 PUSCH retransmission may follow an indication of the Msg3 retransmission DCI. If the initial UL bandwidth is greater than the redcap UE bandwidth, the method proposed in the RAR UL grant above can be applied to interpretation/operation of FDRA/TDRA and/or FH, etc.

If the redcap UE fails in the Msg3 initial transmission and is indicated the retransmission, the redcap UE can use resources that are different from the normal UE in a different way from the initial transmission. For example, when the redcap UE transmits frequency resources such as FDRA, FH pattern, etc. separately from normal UE in initial transmission, the redcap UE that has been indicated to retransmit can apply a time offset to the TDRA value or transmit using resources distinct from normal UEs using TDM.

**Method of transmitting Msg4 ACK/NACK PUCCH of RedCap UE**

The PUCCH transmission method before receiving dedicated PUCCH resource configuration is specified in TS 38.213 spec as follows.

【Table 16】

TS 38.213

### 9.2.1 PUCCH Resource Sets

If a UE does not have dedicated PUCCH resource configuration, provided by *PUCCH-ResourceSet* in *PUCCH-Config*, a PUCCH resource set is provided by *pucch-ResourceCommon* through an index to a row of Table 9.2.1-1 for transmission of HARQ-ACK information on PUCCH in an initial UL BWP of $N_{\text{BWP}}^{\text{size}}$ PRBs.

The PUCCH resource set includes sixteen resources, each corresponding to a PUCCH format, a first symbol, a duration, a PRB offset $RB_{\text{BWP}}^{\text{offset}}$, and a cyclic shift index set for a PUCCH transmission.

The UE transmits a PUCCH using frequency hopping if not provided *useInterlacePUCCH-PUSCH* in *BWP-UplinkCommon*; otherwise, the UE transmits a PUCCH without frequency hopping.

An orthogonal cover code with index 0 is used for a PUCCH resource with PUCCH format 1 in Table 9.2.1-1.

The UE transmits the PUCCH using the same spatial domain transmission filter as for a PUSCH transmission scheduled by a RAR UL grant as described in Clause 8.3.

If a UE is not provided *pdsch-HARQ-ACK-Codebook*, the UE generates at most one HARQ-ACK information bit.

If the UE provides HARQ-ACK information in a PUCCH transmission in response to detecting a DCI format scheduling a PDSCH reception or a SPS PDSCH release, the UE determines a PUCCH resource with index $r_{\text{PUCCH}}$, $0 \leq r_{\text{PUCCH}} \leq 15$, as $r_{\text{PUCCH}} = \left\lfloor \frac{2 \cdot n_{\text{CCE},0}}{N_{\text{CCE}}} \right\rfloor + 2 \cdot \Delta_{\text{PRI}}$, where $N_{\text{CCE}}$ is a number of CCEs in a CORESET of a PDCCH reception with the DCI format, as described in Clause 10.1, $n_{\text{CCE},0}$ is the index of a first CCE for the PDCCH reception, and $\Delta_{\text{PRI}}$ is a value of the PUCCH resource indicator field in the DCI format.

If $\lfloor r_{\text{PUCCH}}/8 \rfloor = 0$ and a UE is provided a PUCCH resource by *pucch-ResourceCom*

*mon* and is not provided *useInterlacePUCCH-PUSCH-r16* in *BWP-UplinkCommon*

- the UE determines the PRB index of the PUCCH transmission in the first hop as $RB_{\text{BWP}}^{\text{offset}} + \lfloor r_{\text{PUCCH}}/N_{\text{CS}} \rfloor$ and the PRB index of the PUCCH transmission in the second hop as $N_{\text{BWP}}^{\text{size}} - 1 - RB_{\text{BWP}}^{\text{offset}} - \lfloor r_{\text{PUCCH}}/N_{\text{CS}} \rfloor$, where $N_{\text{CS}}$ is the total number of initial cyclic shift indexes in the set of initial cyclic shift indexes
- the UE determines the initial cyclic shift index in the set of initial cyclic shift indexes as $r_{\text{PUCCH}} \bmod N_{\text{CS}}$

If $\lfloor r_{\text{PUCCH}}/8 \rfloor = 1$ and a UE is provided a PUCCH resource by *pucch-ResourceCommon* and is not provided *useInterlacePUCCH-PUSCH* in *BWP-UplinkCommon*

- the UE determines the PRB index of the PUCCH transmission in the first hop as $N_{\text{BWP}}^{\text{size}} - 1 - RB_{\text{BWP}}^{\text{offset}} - \lfloor (r_{\text{PUCCH}} - 8)/N_{\text{CS}} \rfloor$ and the PRB index of the PUCCH transmission in the second hop as $RB_{\text{BWP}}^{\text{offset}} + \lfloor (r_{\text{PUCCH}} - 8)/N_{\text{CS}} \rfloor$
- the UE determines the initial cyclic shift index in the set of initial cyclic shift indexes as $(r_{\text{PUCCH}} - 8) \bmod N_{\text{CS}}$

...

**Table 9.2.1-1: PUCCH resource sets before dedicated PUCCH resource configuration**

| Index | PUCCH format | First symbol | Number of symbols | PRB offset $RB_{\text{BWP}}^{\text{offset}}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |

| | | | | | |
|---|---|---|---|---|---|
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{\mathrm{BWP}}^{\mathrm{size}}/4 \rfloor$ | {0, 3, 6, 9} |

As stipulated in TS 38.213, PUCCH transmission before receiving the dedicated PUCCH resource configuration is configured to always perform FH based on the initial UL bandwidth. The FH problem when the initial UL bandwidth is greater than the redcap UE bandwidth can be applied in the same manner as previously proposed in Msg3 PUSCH. For example, in the above case, the proposed method for PUCCH can be applied by replacing Msg3 PUSCH with PUCCH and interpreting the methods previously proposed for Msg3 PUSCH. That is, unlike the conventional normal UE, if the bandwidth of the initial UL BWP is greater than the redcap UE bandwidth, PUCCH FH disable can be supported for the RedCap UE. When PUCCH FH is disabled, PUCCH transmission frequency resources can be determined by the first (or second) frequency hop (PRB index) determination method for PUCCH transmission of a normal UE on the same principle as PUSCH. In other words, when random access is performed by configuring a separate initial UL BWP for RedCap, N_"BWP" ^ "size", which means the bandwidth of the initial UL BWP for determining PUCCH transmission frequency resources, can be replaced with the initial UL BWP of a normal UE, or the bandwidth of the initial UL BWP configured separately for a redcap UE.

Conventionally, user multiplexing through time-domain orthogonal cover code (OCC) was not supported when transmitting PUCCH in the initial access procedure. In order to secure additional PUCCH transmission resources together with the introduction of RedCap, time-domain OCC used when transmitting PUCCH through a dedicated PUCCH resource can be supported. In this instance, user multiplexing capability by the time-domain OCC is determined by a spreading factor and NSF of the cover code. When supporting the user multiplexing through time-domain OCC when transmitting PUCCH in the initial access procedure, the NSF may need to be considered in addition to the above method of determining PUCCH transmission resources. For example, in the method of determining the first (or second) frequency hop (PRB index) for PUCCH transmission above, the NSF can be applied as follows.

[Table 17]

| |
|---|
| If $\lfloor r_{\mathrm{PUCCH}}/8 \rfloor = 0$ and a UE is provided a PUCCH resource by *pucch-ResourceCom mon* and is not provided *useInterlacePUCCH-PUSCH-r16* in *BWP-UplinkCommon* |

(continued)

| |
|---|
| - the UE determines the PRB index of the PUCCH transmission in the first hop as $RB_{\text{BWP}}^{\text{offset}} + \lfloor r_{\text{PUCCH}}/N_{\text{CS}}/N_{\text{SF}} \rfloor$ and the PRB index of the PUCCH transmission i n the second hop as $N_{\text{BWP}}^{\text{size}} - \mathbf{1} - RB_{\text{BWP}}^{\text{offset}} - \lfloor r_{\text{PUCCH}}/N_{\text{CS}}/N_{\text{SF}} \rfloor$, where $N_{\text{CS}}$ is the total number of initial cyclic shift indexes in the set of initial cyclic shift in dexes, and $N_{\text{SF}}$ is the spreading factor of the time-domain OCC. |

Further, in the same manner as the Msg3 PUSCH above, the redcap UE may apply a cell-specific frequency offset to the PUCCH transmission frequency resource for the normal UE and transmit it to thereby transmit the PUCCH to a frequency domain distinguished from the normal UE. In this instance, the PUCCH transmission frequency resource may be determined by reusing (partial configuration of) Table 9.2.1-1 of Table 16 and adding an additional cell-specific frequency offset. To this end, the cell-specific frequency offset can be transmitted by being included in the SIB (e.g., initial UL BWP configuration BWP-UplinkCommon(-R) of SIB1).

The above PUCCH FH is described based on the intra-slot FH, but it can be equally applied even when inter-slot FH is supported.

The Msg4 ACK/NACK PUCCH transmission method of the present disclosure can be equally applied to the MsgB ACK/NACK PUCCH transmission method when supporting 2-step RACH.

## [Method A] Method of supporting time-domain OCC

With the introduction of RedCap, user multiplexing through time-domain OCC can be supported in order to secure additional PUCCH transmission resources in PUCCH transmission during initial access, that is, in a PUCCH transmission process for HARQ feedback for Msg4/MsgB. In this instance, in order to support both a UE in which PUCCH FH is enabled and a UE in which PUCCH FH is disabled and in order to solve a problem of generating interference due to an overlap of all or some of frequency hops between the different UEs in this case, even if the PUCCH FH is disabled, a method of assuming the OCC as the PUCCH FH being enabled and applying the OCC may be considered. Considering this situation, in PUCCH transmission during the initial access, that is, in the PUCCH transmission process for HARQ feedback for Msg4/MsgB, the following methods are proposed to efficiently support both the time-domain OCC and the PUCCH FH enable/disable.

Method A1) Method of enabling/disabling time-domain OCC via separate cell-specific higher layer parameter (e.g., via SIB1) (can be indicated using a bitmap scheme together with intra-slot FH or a joint coding scheme)

(1) Example A1-1) if {intraSlotFrequencyHopping, timeDomainOCC} equals

00 : no frequency hopping and no time-domain OCC
01 : no frequency hopping and time-domain OCC
10 : frequency hopping and no time-domain OCC
11 : frequency hopping and time-domain OCC

In the above example, intraSlotFrequencyHopping and timeDomainOCC control intra-slot FH and time-domain OCC, respectively, and both can be transmitted to SIB1.

Combination of the example A1-1 is possible using the bitmap scheme and the joint coding scheme.

(2) Example A1-2) if {intraSlotFrequencyHoppingAndTimeDomainOCC} equals

000 : no frequency hopping and no time-domain OCC
001 : no frequency hopping and time-domain OCC
010 : no frequency hopping and time-domain OCC (per hop)
011 : frequency hopping and no time-domain OCC
100 : frequency hopping and time-domain OCC
101~111: reserved

The example A1-2 is a method of indicating using the joint coding scheme. The example A1-2 has added time-domain OCC per hop ("010") compared to the example A1-1. This may be to apply the OCC based on sequence per hop and a spreading factor when the intra-slot FH has been enabled, in a state where the intra-slot FH is disabled, i.e., the FH operation is not actually performed. This may be to maintain user multiplexing performance by maintaining orthogonality of OCC sequences per hop even when a UE in which PUCCH intra-slot FH is enabled and a UE in which PUCCH intra-slot FH is disabled share all or some of PUCCH resources.

The UE operation in the configuration of time-domain OCC per hop in the example A1-2 shall determine spreading factor ( $N_{\mathrm{SF},m'}^{\mathrm{PUCCH},1}$ ) by assuming "No intra-slot hopping" in Table 18 below when the intra-slot FH is disabled based on the conventional operation based on TS 38.211 described below, but may be to determine spreading factor ( $N_{\mathrm{SF},m'}^{\mathrm{PUCCH},1}$ ) by assuming "Intra-slot hopping" in Table 18 below although the intra-slot FH has been disabled.

【Table 18】

6.3.2.4 PUCCH format 1

6.3.2.4.1 Sequence modulation

The block of bits $b(0),...,b(M_{\text{bit}}-1)$ shall be modulated as described in clause 5.1 using BPSK if $M_{\text{bit}}=1$ and QPSK if $M_{\text{bit}}=2$, resulting in a complex-valued symbol $d(0)$. The complex-valued symbol $d(0)$ shall be multiplied with a sequence $r_{u,v}^{(\alpha,\delta)}(n)$ accordi ng to

$$y(n) = d(0)r_{u,v}^{(\alpha,\delta)}(n)$$
$$n = 0,1,\dots,M_{\text{RB}}^{\text{PUCCH},1}N_{\text{sc}}^{\text{RB}} - 1$$

where $r_{u,v}^{(\alpha,\delta)}(n)$ is given by clause 6.3.2.2. The quantity $M_{\text{RB}}^{\text{PUCCH},1}$ is given by clause 9.2.1 of [5, TS 38.213].

The block of complex-valued symbols $y(0),\dots,y\left(M_{\text{RB}}^{\text{PUCCH},1}N_{\text{sc}}^{\text{RB}} - 1\right)$ shall be block-wis e spread with the orthogonal sequence $w_i(m)$ according to

$$z\left(m'M_{\text{RB}}^{\text{PUCCH},1}N_{\text{sc}}^{\text{RB}}N_{\text{SF},0}^{\text{PUCCH},1} + mM_{\text{RB}}^{\text{PUCCH},1}N_{\text{sc}}^{\text{RB}} + n\right) = w_i(m)y(n)$$
$$n = 0,1,\dots,M_{\text{RB}}^{\text{PUCCH},1}N_{\text{sc}}^{\text{RB}} - 1$$
$$m = 0,1,\dots,N_{\text{SF},m'}^{\text{PUCCH},1} - 1$$
$$m' = \begin{cases} 0 & \text{no intra-slot frequency hopping} \\ 0,1 & \text{intra-slot frequency hopping} \end{cases}$$

where $N_{\text{SF},m'}^{\text{PUCCH},1}$ is given by Table 6.3.2.4.1-1. Intra-slot frequency hopping shall be ass umed when the higher-layer parameter *intraSlotFrequencyHopping* is provided, regardles s of whether the frequency-hop distance is zero or not, and interlaced mapping is not enabled, otherwise no intra-slot frequency hopping shall be assumed.

The orthogonal sequence $w_i(m)$ is given by Table 6.3.2.4.1-2 where $i$ is the index of t he orthogonal sequence to use according to clause 9.2.1 of [5, TS 38.213]. In case of a PUCCH transmission spanning multiple slots according to clause 9.2.6 of [5, TS38.2 13], the complex-valued symbol $d(0)$ is repeated for the subsequent slots.

**Table 6.3.2.4.1-1: Number of PUCCH symbols and the corresponding**

$N_{\mathrm{SF},m'}^{\mathrm{PUCCH},1}$.

| PUCCH length, $N_{\mathrm{symb}}^{\mathrm{PUCCH},1}$ | $N_{\mathrm{SF},m'}^{\mathrm{PUCCH},1}$ | | |
|---|---|---|---|
| | No intra-slot hopping $m'=0$ | Intra-slot hopping | |
| | | $m'=0$ | $m'=1$ |
| 4 | 2 | 1 | 1 |
| 5 | 2 | 1 | 1 |
| 6 | 3 | 1 | 2 |
| 7 | 3 | 1 | 2 |
| 8 | 4 | 2 | 2 |
| 9 | 4 | 2 | 2 |
| 10 | 5 | 2 | 3 |
| 11 | 5 | 2 | 3 |
| 12 | 6 | 3 | 3 |
| 13 | 6 | 3 | 3 |
| 14 | 7 | 3 | 4 |

**Table 6.3.2.4.1-2: Orthogonal sequences $w_i(m)=e^{j2\pi\phi(m)/N_{\mathrm{SF},m'}^{\mathrm{PUCCH},1}}$ for PUCCH format 1.**

| $N_{\mathrm{SF},m'}^{\mathrm{PUCCH},1}$ | $\varphi$ | | | | | | |
|---|---|---|---|---|---|---|---|
| | $i=0$ | $i=1$ | $i=2$ | $i=3$ | $i=4$ | $i=5$ | $i=6$ |
| 1 | [0] | - | - | - | - | - | - |

| | | | | | | | |
|---|---|---|---|---|---|---|---|
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2 ] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

**[Method B1 Method of supporting sequence (group) hopping**

A cell in which a conventional NR UE is supported supports sequences or sequence group hopping between frequency hops in intra-slot PUCCH frequency hopping (FH) for interference randomization in PUCCH transmission during initial access, that is, in a PUCCH transmission process for HARQ feedback for Msg4/MsgB.

【Table 19】

TS 38.211

### 6.3.2 Physical uplink control channel

#### 6.3.2.1 General

The physical uplink control channel supports multiple formats as shown in Table 6.3.2. 1-1. In case intra-slot frequency hopping is configured for PUCCH formats 1, 3, or 4 according to clause 9.2.1 of [5, TS38.213], the number of symbols in the first hop is given by $\lfloor N_{\text{symb}}^{\text{PUCCH}}/2 \rfloor$ where $N_{\text{symb}}^{\text{PUCCH}}$ is the length of the PUCCH transmission in OFD M symbols.

**Table 6.3.2.1-1: PUCCH formats.**

| PUCCH format | Length in OFDM symbols $N_{\text{symb}}^{\text{PUCCH}}$ | Number of bits |
|---|---|---|
| 0 | 1 – 2 | ≤2 |
| 1 | 4 – 14 | ≤2 |
| 2 | 1 – 2 | >2 |
| 3 | 4 – 14 | >2 |
| 4 | 4 – 14 | >2 |

#### 6.3.2.2 Sequence and cyclic shift hopping

PUCCH formats 0, 1, 3, and 4 use sequences $r_{u,v}^{(\alpha,\delta)}(n)$ given by clause 5.2.2 with $\delta = 0$ where the sequence group $u$ and the sequence number $v$ depend on the sequence hopping in clause 6.3.2.2.1 and the cyclic shift $\alpha$ depends on the cyclic shift hopping in clause 6.3.2.2.2.

##### 6.3.2.2.1 Group and sequence hopping

The sequence group $u = (f_{\text{gh}} + f_{\text{ss}}) \bmod 30$ and the sequence number $v$ within the grou

p depends on the higher-layer parameter *pucch-GroupHopping*:

- if *pucch-GroupHopping* equals 'neither'

$$f_{gh} = 0$$
$$f_{ss} = n_{ID} \bmod 30$$
$$v = 0$$

where $n_{ID}$ is given by the higher-layer parameter *hoppingId* if configured, otherwi se $n_{ID} = N_{ID}^{cell}$.

- if *pucch-GroupHopping* equals 'enable'

$$f_{gh} = \left(\sum_{m=0}^{7} 2^m c\left(8\left(2n_{s,f}^{\mu} + n_{hop}\right) + m\right)\right) \bmod 30$$
$$f_{ss} = n_{ID} \bmod 30$$
$$v = 0$$

where the pseudo-random sequence $c(i)$ is defined by clause 5.2.1 and shall be i nitialized at the beginning of each radio frame with $c_{init} = \lfloor n_{ID}/30 \rfloor$ where $n_{ID}$ is gi ven by the higher-layer parameter ***hoppingId*** if configured, otherwise $n_{ID} = N_{ID}^{cell}$.

- if *pucch-GroupHopping* equals 'disable'

$$f_{gh} = 0$$
$$f_{ss} = n_{ID} \bmod 30$$
$$v = c\left(2n_{s,f}^{\mu} + n_{hop}\right)$$

where the pseudo-random sequence $c(i)$ is defined by clause 5.2.1 and shall be i nitialized at the beginning of each radio frame with $c_{init} = 2^5 \lfloor n_{ID}/30 \rfloor + (n_{ID} \bmod 30)$ where $n_{ID}$ is given by the higher-layer parameter *hoppingId* if configured, ot herwise $n_{ID} = N_{ID}^{cell}$.

The frequency hopping index $n_{hop} = 0$ if intra-slot frequency hopping is disabled by the higher-layer parameter *intraSlotFrequencyHopping*. If frequency hopping is enabled by the higher-layer parameter *intraSlotFrequencyHopping*, $n_{hop} = 0$ for the first hop and $n_{hop} = 1$ for the second hop.

The existing method is configured such that sequence or sequence group hopping between frequency hops is disabled in intra-slot PUCCH FH while supporting the PUCCH FH disable in the PUCCH transmission during the initial access, that is, in the PUCCH transmission process for HARQ feedback for Msg4/MsgB. However, even in this case, supporting the same level of PUCCH sequence or sequence group hopping may be necessary in terms of interference randomization. To support this, a method of enabling/disabling the PUCCH sequence or the sequence group hopping regardless of PUCCH FH enable/disable may be considered.

1. Method B1) Method of enabling/disabling PUCCH sequence (group) hopping via separate cell-specific higher layer parameter (e.g., via SIB1) (can be indicated using a bitmap scheme together with intra-slot FH or a joint coding scheme)

(1) Example B1-1) if {intraSlotFrequencyHopping, sequenceHopping} equals

00 : no frequency hopping and no sequence (group) hopping
01 : no frequency hopping and sequence (group) hopping
10 : frequency hopping and no sequence (group) hopping
11 : frequency hopping and sequence (group) hopping
In the above example, intraSlotFrequencyHopping and sequenceHopping control intra-slot FH and sequence (group) hopping, respectively, and both can be transmitted to SIB1.

(2) Example B1-2) if {intraSlotFrequencyHoppingAndSequenceHopping} equals

00 : no frequency hopping and no sequence (group) hopping
01 : no frequency hopping and sequence (group) hopping
10 : frequency hopping and sequence (group) hopping
11 : frequency hopping and no sequence (group) hopping, or reserved

The example B1-2 is a method of indicating using the joint coding scheme not the same bitmap scheme as the example B1-1. The example B1-2 removes a relatively unnecessary combination of frequency hopping and no sequence (group) hopping compared to the example B1-1, and can assign remaining code points as reserved.

The UE operation in "01": no frequency hopping and sequence (group) hopping in the example B1-2 shall determine sequence (group) by assuming frequency hopping index $n_{hop} = 0$ when the intra-slot FH is disabled based on the conventional operation based on TS 38.211 described above (i.e., in this case, sequence (group) hopping within a slot is not applied), but may be to determine the sequence (group) hopping within the slot by assuming $n_{hop} = 0$ in a first frequency hop and $n_{hop} = 1$ in a second frequency hop although the intra-slot FH has been disabled (in this case, the sequence (group) hopping within the slot is performed).

2. Method B2) Method of controlling based on an FH distance, i.e., based on whether or not the FH distance is 0, not enabling/disabling directly intra-slot PUCCH FH (method of reusing the existing operation/spec as much as possible). Method of indicating a PUCCH frequency hopping distance via separate cell-specific higher layer parameter (e.g., via SIB1).

(1) Example B2-1) if frequencyHoppingDistanceZero equals

0 : frequency hopping and sequence (group) hopping (enable both FH and the sequence (group) hopping)
1 : no frequency hopping and sequence (group) hopping (disable FH while enabling the sequence (group) hopping)

(2) Example B2-2) If frequencyHoppingDistanceZero equals

0 : frequency hopping and NO sequence (group) hopping (enable FH while disabling the sequence (group) hopping)
1 : no frequency hopping and NO sequence (group) hopping (disable both FH and the sequence (group) hopping)

(3) Example B2-3) If frequencyHoppingDistanceZero equals

0 : frequency hopping and sequence (group) hopping (enable both FH and the sequence (group) hopping)
1 : no frequency hopping and NO sequence (group) hopping (disable both FH and the sequence (group) hopping)

The method B2) above can be implemented by replacing intraSlotFrequencyHopping of the method B1) with frequencyHoppingDistanceZero.

[Description of UE-related claims]

Below, the above-described embodiments are described in detail from a perspective of an operation of a UE with reference to FIG. 17. Methods to be described below are merely distinguished for convenience of explanation. Thus, as long as the methods are not mutually exclusive, it is obvious that partial configuration of any method can be substituted or combined with partial configuration of another method.

FIG. 17 illustrates an operation process of a UE in a wireless communication system according to an embodiment of the present disclosure.

According to various embodiments of the present disclosure, there is provided a method performed by a user equipment (UE) in a wireless communication system.

In step S1710, the UE receives system information block 1 (SIB1) from a base station (BS).

In step S1720, the UE separately determines, based on the SIB1, whether an intra-slot frequency hopping (FH) is enabled and whether a time domain orthogonal cover code (OCC) is enabled.

In step S1730, the UE performs a random access on the BS.

In step S1740, the UE transmits, to the BS, a physical uplink control channel (PUCCH) for a hybrid automatic repeat request (HARQ) feedback of a message 4 (Msg4) or a message B (MsgB) of the random access based on whether the intra-slot frequency hopping is enabled and whether the time domain OCC is enabled.

According to various embodiments of the present disclosure, the UE may correspond to a reduced capability UE (redcap UE).

According to various embodiments of the present disclosure, the SIB1 may represent information related to whether the intra-slot frequency hopping is enabled and whether the time domain OCC is enabled by a bitmap or a joint coding.

According to various embodiments of the present disclosure, the SIB1 may represent a PUCCH frequency hopping distance.

According to various embodiments of the present disclosure, whether the intra-slot frequency hopping is enabled and whether the time domain OCC is enabled may be determined based on the PUCCH frequency hopping distance.

According to various embodiments of the present disclosure, if it is determined that the intra-slot frequency hopping is not enabled and the time domain OCC is enabled, the time domain OCC may be applied to the PUCCH based on sequence per hop and a spreading factor when the intra-slot frequency hopping has been enabled.

According to various embodiments of the present disclosure, there is provided a user equipment (UE) in a wireless communication system. The UE may include a transceiver and at least one processor, and the at least one processor may be configured to perform the operation method of the UE based on FIG. 17.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 17 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the UE based on FIG. 17.

[Description of UE-related claims]

Below, the above-described embodiments are described in detail from a perspective of an operation of a UE with reference to FIG. 18. Methods to be described below are merely distinguished for convenience of explanation. Thus, as long as the methods are not mutually exclusive, it is obvious that partial configuration of any method can be substituted or combined with partial configuration of another method.

FIG. 18 illustrates an operation process of a UE in a wireless communication system according to an embodiment of the present disclosure.

According to various embodiments of the present disclosure, there is provided a method performed by a user equipment (UE) in a wireless communication system.

In step S1810, the UE receives system information block 1 (SIB1) from a base station (BS).

In step S1820, the UE separately determines, based on the SIB1, whether an intra-slot physical uplink control channel (PUCCH) frequency hopping (FH) is enabled and whether a PUCCH sequence group hopping is enabled.

In step S1830, the UE performs a random access on the BS.

In step S 1840, the UE transmits, to the BS, a PUCCH for a hybrid automatic repeat request (HARQ) feedback of a message 4 (Msg4) or a message B (MsgB) of the random access based on whether the intra-slot PUCCH frequency hopping is enabled and whether the PUCCH sequence group hopping is enabled.

According to various embodiments of the present disclosure, the UE may correspond to a reduced capability UE (redcap UE).

According to various embodiments of the present disclosure, the SIB1 may represent information related to whether the intra-slot PUCCH frequency hopping is enabled and whether the PUCCH sequence group hopping is enabled by a bitmap or a joint coding.

According to various embodiments of the present disclosure, the SIB1 may represent a PUCCH frequency hopping distance.

According to various embodiments of the present disclosure, whether the intra-slot PUCCH frequency hopping is enabled and whether the PUCCH sequence group hopping is enabled may be determined based on the PUCCH frequency hopping distance.

According to various embodiments of the present disclosure, if it is determined that the intra-slot PUCCH frequency hopping is not enabled and the PUCCH sequence group hopping is enabled, the PUCCH sequence group hopping may be performed based on the same timing as when the intra-slot PUCCH frequency hopping has been enabled.

According to various embodiments of the present disclosure, there is provided a user equipment (UE) in a wireless communication system. The UE may include a transceiver and at least one processor, and the at least one processor may be configured to perform the operation method of the UE based on FIG. 18.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 18 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the UE based on FIG. 18.

[Description of BS-related claims]

Below, the above-described embodiments are described in detail from a perspective of an operation of a base station with reference to FIG. 19. Methods to be described below are merely distinguished for convenience of explanation. Thus, as long as the methods are not mutually exclusive, it is obvious that partial configuration of any method can be substituted or combined with partial configuration of another method.

FIG. 19 illustrates an operation process of a base station in a wireless communication system according to an embodiment of the present disclosure.

According to various embodiments of the present disclosure, there is provided a method performed by a base station (BS) in a wireless communication system.

In step S1910, the BS transmits system information block 1 (SIB1) to a user equipment (UE). The SIB1 may separately represent information related to whether an intra-slot frequency hopping (FH) is enabled and information related to whether a time domain orthogonal cover code (OCC) is enabled.

In step S1920, the BS performs a random access on the UE.

In step S1930, the BS receives, from the UE, a physical uplink control channel (PUCCH) for a hybrid automatic repeat request (HARQ) feedback of a message 4 (Msg4) or a message B (MsgB) of the random access based on whether the intra-slot frequency hopping is enabled and whether the time domain OCC is enabled.

According to various embodiments of the present disclosure, the UE may correspond to a reduced capability UE (redcap UE).

According to various embodiments of the present disclosure, the SIB1 may represent the information related to whether the intra-slot frequency hopping is enabled and whether the time domain OCC is enabled by a bitmap or a joint coding.

According to various embodiments of the present disclosure, the SIB1 may represent a PUCCH frequency hopping distance.

According to various embodiments of the present disclosure, whether the intra-slot frequency hopping is enabled and whether the time domain OCC is enabled may be determined based on the PUCCH frequency hopping distance.

According to various embodiments of the present disclosure, if it is determined that the intra-slot frequency hopping is not enabled and the time domain OCC is enabled, the time domain OCC may be applied to the PUCCH based on sequence per hop and a spreading factor when the intra-slot frequency hopping has been enabled.

According to various embodiments of the present disclosure, there is provided a base station (BS) in a wireless communication system. The BS may include a transceiver and at least one processor, and the at least one processor may be configured to perform the operation method of the BS based on FIG. 19.

According to various embodiments of the present disclosure, there is provided a device controlling a base station (BS) in a wireless communication system. The device may include at least one processor and at least one memory operably connected to the at least one processor. The at least one memory may be configured to store instructions performing the operation method of the BS based on FIG. 19 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the BS based on FIG. 19.

[Description of BS-related claims]

Below, the above-described embodiments are described in detail from a perspective of an operation of a base station with reference to FIG. 20. Methods to be described below are merely distinguished for convenience of explanation. Thus, as long as the methods are not mutually exclusive, it is obvious that partial configuration of any method can be substituted or combined with partial configuration of another method.

FIG. 20 illustrates an operation process of a base station in a wireless communication system according to an embodiment of the present disclosure.

According to various embodiments of the present disclosure, there is provided a method performed by a base station (BS) in a wireless communication system.

In step S2010, the BS transmits system information block 1 (SIB1) to a user equipment (UE). The SIB1 may separately represent information related to whether an intra-slot physical uplink control channel (PUCCH) frequency hopping (FH) is enabled and information related to whether a PUCCH sequence group hopping is enabled.

In step S2020, the BS performs a random access on the UE.

In step S2030, the BS receives, from the UE, a PUCCH for a hybrid automatic repeat request (HARQ) feedback of a message 4 (Msg4) or a message B (MsgB) of the random access based on whether the intra-slot PUCCH frequency hopping is enabled and whether the PUCCH sequence group hopping is enabled.

According to various embodiments of the present disclosure, the UE may correspond to a reduced capability UE (redcap UE).

According to various embodiments of the present disclosure, the SIB1 may represent the information related to whether the intra-slot PUCCH frequency hopping is enabled and whether the PUCCH sequence group hopping is enabled by a bitmap or a joint coding.

According to various embodiments of the present disclosure, the SIB1 may represent a PUCCH frequency hopping distance.

According to various embodiments of the present disclosure, whether the intra-slot PUCCH frequency hopping is enabled and whether the PUCCH sequence group hopping is enabled may be determined based on the PUCCH frequency hopping distance.

According to various embodiments of the present disclosure, if it is determined that the intra-slot PUCCH frequency hopping is not enabled and the PUCCH sequence group hopping is enabled, the PUCCH sequence group hopping may be performed based on the same timing as when the intra-slot PUCCH frequency hopping has been enabled.

According to various embodiments of the present disclosure, there is provided a base station (BS) in a wireless communication system. The BS may include a transceiver and at least one processor, and the at least one processor may be configured to perform the operation method of the BS based on FIG. 20.

According to various embodiments of the present disclosure, there is provided a device controlling a base station (BS) in a wireless communication system. The device may include at least one processor and at least one memory operably connected to the at least one processor. The at least one memory may be configured to store instructions performing the operation method of the BS based on FIG. 20 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the BS based on FIG. 20.

Below, devices to which various embodiments of the present disclosure are applicable are described.

Although not limited thereto, various descriptions, functions, procedures, proposals, methods, and/or operation flowcharts described in the present disclosure can be applied to various fields requiring wireless communication/connection between devices.

Below, the devices are described in more detail with reference to drawings. In the following drawings/descriptions, the same reference numerals may denote the same or corresponding hardware blocks, software blocks, or functional blocks, unless otherwise stated.

## Device used in wireless communication system

## Example of communication system to which the present disclosure is applied

Although not limited thereto, various proposals of the present disclosure described above can be applied to various fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 21 illustrates a communication system based on various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communications/connections 150a and 150b may be made between the wireless devices 100a to 100f and the base station 200. The wireless communication/connection may be made through various wireless access technologies (e.g., 5G NR) such as uplink/downlink communication 150a and sidelink communication 150b (or D2D communication). The wireless device and the base station/the wireless device may transmit/receive radio signals to/from each other through wireless communications/connections 150a and 150b. For example, the wireless communications/connections 150a and 150b may transmit/receive signals on various physical channels. To this end, based on various proposals of the present disclosure, at least some of various configuration information setting processes, various signal processing processes (e.g., channel encoding/decoding, modulation/demodulation, resource mapping/de-mapping, etc.), a resource allocation process, etc. for transmission/reception of the radio signals may be performed.

## Example of wireless device to which the present disclosure is applied

FIG. 22 illustrates an example of a wireless device applied to various embodiments of the present disclosure.

Referring to FIG. 22, a first wireless device 100 and a second wireless device 200 may transmit and receive radio signals through various wireless access technologies (e.g., LTE and NR). {The first wireless device 100 and the second wireless device 200} may correspond to {the wireless device 100x and the base station 200} and/or {the wireless device 100x and the wireless device 100x} of FIG. 21.

The first wireless device 100 may include one or more processors 102 and one or more memories 104 and may further include one or more transceivers 106 and/or one or more antennas 108. The processor 102 may control the memory 104 and/or the transceiver 106 and may be configured to implement functions, procedures and/or methods described/proposed above. For example, the processor 102 may process information within the memory 104 to generate first information/signal, and then transmit a radio signal including the first information/signal through the transceiver 106.

Further, the processor 102 may receive a radio signal including second information/signal through the transceiver 106, and then store in the memory 104 information obtained from signal processing of the second information/signal. The memory 104 may be connected to the processor 102 and store various information related to an operation of the processor 102. For example, the memory 104 may store software codes including instructions for performing all or some of processes controlled by the processor 102 or performing procedures and/or methods described/proposed above. The processor 102 and the memory 104 may be a part of a communication modem/circuit/chip designed to implement the wireless communication technology (e.g., LTE and NR). The transceiver 106 may be connected to the processor 102 and may transmit and/or receive the radio signals via one or more antennas 108. The transceiver 106 may include a transmitter and/or a receiver. The transceiver 106 may be used interchangeably with a radio frequency (RF) unit. In various embodiments of the present disclosure, the wireless device may mean the communication modem/circuit/chip.

The second wireless device 200 may include one or more processors 202 and one or more memories 204 and may further include one or more transceivers 206 and/or one or more antennas 208. The processor 202 may control the memory 204 and/or the transceiver 206 and may be configured to implement functions, procedures, and/or methods described/proposed above. For example, the processor 202 may process information within the memory 204 to generate third information/signal and then transmit a radio signal including the third information/signal through the transceiver 206. Further, the processor 202 may receive a radio signal including fourth information/signal through the transceiver 206 and then store in the memory 204 information obtained from signal processing of the fourth information/signal. The memory 204 may be connected to the processor 202 and store various information related to an operation of the processor 202. For example, the memory 204 may store software codes including instructions for performing all or some of processes controlled by the processor 202 or performing procedures and/or methods described/proposed above. The processor 202 and the memory 204 may be a part of a communication modem/circuit/chip designated to implement the wireless communication technology (e.g., LTE and NR). The transceiver 206 may be connected to the processor 202 and may transmit and/or receive the radio signals through one or more antennas 208. The transceiver 206 may include a transmitter and/or a receiver, and the transceiver 206 may be used interchangeably with the RF unit. In various embodiments of the present disclosure, the wireless device may mean the communication modem/circuit/chip.

Hardware elements of the wireless devices 100 and 200 are described in more detail below. Although not limited thereto, one or more protocol layers may be implemented by one or more processors 102 and 202. For example, one or more processors 102 and 202 may implement one or more layers (e.g., functional layers such as PHY, MAC, RLC, PDCP, RRC, and SDAP). One or more processors 102 and 202 may generate one or more protocol data units (PDUs) and/or one or more service data units (SDUs) based on the functions, procedures, proposals and/or methods described in the present disclosure. One or more processors 102 and 202 may generate a message, control information, data, or information based on the functions, procedures, proposals and/or methods described in the present disclosure. One or more processors 102 and 202 may generate a signal (e.g., a baseband signal) including the PDU, the SDU, the message, the control information, the data, or the information based on the functions, procedures, proposals and/or methods described in the present disclosure, and provide the generated signal to one or more transceivers 106 and 206. One or more processors 102 and 202 may receive the signal (e.g., baseband signal) from one or more transceivers 106 and 206 and acquire the PDU, the SDU, the message, the control information, the data, or the information based on the functions, procedures, proposals, and/or methods described in the present disclosure.

One or more processors 102 and 202 may be referred to as a controller, a microcontroller, a microprocessor, or a microcomputer. One or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in one or more processors 102 and 202. The functions, procedures, proposals and/or methods described in the present disclosure may be implemented using firmware or software, and the firmware or software may be implemented to include modules, procedures, functions, and the like. Firmware or software configured to perform the functions, procedures, proposals, and/or methods described in the present disclosure may be included in one or more processors 102 and 202 or stored in one or more memories 104 and 204 and may be executed by one or more processors 102 and 202. The functions, procedures, proposals, and/or methods described in the present disclosure may be implemented using firmware or software in the form of codes, instructions and/or a set form of instructions.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Example of signal processing circuit to which the present disclosure is applied

FIG. 23 illustrates a signal processing circuit for a transmission signal based on an embodiment of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. X2. For example, the wireless devices (e.g., 100 and 200 of FIG. X1) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

**Utilization example** of wireless **device to which the present disclosure is applied**

FIG. 24 illustrates another example of a wireless device based on an embodiment of the present disclosure. The wireless device may be implemented in various forms based on a usecase/service (refer to FIG. 21, FIGS. 25-29).

Referring to FIG. 24, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place based on a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 illustrates a mobile device based on an embodiment of the present disclosure. The hand-held device may include a smartphone, a smartpad, a wearable device (e.g., a smartwatch or a smartglasses), or a portable computer (e.g., a notebook). The mobile device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

## Example of mobile device to which the present disclosure is applied

FIG. 25 illustrates a mobile device based on an embodiment of the present disclosure. The hand-held device may include a smartphone, a smartpad, a wearable device (e.g., a smartwatch or a smartglasses), or a portable computer (e.g., a notebook). The mobile device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

## Example of vehicle or autonomous vehicle to which the present disclosure is applied

FIG. 26 illustrates a vehicle or an autonomous vehicle based on an embodiment of the present disclosure. The vehicle or autonomous vehicle may be implemented by a mobile robot, a car, a train, a manned/unmanned Aerial Vehicle (AV), a ship, etc.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path based on the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

## Example of AR/VR and vehicle to which the present disclosure is applied

FIG. 27 illustrates an example of a vehicle applied to various embodiments of the present disclosure. The vehicle may be implemented as a transport means, a train, an aerial vehicle, a ship, etc.

Referring to FIG. 27, a vehicle 100 may include a communication unit 110, a control unit 120, a memory unit 130, an I/O unit 140a, and a positioning unit 140b. The blocks 110 to 130/140a and 140b correspond to blocks 110 to 130/140 of FIG. 24, respectively.

The communication unit 110 may transmit and receive signals (e.g., data and control signals) to and from external devices such as other vehicles or base stations. The control unit 120 may perform various operations by controlling components of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire location information of the vehicle 100. The location information may include absolute location information of the vehicle 100, location information of the vehicle 100 within a traveling lane, acceleration information, and location information of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain vehicle location information through the GPS and the various sensors and store the obtained information in the memory unit 130. The control unit 120 may generate a virtual object based on the map information, the traffic information, and the vehicle location information, and the I/O unit 140a may display the generated virtual object on a window in the vehicle (1410 and 1420). The control unit 120 may determine whether the vehicle 100 normally drives within a traveling lane, based on the vehicle location information. If the vehicle 100 abnormally exits from the traveling lane, the control unit 120 may display a warning on the window in the vehicle through the I/O unit 140a. In addition, the control unit 120 may broadcast a warning message about driving abnormity to neighboring vehicles through the communication unit 110. According to situation, the control unit 120 may transmit the location information of the vehicle and the information about driving/vehicle abnormality to related organizations through the communication unit 110.

## Example of XR device to which the present disclosure is applied

FIG. 28 illustrates an example of a XR device applied to various embodiments of the present disclosure. The XR device may be implemented as an HMD, a head-up display (HUD) mounted in a vehicle, a television, a smartphone, a computer, a wearable device, a home appliance, a digital signage, a vehicle, a robot, etc.

Referring to FIG. 28, an XR device 100a may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 24, respectively.

The communication unit 110 may transmit and receive signals (e.g., media data, control signal, etc.) to and from external devices such as other wireless devices, handheld devices, or media servers. The media data may include video, images, sound, etc. The control unit 120 may control components of the XR device 100a to perform various operations. For example, the control unit 120 may be configured to control and/or perform procedures such as video/image acquisition, (video/image) encoding, and metadata generation and processing. The memory unit 120 may store data/parameters/programs/codes/commands required to drive the XR device 100a/generate an XR object. The I/O unit 140a may obtain control information, data, etc. from the outside and output the generated XR object. The I/O unit 140a may include a camera, a microphone, a user input unit, a display, a speaker, and/or a haptic module. The sensor unit 140b may obtain a state, surrounding environment information, user information, etc. of the XR device 100a. The sensor 140b may include a proximity sensor, an illumination sensor, an acceleration sensor, a magnetic sensor, a gyro sensor, an inertial sensor, an RGB sensor, an IR sensor, a fingerprint scan sensor, an ultrasonic sensor, a light sensor, a microphone, and/or a radar. The power supply unit 140c may supply power to the XR device 100a and include a wired/wireless charging circuit, a battery, etc.

For example, the memory unit 130 of the XR device 100a may include information (e.g., data) required to generate the XR object (e.g., an AR/VR/MR object). The I/O unit 140a may obtain, from a user, a command for manipulating the XR device 100a, and the control unit 120 may drive the XR device 100a based on a driving command of the user. For example, if the user desires to watch a film, news, etc. through the XR device 100a, the control unit 120 may transmit content request information to another device (e.g., a handheld device 100b) or a media server through the communication unit 110. The communication unit 110 may download/stream content such as films and news from another device (e.g., the handheld device 100b) or the media server to the memory unit 130. The control unit 120 may control and/or perform procedures, such as video/image acquisition, (video/image) encoding, and metadata generation/processing, for the content and generate/output the XR object based on information about a surrounding space or a real object obtained through the I/O unit 140a/sensor unit 140b.

The XR device 100a may be wirelessly connected to the handheld device 100b through the communication unit 110, and the operation of the XR device 100a may be controlled by the handheld device 100b. For example, the handheld device 100b may operate as a controller of the XR device 100a. To this end, the XR device 100a may obtain 3D location information of the handheld device 100b and generate and output an XR object corresponding to the handheld device 100b.

**Example of robot to which the present disclosure is applied**

FIG. 29 illustrates an example of a robot applied to various embodiments of the present disclosure. The robot may be categorized into an industrial robot, a medical robot, a household robot, a military robot, etc., based on a used purpose or field.

Referring to FIG. 29, a robot 100 may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 24, respectively.

The communication unit 110 may transmit and receive signals (e.g., driving information and control signals) to and from external devices such as other wireless devices, other robots, or control servers. The control unit 120 may perform various operations by controlling components of the robot 100. The memory unit 130 may store data/parameters/programs/code/commands for supporting various functions of the robot 100. The I/O unit 140a may obtain information from the outside of the robot 100 and output information to the outside of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may allow the robot 100 to travel on the road or to fly. The driving unit 140c may include an actuator, a motor, a wheel, a brake, a propeller, etc.

**Example of AI device to which the present disclosure is applied**

FIG. 30 illustrates an example of an AI device applied to various embodiments of the present disclosure. The AI device may be implemented as a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 30, an AI device 100 may include a communication unit 110, a control unit 120, a memory unit 130, an input unit 140a, an out unit 140b, a learning processor unit 140c, and a sensor unit 140d. The blocks 110 to 130/140a to 140d correspond to the blocks 110 to 130/140 of FIG. 24, respectively.

The communication unit 110 may transmit and receive wired/radio signals (e.g., sensor information, user input, learning models, or control signals) to and from external devices such as other AI devices (e.g., 100x, 200, or 400 of FIG. 21) or an AI server (e.g., 400 of FIG. 21) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling components of the AI device 100. For example, the control unit 120 may request, search, receive, or use data of the learning processor unit 140c or the memory unit 130 and control the components of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 21). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 21). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

When embodiments are implemented by firmware or software, one embodiment of the present disclosure can be implemented by modules, procedures, functions, etc. performing the functions or operations described above. Software code can be stored in a memory unit and can be driven by a processor. The memory unit is provided inside or outside the processor and can exchange data with the processor by various well-known means.

Although the present disclosure has described embodiments of the present disclosure using the LTE system, the LTE-A system, and the NR system, this is merely an example, and embodiments of the present disclosure can be applied to any communication system corresponding to the above definition.

In the present disclosure, specific operations described to be performed by the base station may be performed by an upper node of the base station in some cases. That is, in a network consisting of a plurality of network nodes including the base station, it is obvious that various operations performed for communication with the UE can be performed by the base station or network nodes other than the base station. The base station (BS) may be replaced with terms such as a fixed station, Node B, eNode B (eNB), and an access point, and the name of the base station can be used as a comprehensive term including a remote radio head (RRH), eNB, a transmission point (TP), a reception point (RP), a relay, etc.

Claims disclosed in the present disclosure may be combined in various ways. For example, technical features of method claims of the present disclosure may be combined and implemented as a device, and technical features of device claims of the present disclosure may be combined and implemented as a method. Further, the technical features of method claims and the technical features of device claims in the present disclosure may be combined and implemented as a device, and the technical features of method claims and the technical features of device claims in the present disclosure may be combined and implemented as a method.

## Claims

**1.** A method performed by a user equipment, UE, in a wireless communication system, the method comprising:

receiving (S1710) system information block 1, SIB1, from a base station, BS;
separately determining (S1720), based on the SIB1, whether an intra-slot frequency hopping, FH, is enabled and whether a time domain orthogonal cover code, OCC, is enabled;
performing (S1730) a random access on the BS; and
transmitting (S1740), to the BS, a physical uplink control channel, PUCCH, for a hybrid automatic repeat request, HARQ, feedback of a message 4, Msg4, or a message B, MsgB, of the random access based on whether the intra-slot frequency hopping is enabled and whether the time domain OCC is enabled,
wherein the SIB1 represents a PUCCH frequency hopping distance, and
wherein whether the intra-slot frequency hopping is enabled and whether the time domain OCC is enabled are determined based on the PUCCH frequency hopping distance.

**2.** The method of claim 1, wherein the UE is related to a reduced capability UE, redcap UE.

**3.** The method of claim 1, wherein the SIB1 represents information related to whether the intra-slot frequency hopping is enabled and whether the time domain OCC is enabled by a bitmap or a joint coding.

**4.** The method of claim 1, wherein, based on it being determined that the intra-slot frequency hopping is not enabled and the time domain OCC is enabled, the time domain OCC is applied to the PUCCH based on sequence per hop and a spreading factor when the intra-slot frequency hopping has been enabled.

**5.** A method performed by a base station, BS, in a wireless communication system, the method comprising:

transmitting (S1910) system information block 1, SIB1, to a user equipment, UE, the SIB 1 separately representing information related to whether an intra-slot frequency hopping, FH, is enabled and information related to whether a time domain orthogonal cover code, OCC, is enabled;
performing (S1920) a random access on the UE; and
receiving (S1930), from the UE, a physical uplink control channel, PUCCH, for a hybrid automatic repeat request, HARQ, feedback of a message 4, Msg4, or a message B, MsgB, of the random access based on whether the intra-slot frequency hopping is enabled and whether the time domain OCC is enabled,
wherein the SIB1 represents a PUCCH frequency hopping distance, and
wherein whether the intra-slot frequency hopping is enabled and whether the time domain OCC is enabled are determined based on the PUCCH frequency hopping distance.

**6.** The method of claim 5, wherein the UE is related to a reduced capability UE, redcap UE.

**7.** The method of claim 5, wherein the SIB1 represents the information related to whether the intra-slot frequency hopping is enabled and whether the time domain OCC is enabled by a bitmap or a joint coding.

**8.** The method of claim 5, wherein, based on it being determined that the intra-slot frequency hopping is not enabled and the time domain OCC is enabled, the time domain OCC is applied to the PUCCH based on sequence per hop and a spreading factor when the intra-slot frequency hopping has been enabled.

## Patentansprüche

**1.** Verfahren, das durch ein Benutzergerät, UE, in einem Drahtloskommunikationssystem durchgeführt wird, wobei das Verfahren umfasst:

Empfangen (S1710) eines Systeminformationsblocks 1, SIB1, von einer Basisstation, BS;
getrenntes Bestimmen (S1720), basierend auf dem SIB1, ob ein Intra-Schlitz-Frequenzspringen, Intra-Schlitz-FH, aktiviert ist und ob ein orthogonaler Abdeckungscode, OCC, im Zeitbereich aktiviert ist;
Durchführen (S1730) eines Direktzugriffs auf der BS und Übertragen (S1740), an die BS, eines physischen Uplink-Steuerkanals, PUCCH, für eine Rückmeldung einer hybriden automatischen Wiederholungsanforderung, HARQ, einer Nachricht 4, Nachr4, oder einer Nachricht B, NachrB, des Direktzugriffs basierend darauf, ob das Intra-Schlitz-Frequenzspringen aktiviert ist und ob der Zeitbereichs-OCC aktiviert ist,
wobei der SIB1 eine Distanz eines PUCCH-Frequenzspringens darstellt und
wobei der Umstand, ob das Intra-Schlitz-Frequenzspringen aktiviert ist und ob der Zeitbereichs-OCC aktiviert ist, basierend auf der Distanz eines PUCCH-Frequenzspringens bestimmt wird.

**2.** Verfahren nach Anspruch 1, wobei sich das UE auf ein UE mit reduzierter Kapazität, RedKap-UE, bezieht.

**3.** Verfahren nach Anspruch 1, wobei der SIB1 Informationen, die sich darauf beziehen, ob das Intra-Schlitz-Frequenzspringen aktiviert ist und ob der Zeitbereichs-OCC aktiviert ist, durch eine Bitmap oder eine gemeinsame Codierung darstellt.

4. Verfahren nach Anspruch 1, wobei basierend darauf, dass bestimmt wird, dass das Intra-Schlitz-Frequenzspringen nicht aktiviert ist und der Zeitbereichs-OCC aktiviert ist, der Zeitbereichs-OCC basierend auf einer Sequenz pro Sprung und einem Spreizfaktor auf den PUCCH angewendet wird, wenn das Intra-Schlitz-Frequenzspringen aktiviert wurde.

5. Verfahren, das durch eine Basisstation, BS, in einem Drahtloskommunikationssystem durchgeführt wird, wobei das Verfahren umfasst:

Übertragen (S1910) des Systeminformationsblocks 1, SIB1, an ein Benutzergerät, UE, wobei der SIB1 Informationen, die sich darauf beziehen, ob ein Intra-Schlitz-Frequenzspringen, Intra-Schlitz-FH, aktiviert ist, und Informationen, die sich darauf beziehen, ob ein orthogonaler Abdeckungscode, OCC, im Zeitbereich aktiviert ist, getrennt darstellt;
Durchführen (S1920) eines Direktzugriffs auf das UE und Empfangen (S1930), vom UE, eines physischen Uplink-Steuerkanals, PUCCH, für eine Rückmeldung einer hybriden automatischen Wiederholungsanforderung, HARQ, einer Nachricht 4, Nachr4, oder einer Nachricht B, NachrB, des Direktzugriffs basierend darauf, ob das Intra-Schlitz-Frequenzspringen aktiviert ist und ob der Zeitbereichs-OCC aktiviert ist,
wobei der SIB1 eine Distanz eines PUCCH-Frequenzspringens darstellt und
wobei der Umstand, ob das Intra-Schlitz-Frequenzspringen aktiviert ist und ob der Zeitbereichs-OCC aktiviert ist, basierend auf der Distanz eines PUCCH-Frequenzspringens bestimmt wird.

6. Verfahren nach Anspruch 5, wobei sich das UE auf ein UE mit reduzierter Kapazität, RedKap-UE, bezieht.

7. Verfahren nach Anspruch 5, wobei der SIB1 die Informationen, die sich darauf beziehen, ob das Intra-Schlitz-Frequenzspringen aktiviert ist und ob der Zeitbereichs-OCC aktiviert ist, durch eine Bitmap oder eine gemeinsame Codierung darstellt.

8. Verfahren nach Anspruch 5, wobei basierend darauf, dass bestimmt wird, dass das Intra-Schlitz-Frequenzspringen nicht aktiviert ist und der Zeitbereichs-OCC aktiviert ist, der Zeitbereichs-OCC basierend auf einer Sequenz pro Sprung und einem Spreizfaktor auf den PUCCH angewendet wird, wenn das Intra-Schlitz-Frequenzspringen aktiviert wurde.

**Revendications**

1. Procédé exécuté par un équipement utilisateur, UE, dans un système de communication sans fil, le procédé comprenant les étapes suivantes :

la réception (S1710) d'un bloc d'informations système 1, SIB1, en provenance d'une station de base, BS ;
la détermination séparée (S1720), sur la base du SIB1, de si un saut de fréquence entre créneaux, FH, est activé ou non et si un code de couverture orthogonale dans le domaine temporel, OCC, est activé ou non ;
l'exécution (S1730) d'un accès aléatoire sur la BS ; et la transmission (S1740), à la BS, d'un canal physique de commande de liaison montante, PUCCH, pour une requête de répétition automatique hybride, HARQ, la rétroaction d'un message 4, Msg4, ou d'un message B, MsgB, de l'accès aléatoire selon que le saut de fréquence entre créneaux est activé ou non et que l'OCC de domaine temporel est activé ou non,
dans lequel le SIB1 représente une distance de saut de fréquence PUCCH, et
dans lequel il est déterminé si le saut de fréquence entre créneaux est activé et si l'OCC de domaine temporel est activé sur la base de la distance de saut de fréquence PUCCH.

2. Procédé selon la revendication 1, dans lequel l'UE est lié à un UE à capacité réduite, redcap UE.

3. Procédé selon la revendication 1, dans lequel le SIB1 représente des informations relatives au fait que le saut de fréquence entre créneaux est activé ou non et que l'OCC de domaine temporel est activé ou non au moyen d'une table de bits ou un codage conjoint.

4. Procédé selon la revendication 1, dans lequel, sur la base de la détermination que le saut de fréquence entre créneaux n'est pas activé et que l'OCC de domaine temporel est activé, l'OCC de domaine temporel est appliqué au PUCCH sur la base d'une séquence par saut et d'un facteur d'étalement lorsque le saut de fréquence entre créneaux a été activé.

**5.** Procédé exécuté par une station de base dans un système de communication sans fil, le procédé comprenant :

la transmission (S1910) d'un bloc d'informations système 1, SIB1, à un équipement utilisateur, UE, le SIB1 représentant séparément des informations relatives à l'activation ou non d'un saut de fréquence entre créneaux, FH, et des informations relatives à l'activation ou non d'un code de couverture orthogonale dans le domaine temporel, OCC ;
l'exécution (S1920) d'un accès aléatoire sur l'UE ; et
la réception (S1930), depuis l'UE, d'un canal physique de commande de liaison montante, PUCCH, pour une requête de répétition automatique hybride, HARQ, la rétroaction d'un message 4, Msg4, ou d'un message B, MsgB, de l'accès aléatoire selon que le saut de fréquence entre créneaux est activé ou non et que l'OCC de domaine temporel est activé ou non,
dans lequel le SIB1 représente une distance de saut de fréquence PUCCH, et
dans lequel il est déterminé si le saut de fréquence entre créneaux est activé et si l'OCC de domaine temporel est activé sur la base de la distance de saut de fréquence PUCCH.

**6.** Procédé selon la revendication 5, dans lequel l'UE est lié à un UE à capacité réduite, redcap UE.

**7.** Procédé selon la revendication 5, dans lequel le SIB1 représente les informations relatives au fait que le saut de fréquence entre créneaux est activé ou non et que l'OCC de domaine temporel est activé par une table de bits ou un codage conjoint.

**8.** Procédé selon la revendication 5, dans lequel, sur la base de la détermination que le saut de fréquence entre créneaux n'est pas activé et que l'OCC de domaine temporel est activé, l'OCC de domaine temporel est appliqué au PUCCH sur la base d'une séquence par saut et d'un facteur d'étalement lorsque le saut de fréquence entre créneaux a été activé.

【FIG. 1】

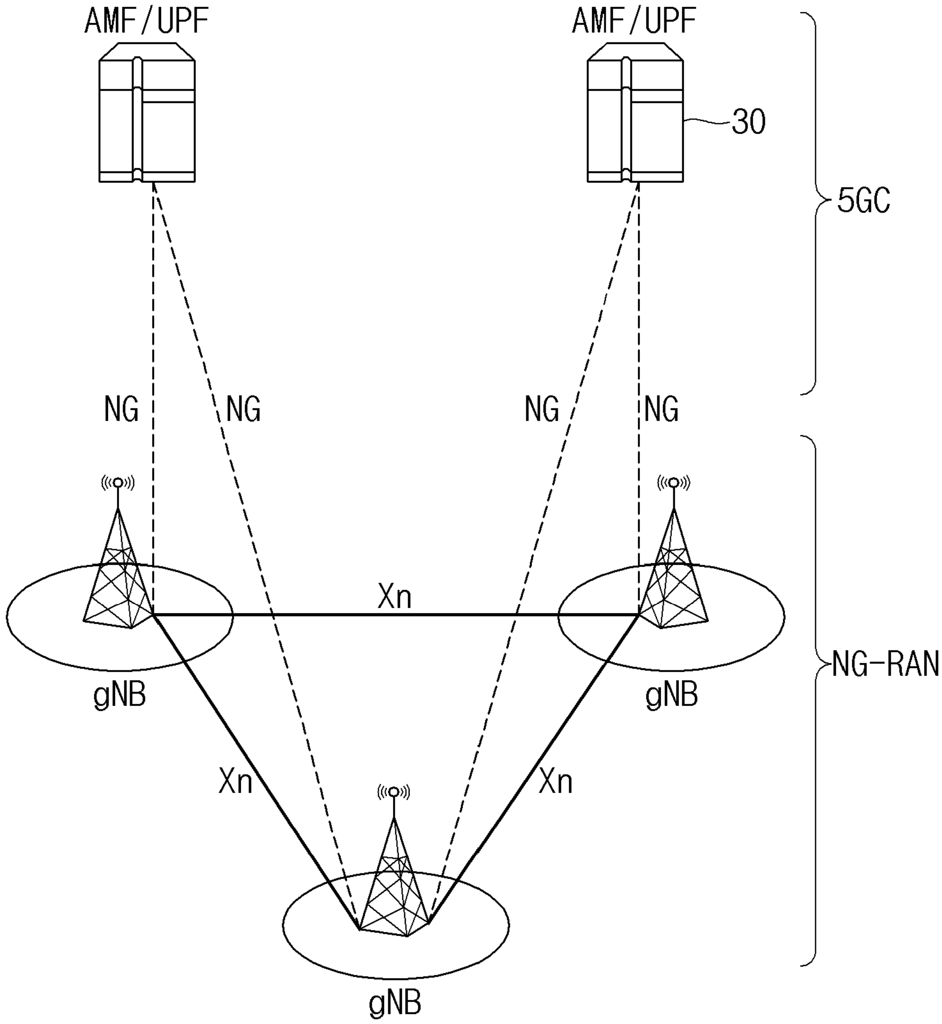

【FIG. 2】

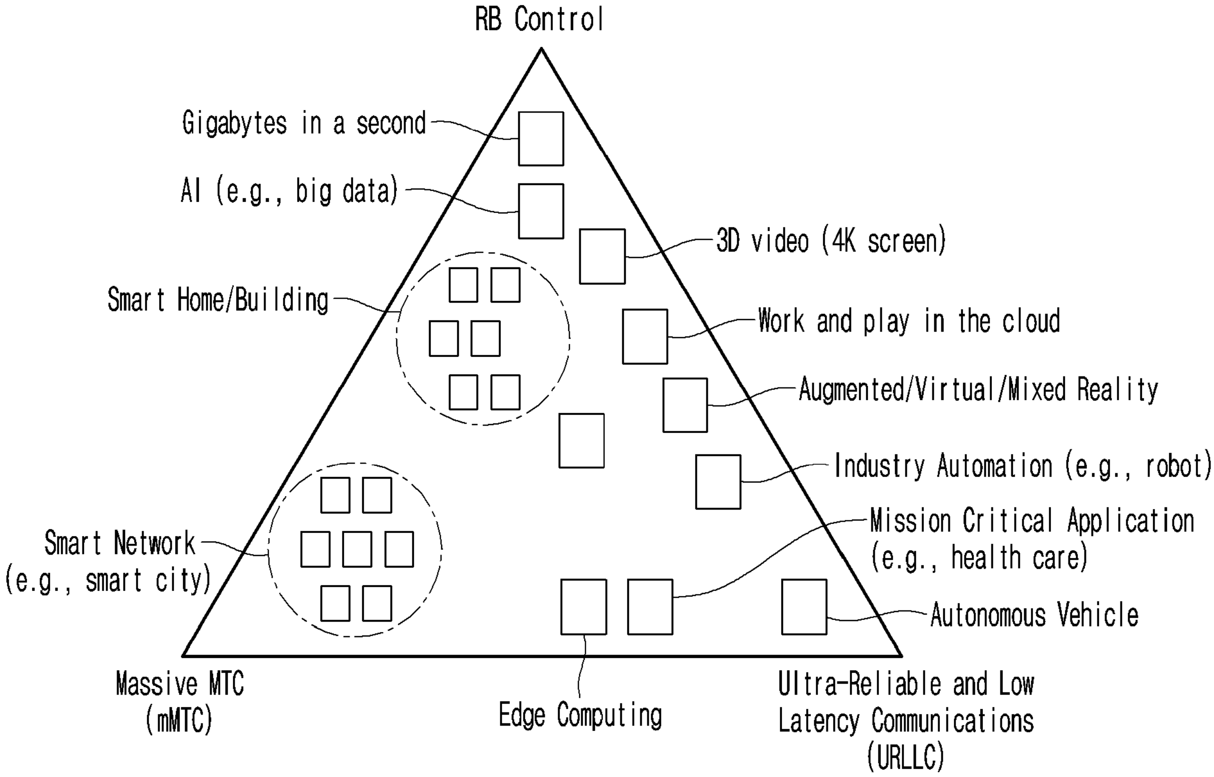
RB Control
Gigabytes in a second
AI (e.g., big data)
3D video (4K screen)
Smart Home/Building
Work and play in the cloud
Augmented/Virtual/Mixed Reality
Industry Automation (e.g., robot)
Mission Critical Application
(e.g., health care)
Smart Network
(e.g., smart city)
Autonomous Vehicle
Massive MTC
(mMTC)
Edge Computing
Ultra-Reliable and Low
Latency Communications
(URLLC)

【FIG. 3】

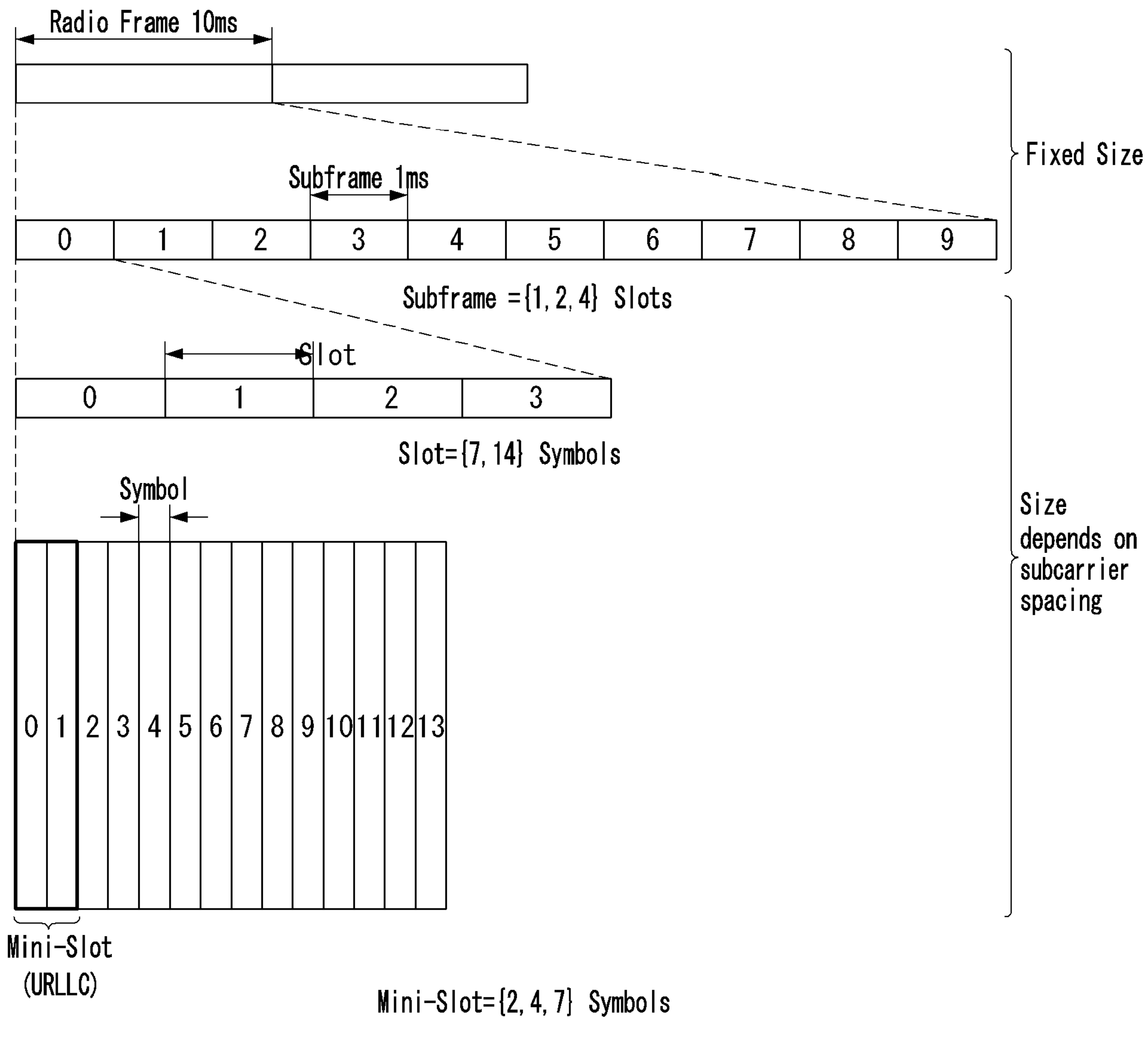
Radio Frame 10ms
Fixed Size
Subframe 1ms
0 1 2 3 4 5 6 7 8 9
Subframe ={1,2,4} Slots
Slot
0 1 2 3
Slot={7,14} Symbols
Symbol
Size depends on subcarrier spacing
0 1 2 3 4 5 6 7 8 9 10 11 12 13
Mini-Slot (URLLC)
Mini-Slot={2,4,7} Symbols

【FIG. 4】

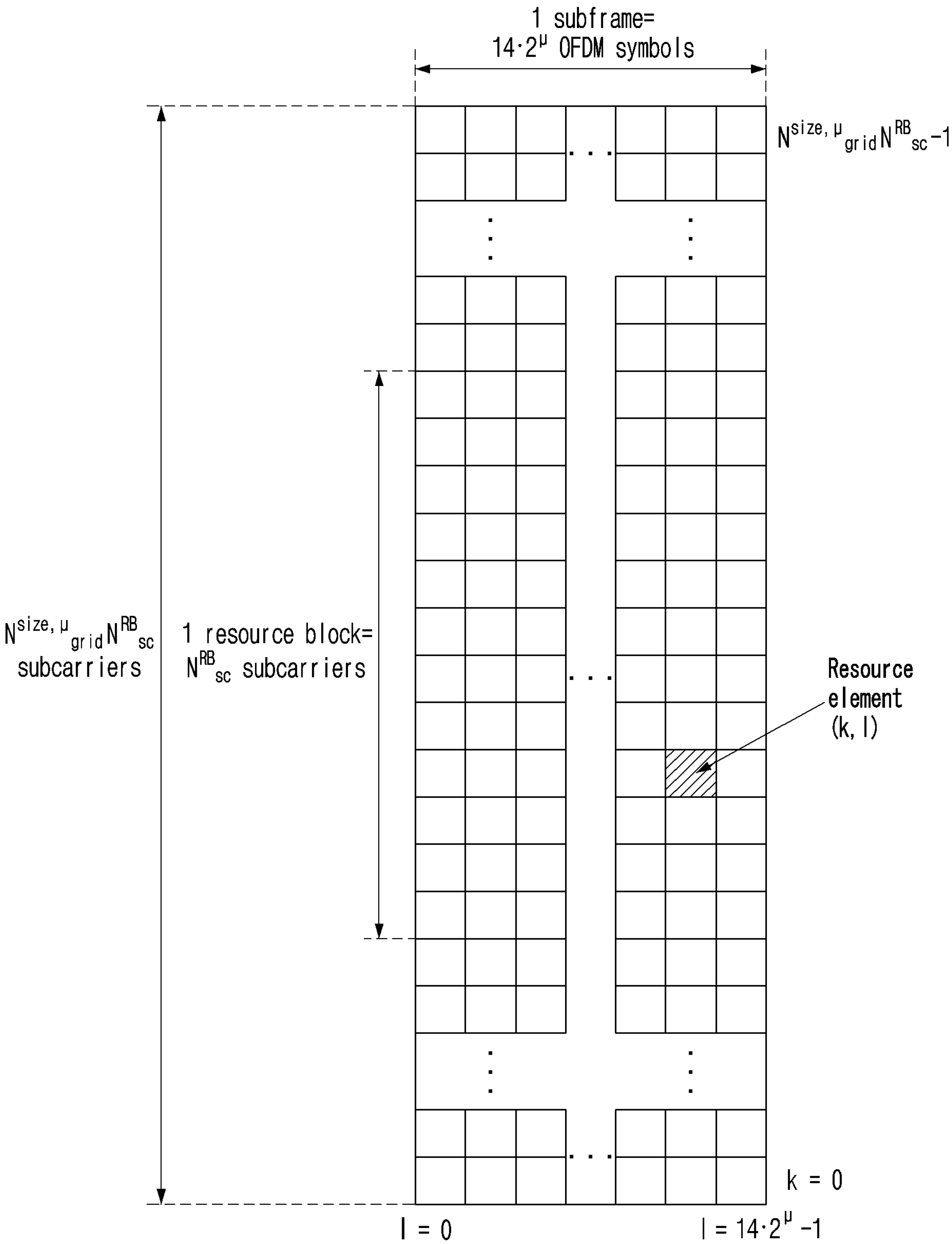
1 subframe=
14·2^μ OFDM symbols
N^size,μ_grid N^RB_sc −1
N^size,μ_grid N^RB_sc
subcarriers
1 resource block=
N^RB_sc subcarriers
Resource
element
(k, l)
k = 0
l = 0
l = 14·2^μ −1

【FIG. 5】

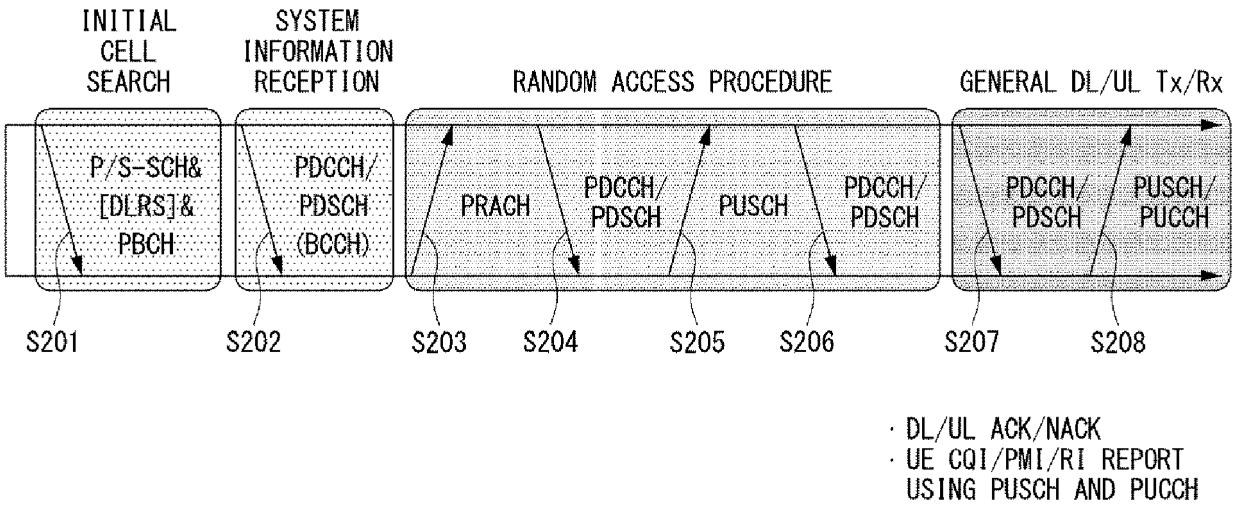
INITIAL CELL SEARCH
SYSTEM INFORMATION RECEPTION
RANDOM ACCESS PROCEDURE
GENERAL DL/UL Tx/Rx
P/S-SCH& [DLRS]& PBCH
PDCCH/ PDSCH (BCCH)
PRACH
PDCCH/ PDSCH
PUSCH
PDCCH/ PDSCH
PDCCH/ PDSCH
PUSCH/ PUCCH
S201
S202
S203
S204
S205
S206
S207
S208
· DL/UL ACK/NACK
· UE CQI/PMI/RI REPORT USING PUSCH AND PUCCH

【FIG. 6】

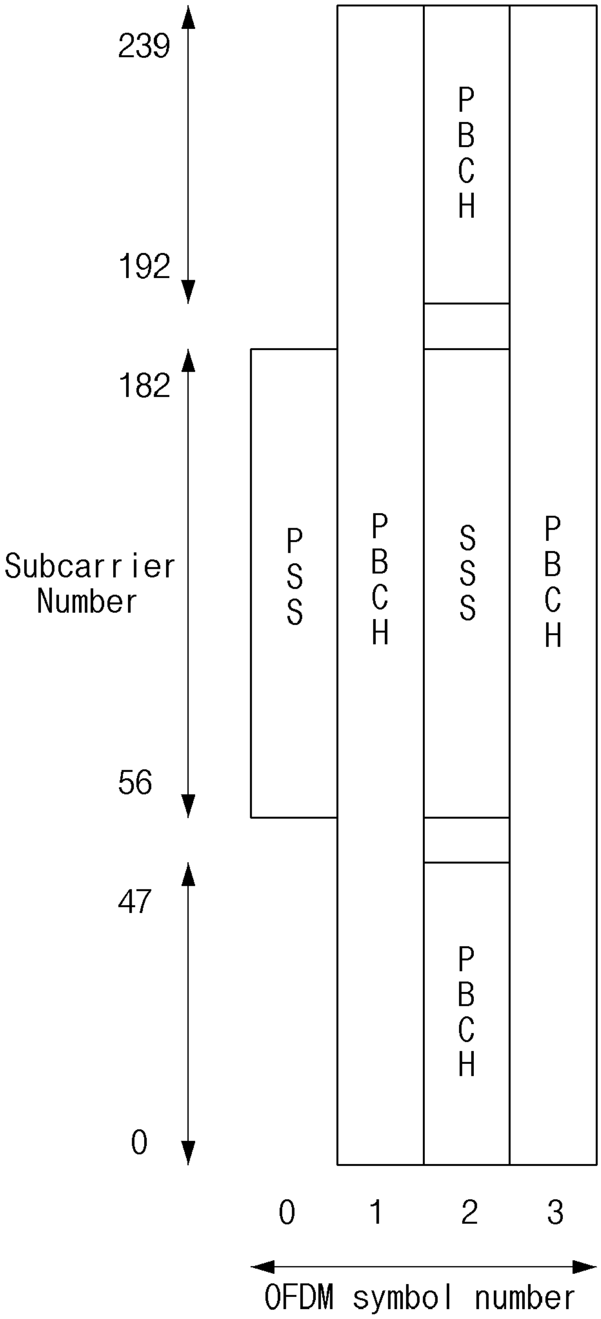
239
192
182
Subcarrier Number
56
47
0
PSS
PBCH
PBCH
SSS
PBCH
PBCH
0
1
2
3
OFDM symbol number

【FIG. 7】

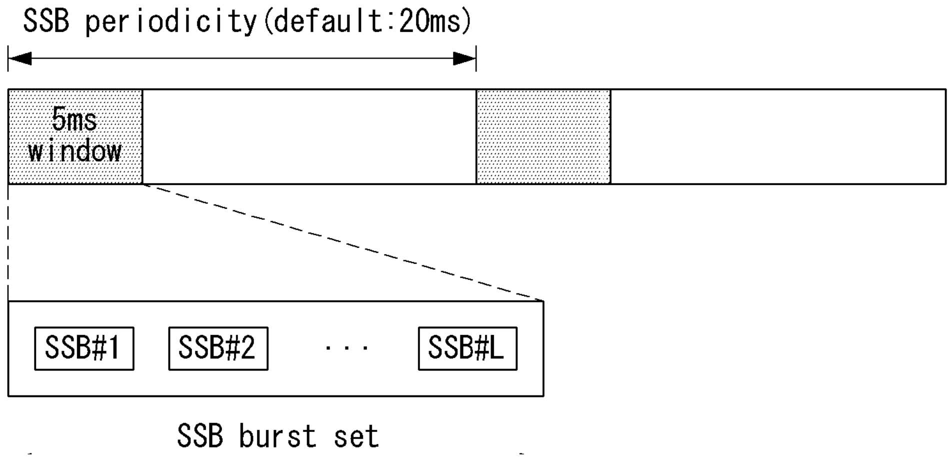
SSB periodicity(default:20ms)
5ms
window
SSB#1
SSB#2
...
SSB#L
SSB burst set

【FIG. 8】

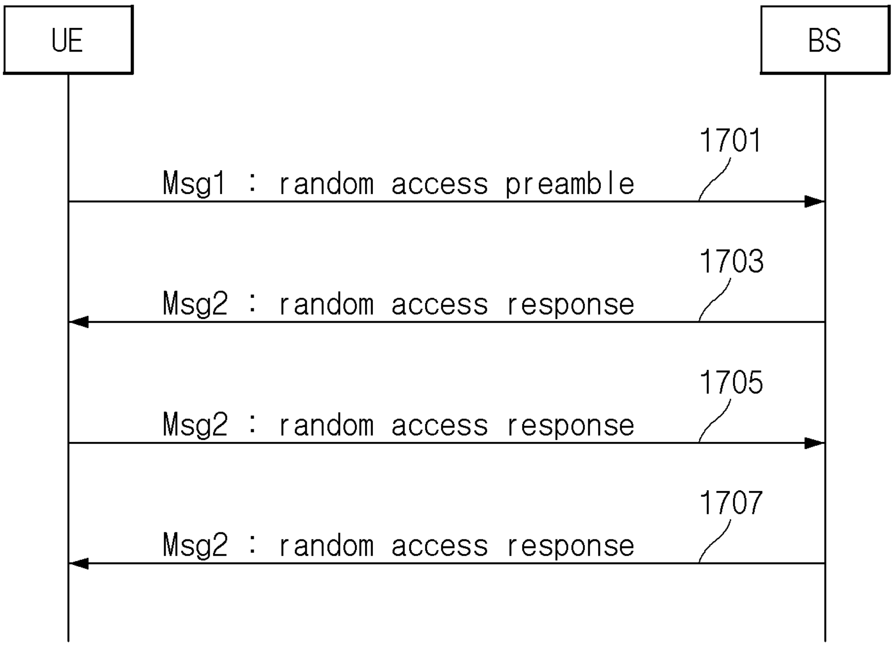
UE
BS
1701
Msg1 : random access preamble
1703
Msg2 : random access response
1705
Msg2 : random access response
1707
Msg2 : random access response

(a)

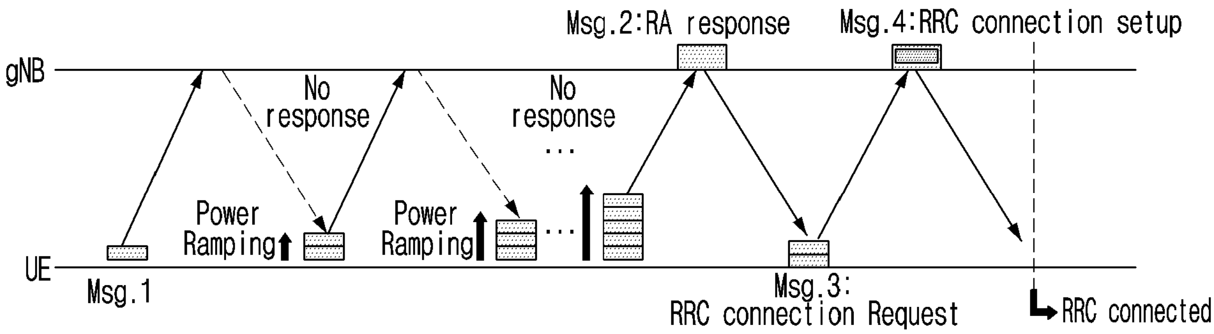
Msg.2:RA response
Msg.4:RRC connection setup
gNB
No response
No response
...
Power Ramping
Power Ramping
...
UE
Msg.1
Msg.3: RRC connection Request
RRC connected

(b)

【FIG. 9】

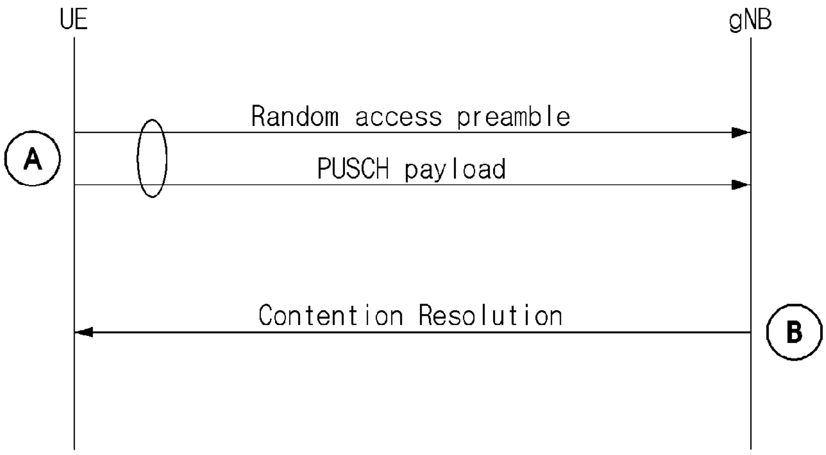


(1) CBRA with 2-step RA type

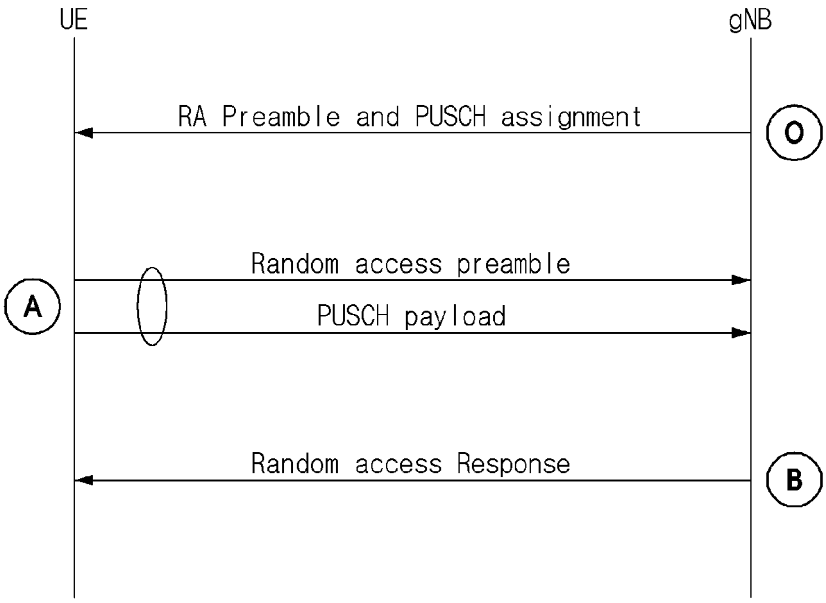


(2) CFRA with 2-step RA type

【FIG. 10】

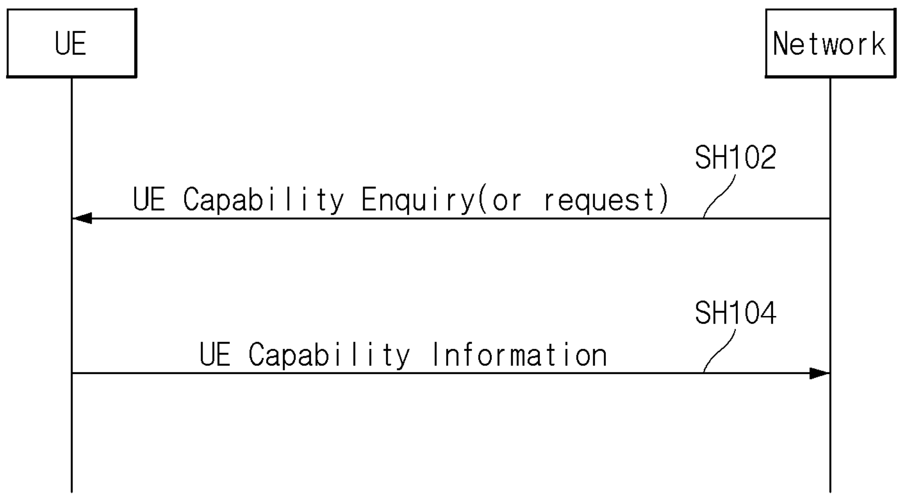
UE
Network
SH102
UE Capability Enquiry(or request)
SH104
UE Capability Information

【FIG. 11】

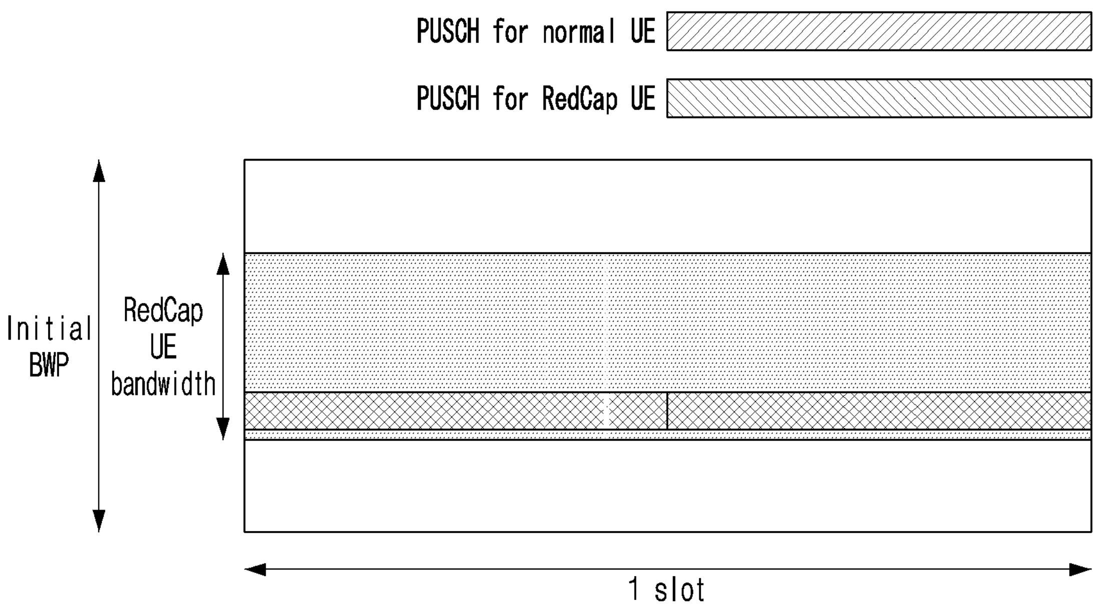
PUSCH for normal UE
PUSCH for RedCap UE
Initial BWP
RedCap UE bandwidth
1 slot

【FIG. 12】

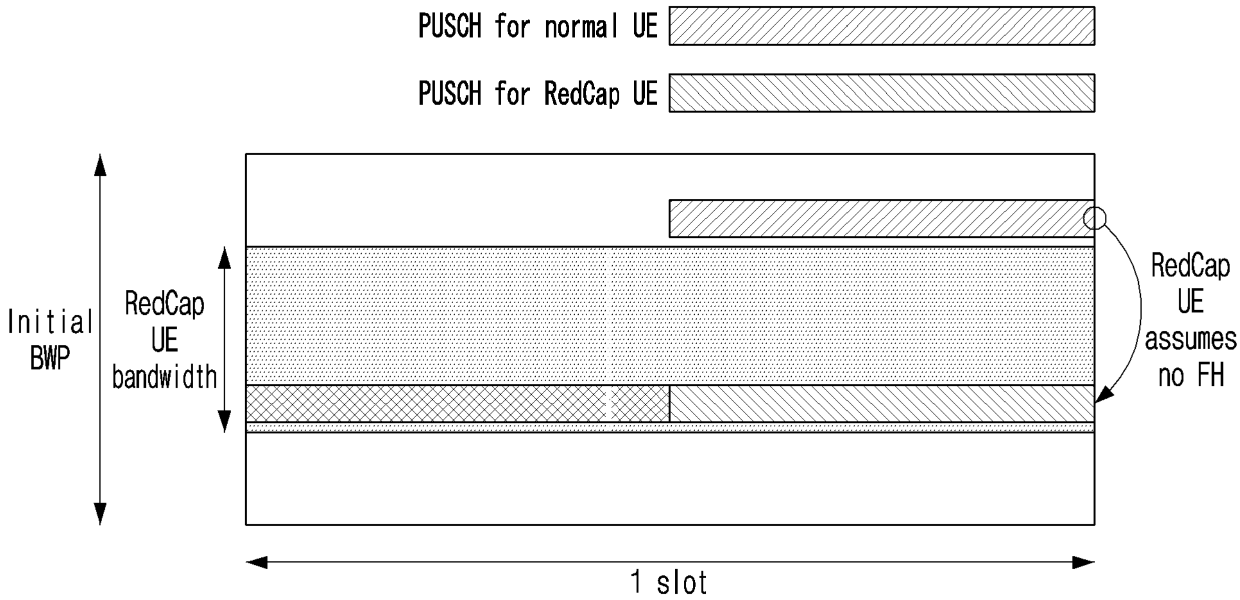
PUSCH for normal UE
PUSCH for RedCap UE
Initial BWP
RedCap UE bandwidth
RedCap UE assumes no FH
1 slot

【FIG. 13】

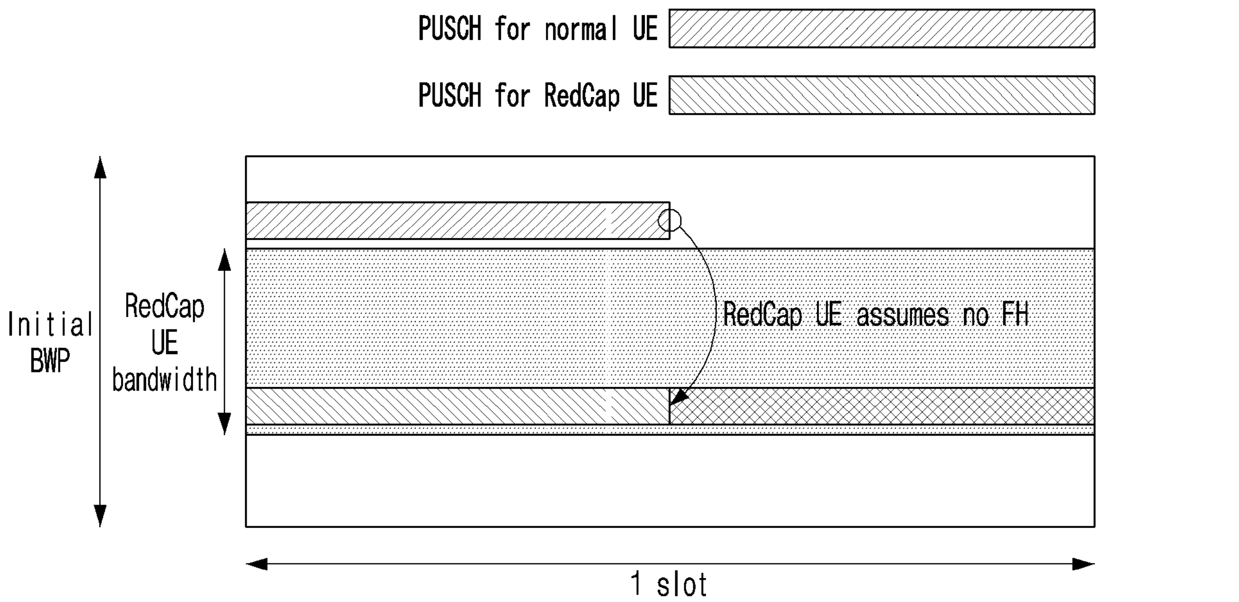
PUSCH for normal UE
PUSCH for RedCap UE
Initial BWP
RedCap UE bandwidth
RedCap UE assumes no FH
1 slot

【FIG. 14】

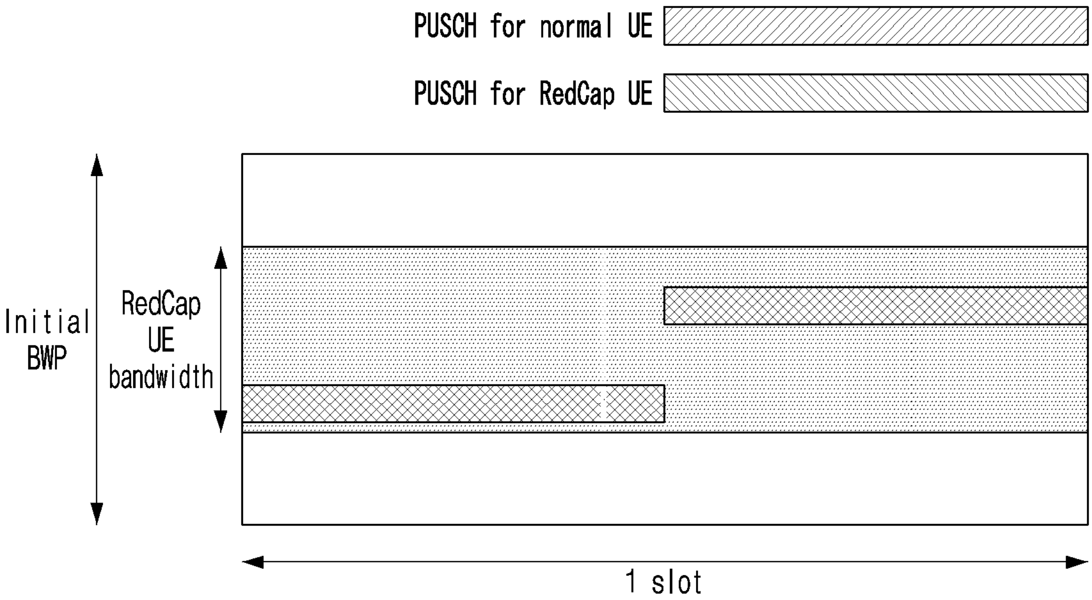
PUSCH for normal UE
PUSCH for RedCap UE
Initial BWP
RedCap UE bandwidth
1 slot

【FIG. 15】

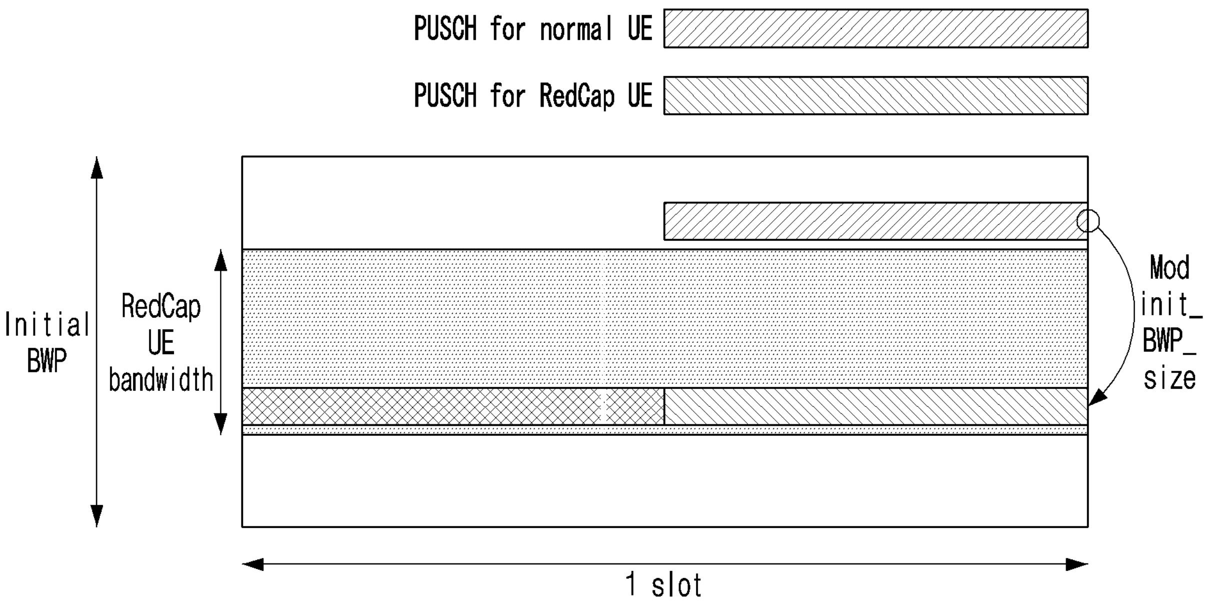
PUSCH for normal UE
PUSCH for RedCap UE
Initial BWP
RedCap UE bandwidth
Mod init_ BWP_ size
1 slot

【FIG. 16】

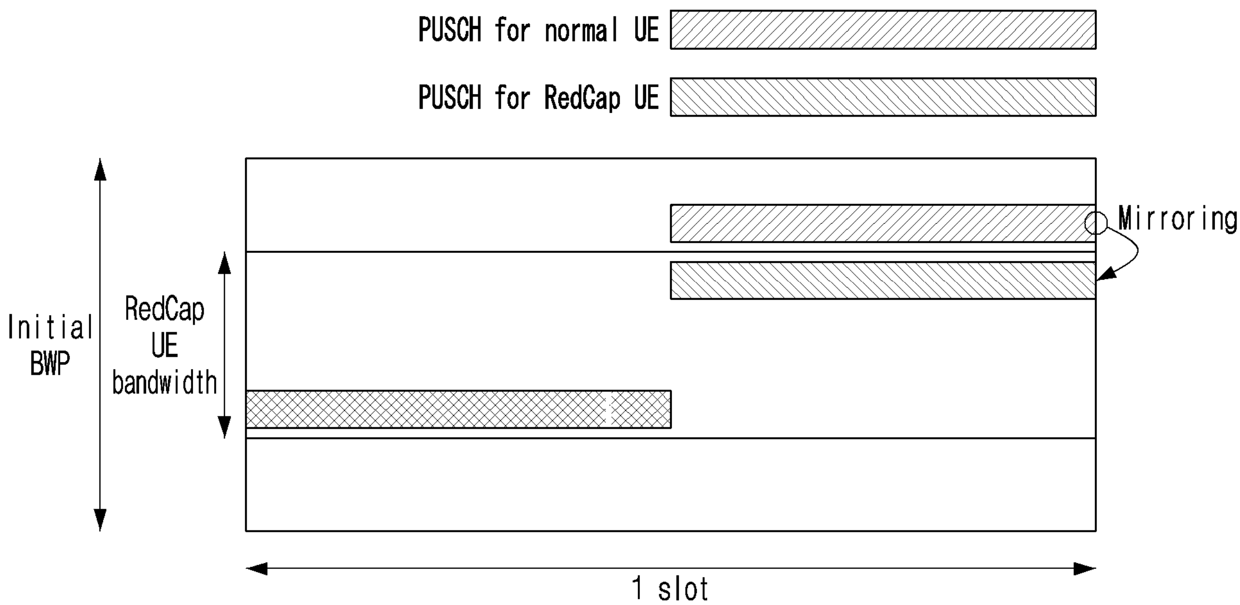
PUSCH for normal UE
PUSCH for RedCap UE
Mirroring
Initial BWP
RedCap UE bandwidth
1 slot

【FIG. 17】

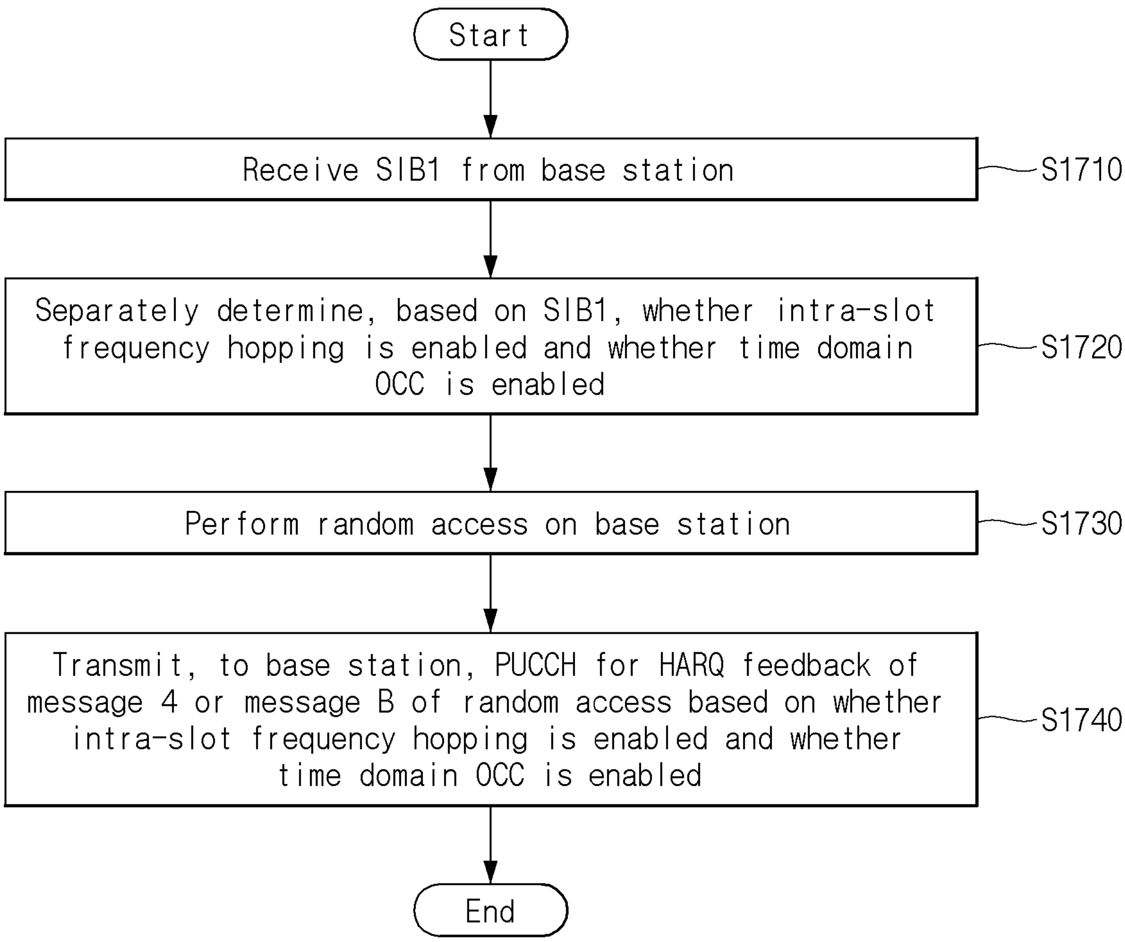
Start
Receive SIB1 from base station
S1710
Separately determine, based on SIB1, whether intra-slot frequency hopping is enabled and whether time domain OCC is enabled
S1720
Perform random access on base station
S1730
Transmit, to base station, PUCCH for HARQ feedback of message 4 or message B of random access based on whether intra-slot frequency hopping is enabled and whether time domain OCC is enabled
S1740
End

【FIG. 18】

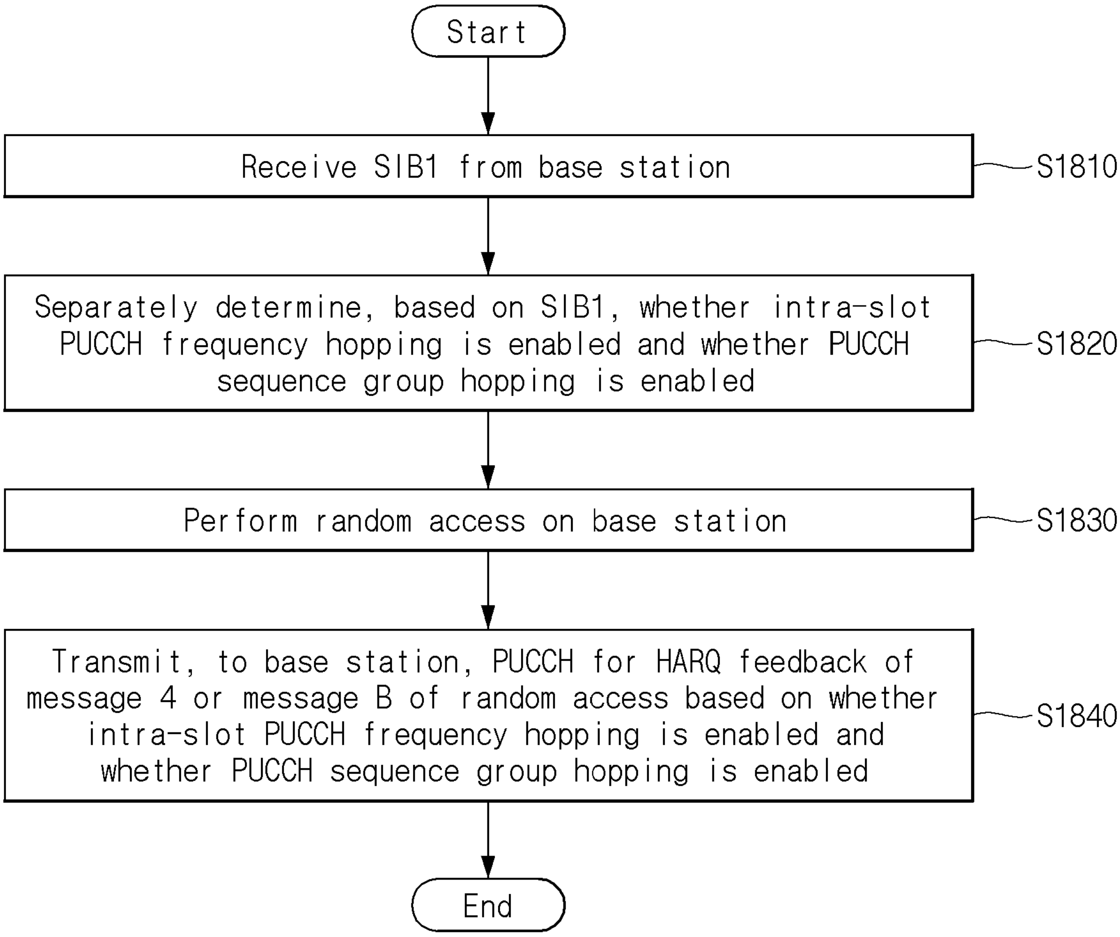
Start
Receive SIB1 from base station
S1810
Separately determine, based on SIB1, whether intra-slot PUCCH frequency hopping is enabled and whether PUCCH sequence group hopping is enabled
S1820
Perform random access on base station
S1830
Transmit, to base station, PUCCH for HARQ feedback of message 4 or message B of random access based on whether intra-slot PUCCH frequency hopping is enabled and whether PUCCH sequence group hopping is enabled
S1840
End

【FIG. 19】

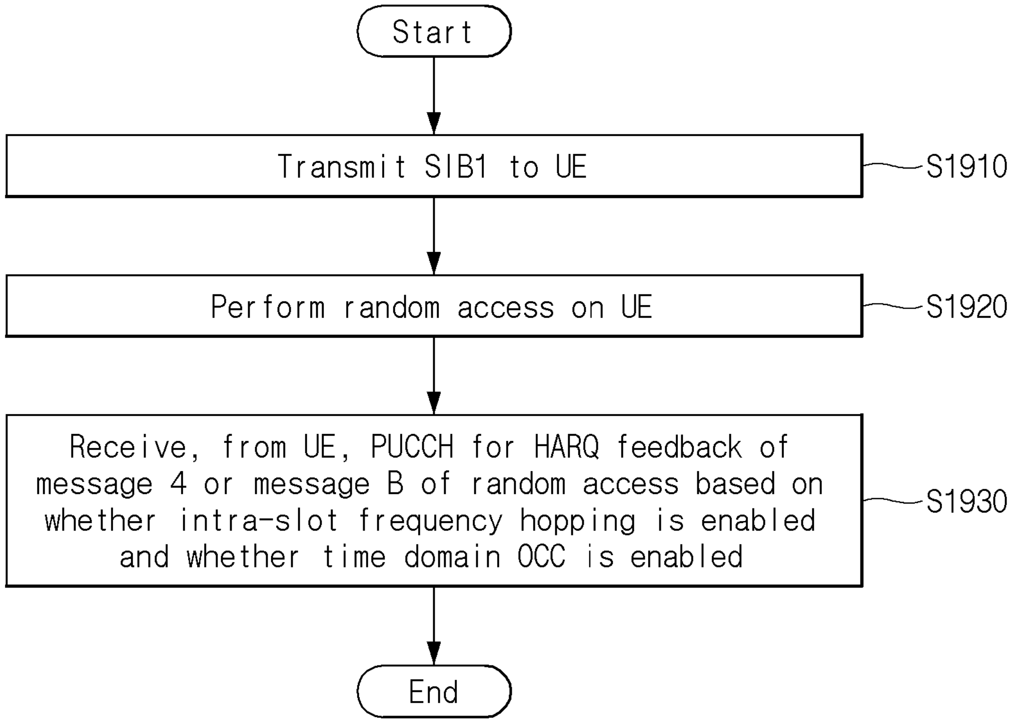
Start
Transmit SIB1 to UE
S1910
Perform random access on UE
S1920
Receive, from UE, PUCCH for HARQ feedback of message 4 or message B of random access based on whether intra-slot frequency hopping is enabled and whether time domain OCC is enabled
S1930
End

【FIG. 20】

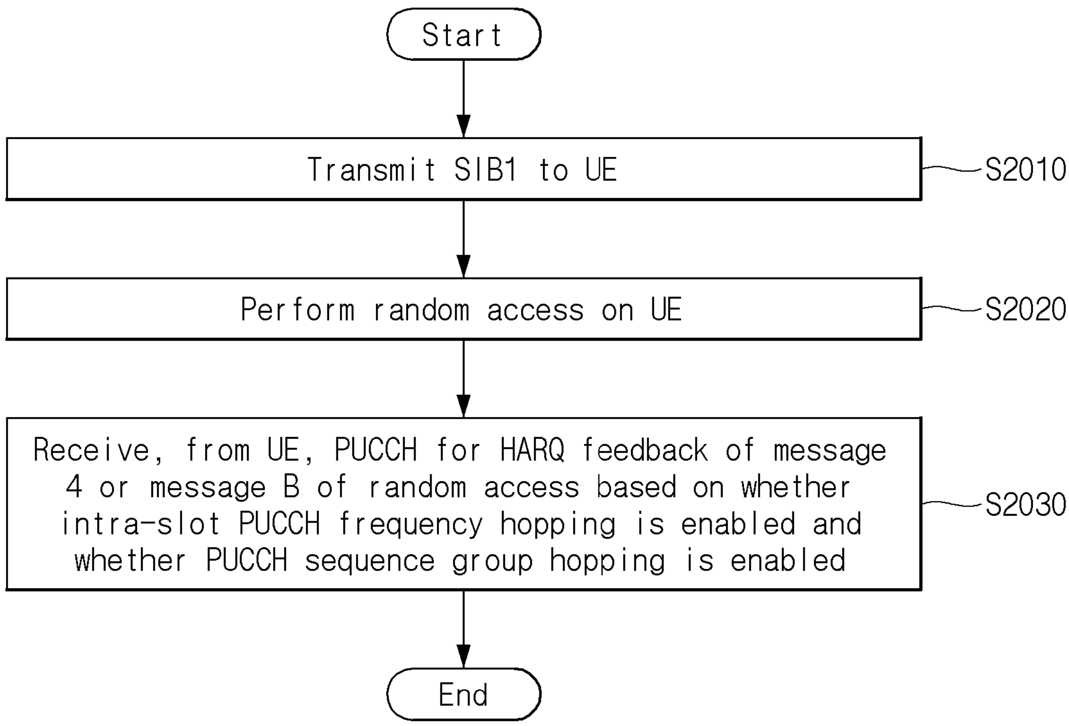
Start
Transmit SIB1 to UE
S2010
Perform random access on UE
S2020
Receive, from UE, PUCCH for HARQ feedback of message 4 or message B of random access based on whether intra-slot PUCCH frequency hopping is enabled and whether PUCCH sequence group hopping is enabled
S2030
End

【FIG. 21】

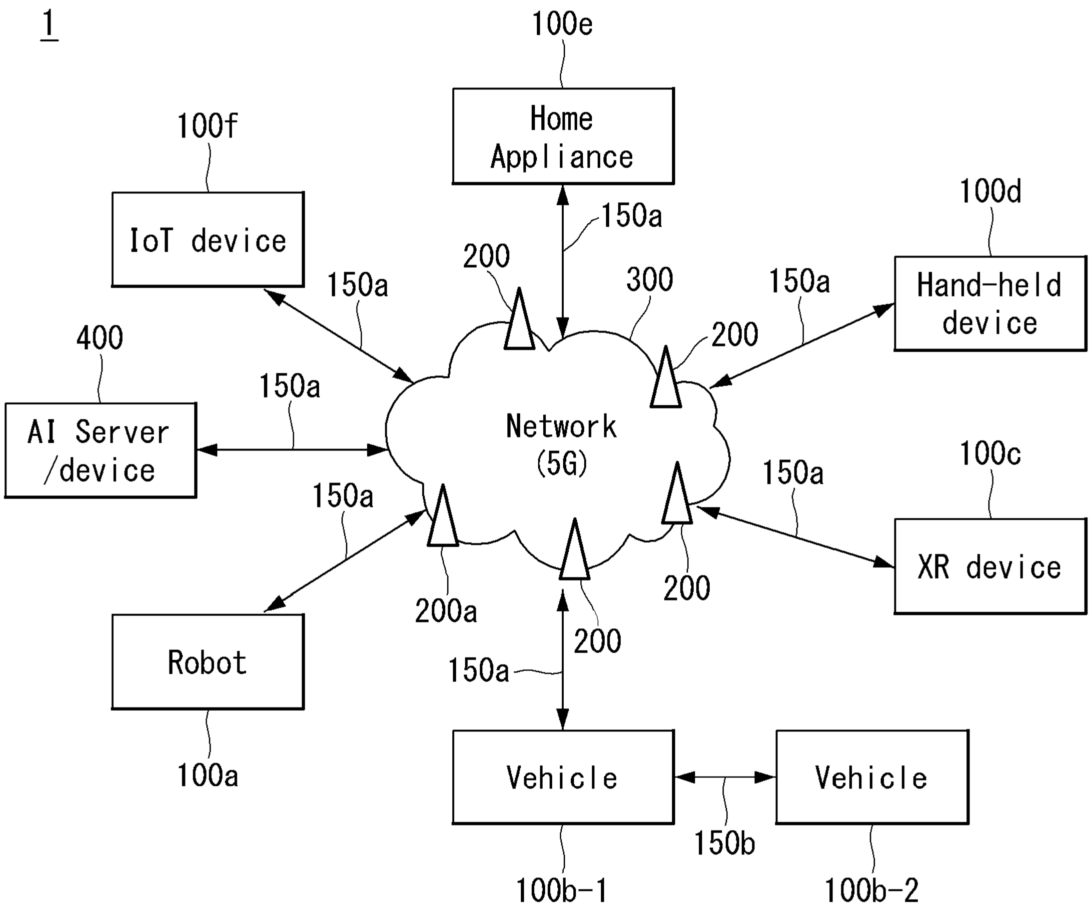
1
100e
Home Appliance
100f
IoT device
150a
200
300
100d
Hand-held device
400
AI Server /device
Network (5G)
100c
XR device
200a
Robot
100a
Vehicle
Vehicle
150b
100b-1
100b-2

【FIG. 22】

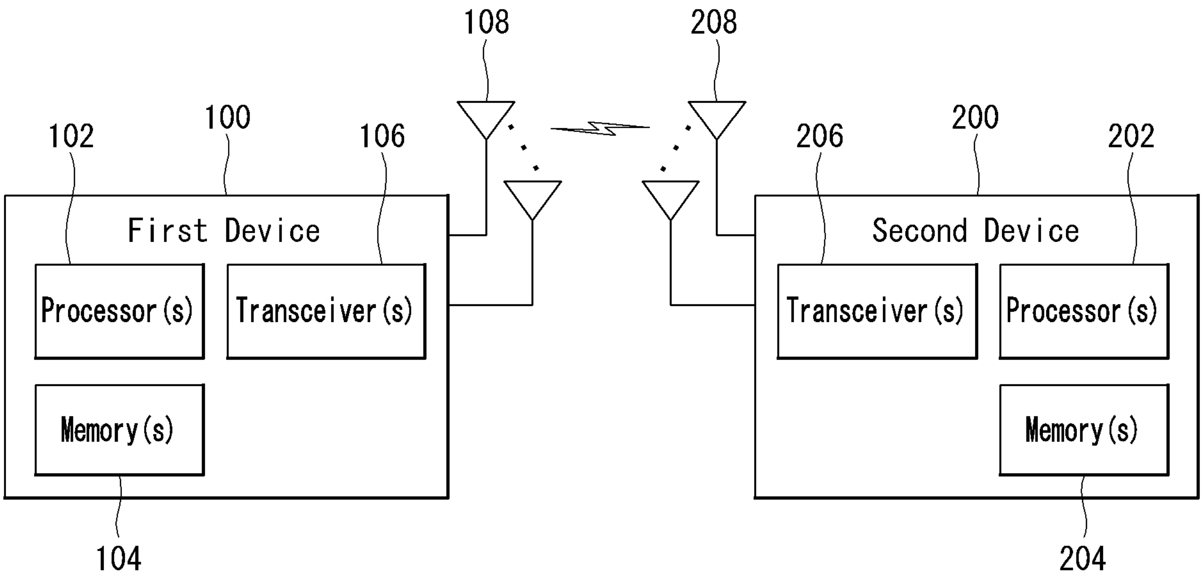
108
208
102
100
106
206
200
202
First Device
Second Device
Processor(s)
Transceiver(s)
Transceiver(s)
Processor(s)
Memory(s)
Memory(s)
104
204

【FIG. 23】

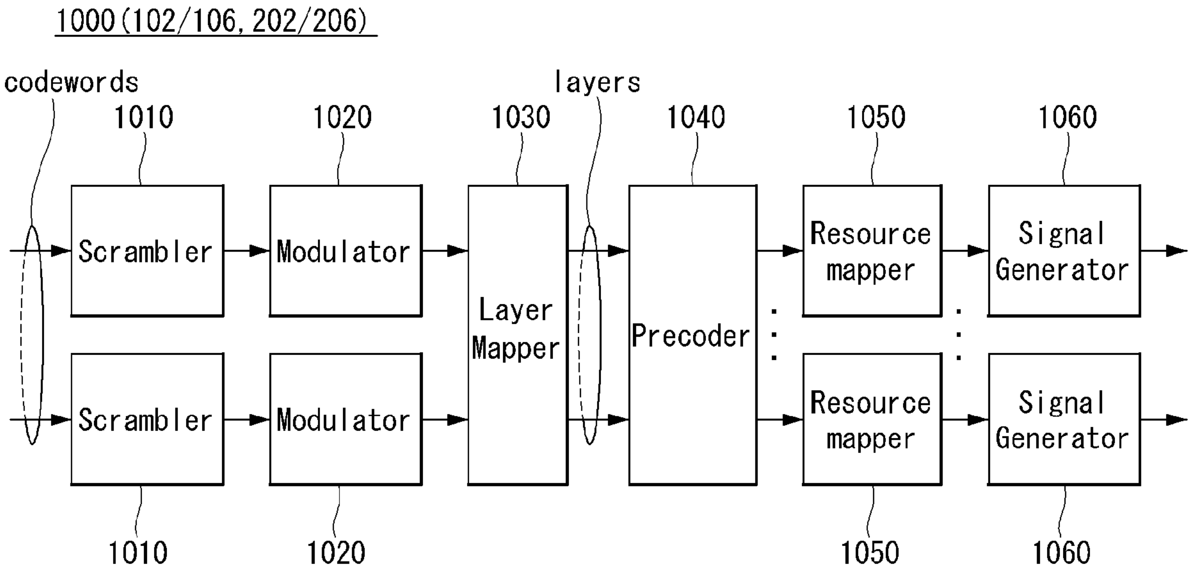
1000(102/106, 202/206)
codewords
layers
1010
1020
1030
1040
1050
1060
Scrambler
Modulator
Layer Mapper
Precoder
Resource mapper
Signal Generator
Scrambler
Modulator
Resource mapper
Signal Generator
1010
1020
1050
1060

【FIG. 24】

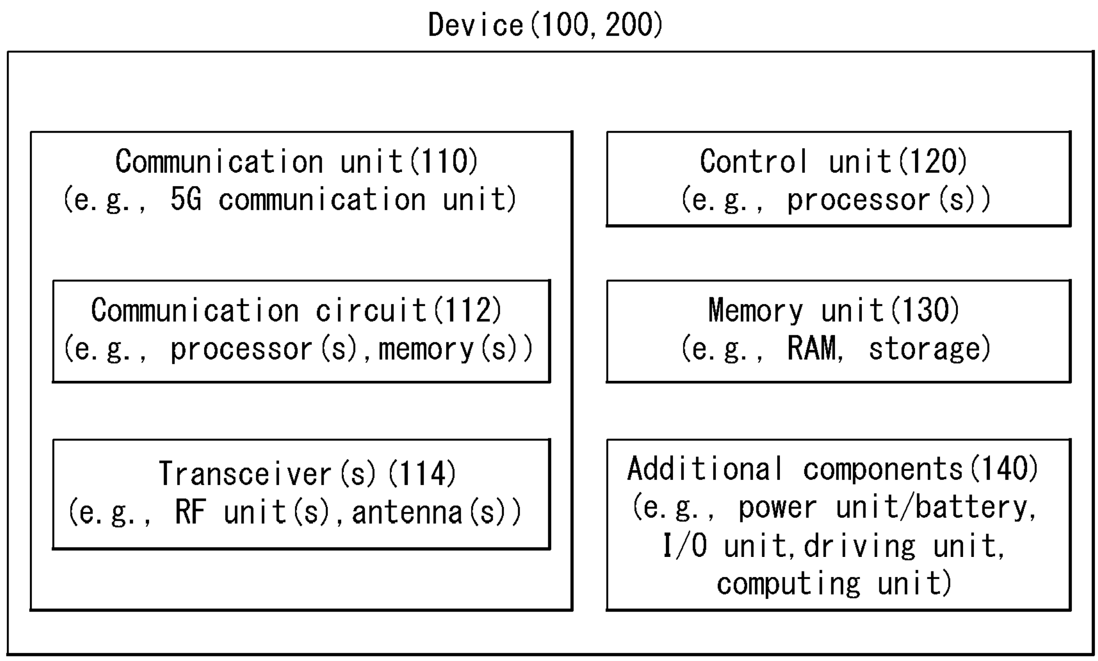
Device(100, 200)
Communication unit(110)
(e.g., 5G communication unit)
Communication circuit(112)
(e.g., processor(s),memory(s))
Transceiver(s)(114)
(e.g., RF unit(s),antenna(s))
Control unit(120)
(e.g., processor(s))
Memory unit(130)
(e.g., RAM, storage)
Additional components(140)
(e.g., power unit/battery,
I/O unit,driving unit,
computing unit)

【FIG. 25】

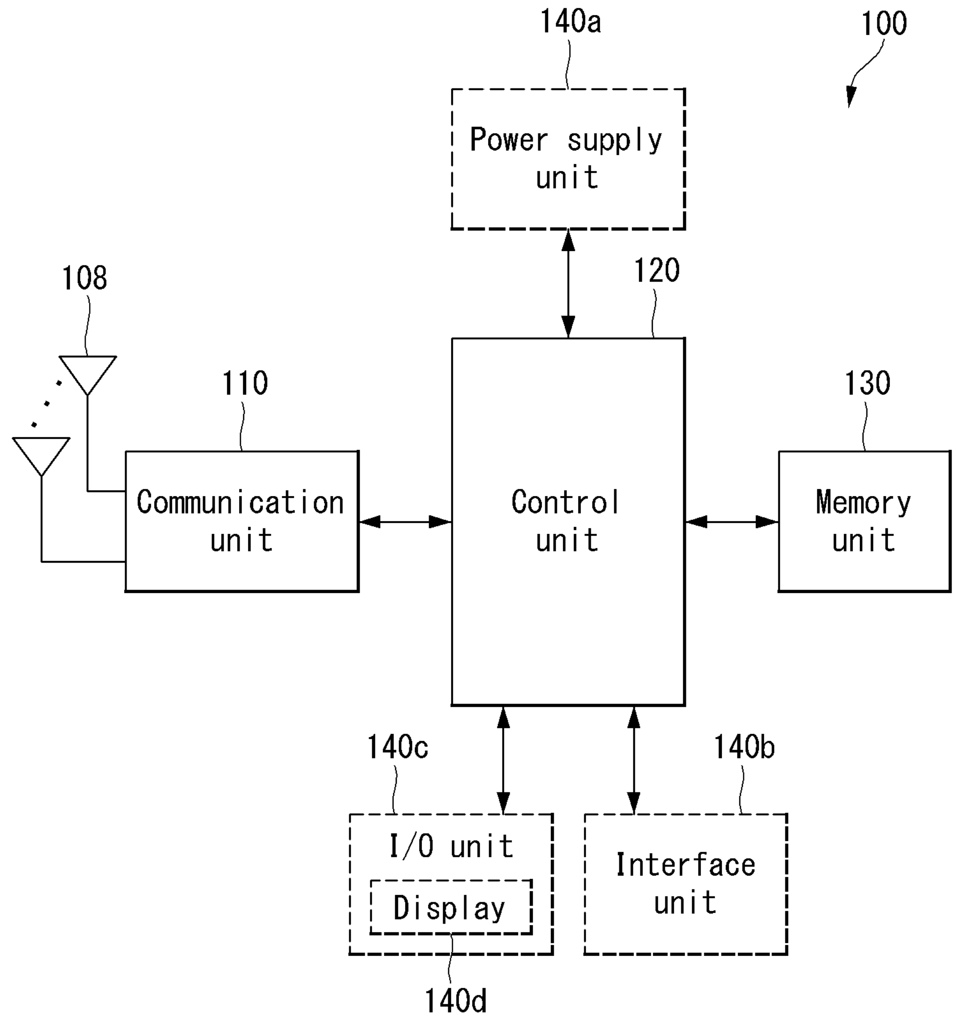
140a
100
Power supply unit
108
120
110
130
Communication unit
Control unit
Memory unit
140c
140b
I/O unit
Display
Interface unit
140d

【FIG. 26】

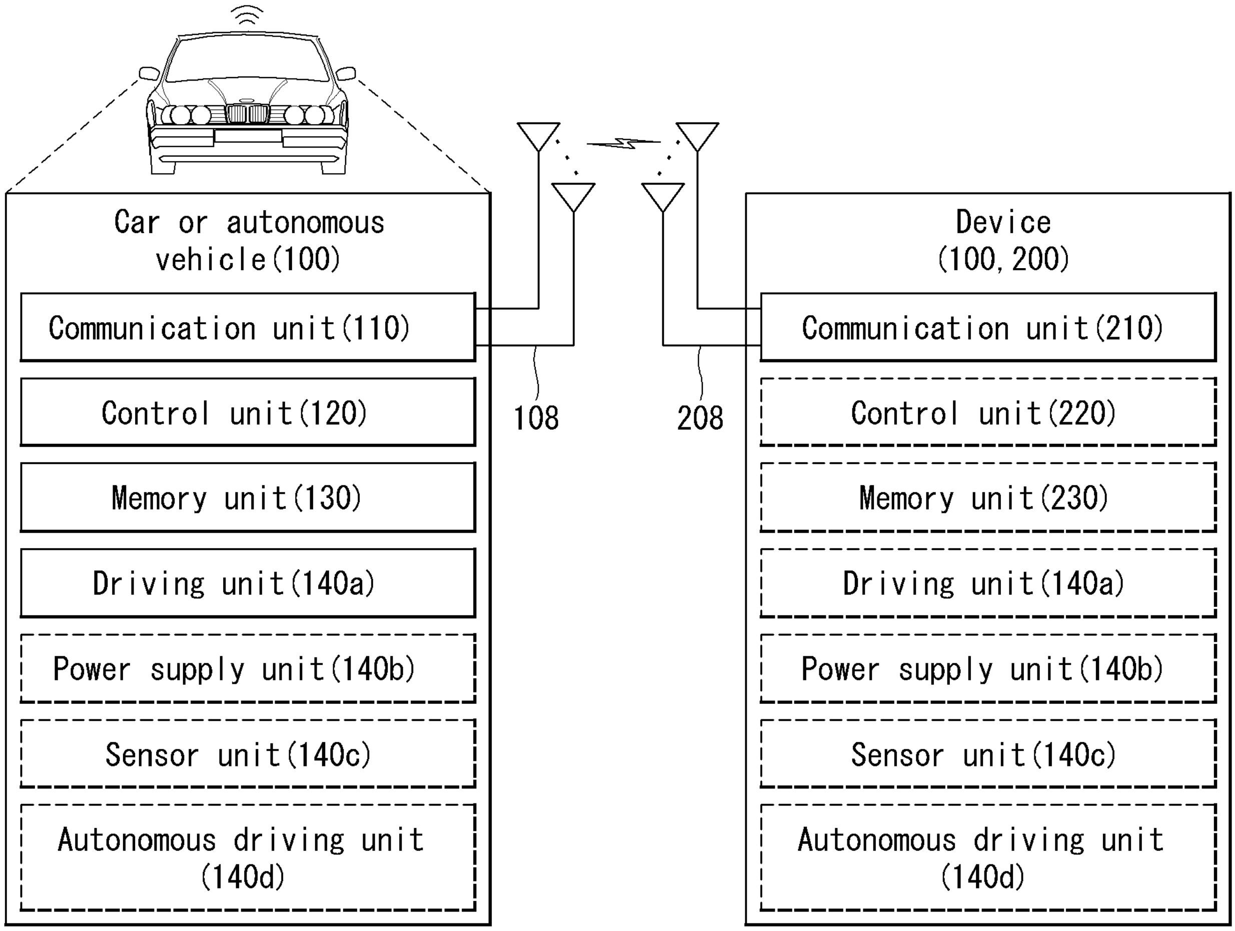
Car or autonomous vehicle(100)
Communication unit(110)
Control unit(120)
Memory unit(130)
Driving unit(140a)
Power supply unit(140b)
Sensor unit(140c)
Autonomous driving unit (140d)
108
208
Device (100, 200)
Communication unit(210)
Control unit(220)
Memory unit(230)
Driving unit(140a)
Power supply unit(140b)
Sensor unit(140c)
Autonomous driving unit (140d)

【FIG. 27】

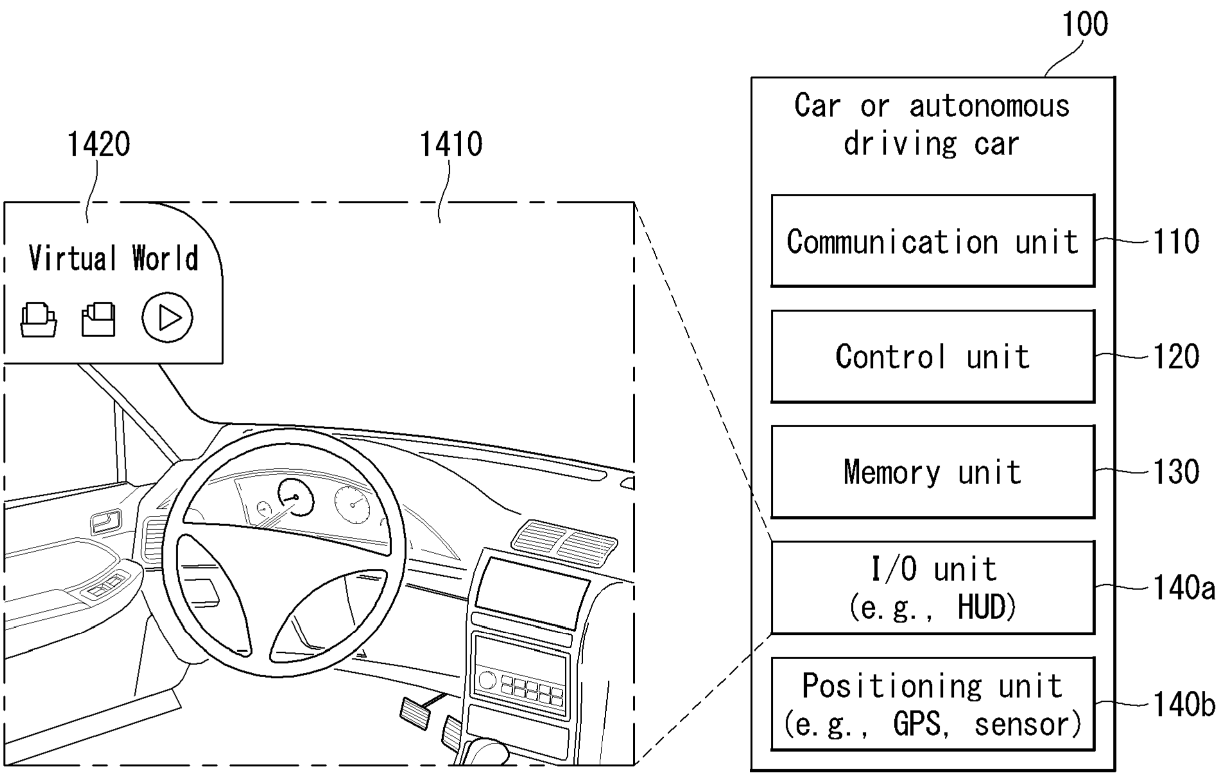
100
1420
1410
Virtual World
Car or autonomous driving car
Communication unit
110
Control unit
120
Memory unit
130
I/O unit (e.g., HUD)
140a
Positioning unit (e.g., GPS, sensor)
140b

【FIG. 28】

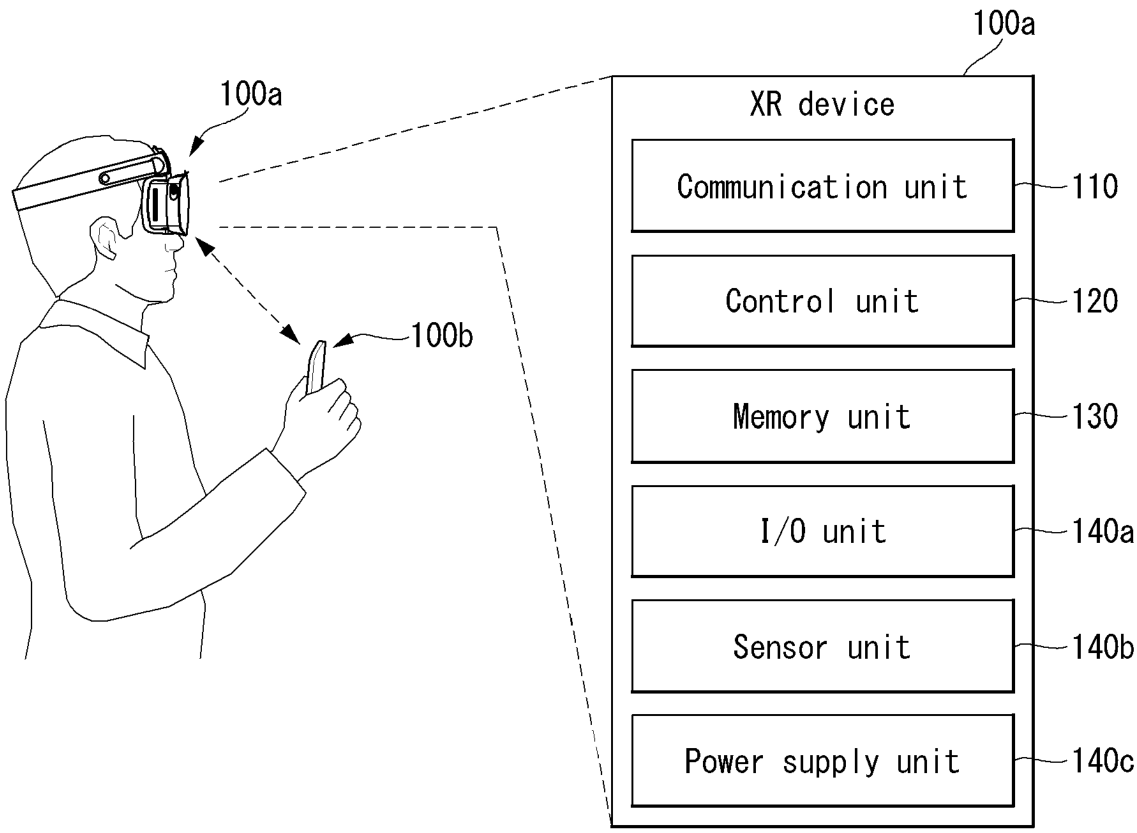
100a
100b
100a
XR device
Communication unit
110
Control unit
120
Memory unit
130
I/O unit
140a
Sensor unit
140b
Power supply unit
140c

【FIG. 29】

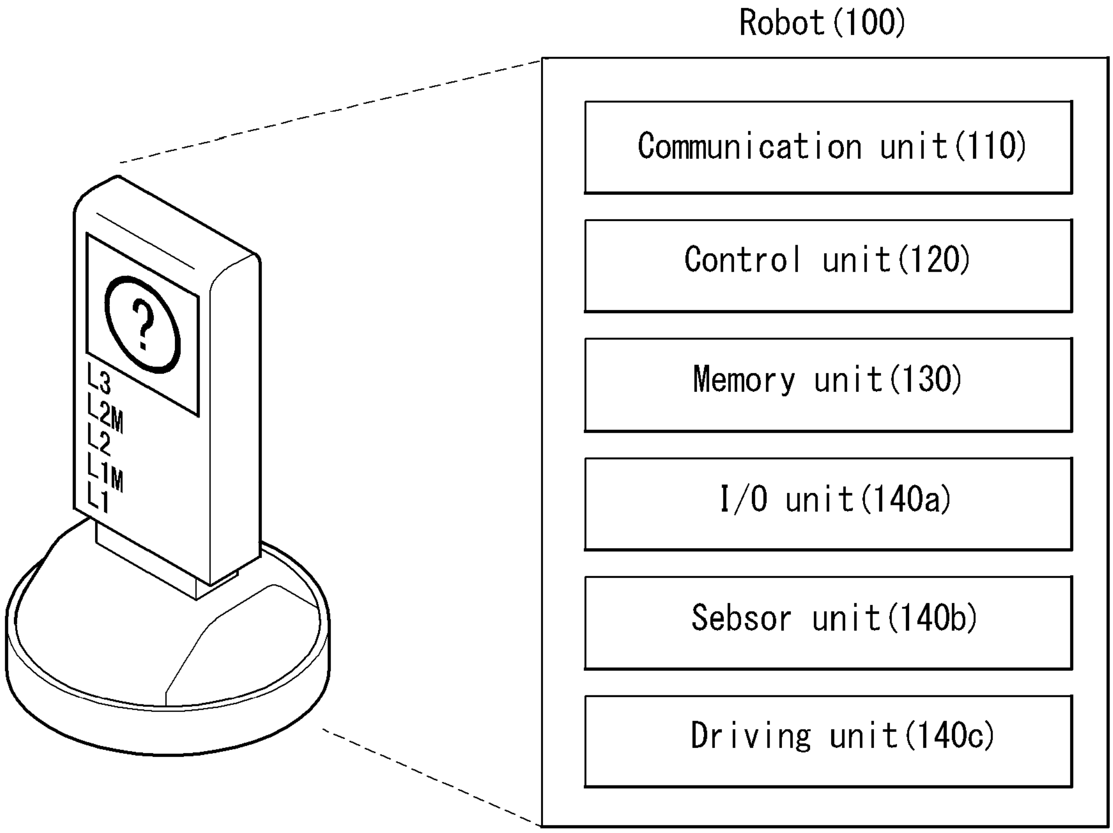
Robot(100)
Communication unit(110)
Control unit(120)
Memory unit(130)
I/O unit(140a)
Sebsor unit(140b)
Driving unit(140c)
L3
L2M
L2
L1M
L1
?

【FIG. 30】

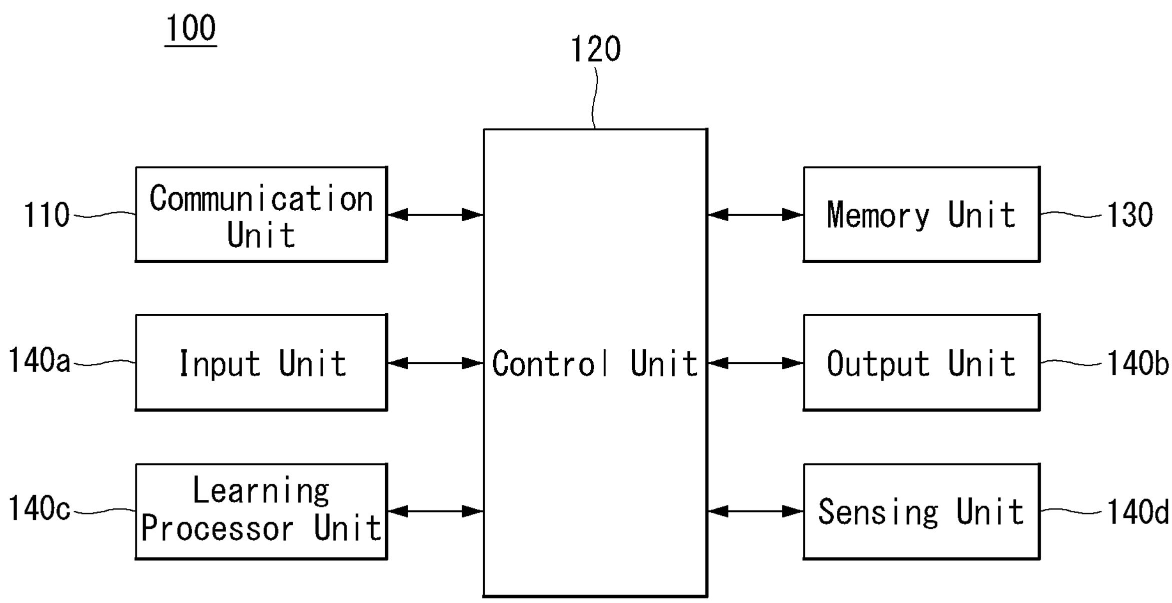
100
120
110
Communication Unit
Control Unit
Memory Unit
130
140a
Input Unit
Output Unit
140b
140c
Learning Processor Unit
Sensing Unit
140d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021258112 A1
- US 2021258112 A1


### Non-patent literature cited in the description


- 3GPP TSG-RAN WG1 Meeting #106bis-e e-Meeting, 11th - 19th October 2021. *R1-211381*, 11 October 2021